# EUROPEAN PATENT APPLICATION

(11) **EP 4 518 386 A1**
(43) Date of publication of application: **05.03.2025**
(21) Application number: 23796220.4
(22) Date of filing: 20.04.2023
(51) Int. Cl.: H04W 8/24, H04W 28/084

(54) **USER EQUIPMENT (UE)**

(30) Priority: 26.04.2022 JP 2022072382
(71) Applicant: Sharp Kabushiki Kaisha, Sakai City, Osaka 590-8522 (JP)
(72) Inventor: KUGE, Yoko, Sakai City Osaka 590-8522 (JP)
(74) Representative: Müller-Boré & Partner Patentanwälte PartG mbB
(86) International application number: PCT/JP2023/015704
(87) International publication number: WO 2023/210478

(57) **Abstract**

A communication mechanism for realizing a function related to management of information about network slices or a non-public network function is provided in 5GS. Provided are, in the 5GS, a method and a communication mechanism for procedures of initial registration of a UE and a periodic or mobility-based registration for implementing management of information about network slice or non-public network function. Furthermore, provided are a method and a communication mechanism after completion of the registration procedure and for a UE configuration update procedure. Furthermore, provided is a method for managing information about network slice in association with each procedure and state transition.

## Description

### Technical Field

The present invention relates to a User Equipment (UE).

### Background Art

The 3rd Generation Partnership Project (3GPP), which undertakes activities for standardizing recent mobile communication systems, has studied System Architecture Evolution (SAE) which is a system architecture for Long Term Evolution (LTE).

In addition, the 3GPP has recently studied next-generation communication technologies and system architectures for 5th Generation (5G) mobile communication systems which are next generation mobile communication systems, and in particular, has standardized a 5G System (5GS) as a system for realizing a 5G mobile communication system (see NPL 1). In the 5GS, technical problems arising from connection of various terminals to a cellular network are extracted and solutions thereto have been standardized.

### Citation List

### Non Patent Literature

NPL 1: 3GPP TS 24.501 V17.6.1 (2022-04); 3rd Generation Partnership Project; Technical Specification Group Core Network and Terminals; Non-Access-Stratum (NAS) protocol for 5G System (5GS); Stage 3 (Release 17)
NPL 2: 3GPP TR 23.700-41 V0.1.0 (2022-02); 3rd Generation Partnership Project; Technical Specification Group Services and System Aspects; Study on enhancement of network slicing; Phase 3 (Release 18)

### Summary of Invention

### Technical Problem

For the 5G System (5GS), a 5G Core Network (5GCN) which is a new core network has been studied for the purpose of providing various services.

Furthermore, for the 5G, a network slice that corresponds to a logical network providing specific network functions and specific network characteristics has been defined for a specific service type or a specific group. For example, the network slice may be a logical network provided for terminals with a low latency function, or may be a logical network provided for sensor terminals used in the Internet of Things (IoT).

Furthermore, the 3GPP has studied Enhancement of Network Slicing (eNS) to study further functions associated with network slices. In the 3GPP, as a study of phase 3 of eNS, the definition of network slices that are valid only in specific areas and/or times is being studied.

However, there is no obvious implementation method for satisfying the above-described demands.

The present invention has been made in light of the above circumstances, and aims to provide a method of implementing functions for NS in the 5GS.

### Solution to Problem

According to an embodiment of the present invention, a User Equipment (UE) includes a transmission and/or reception unit, a storage unit, and a controller. The transmission and/or reception unit transmits information indicating that the UE includes a function of storing condition information associated with Single Network Slice Selection Assistance Information (S-NSSAI), and receives a Network Slice Selection Assistance Information (NSSAI) IE including first S-NSSAI and first condition information, and the controller stores the first S-NSSAI in association with the first condition information, a current Public land mobile network (PLMN) or Stand-alone non-public network (SNPN), and an access type and in addition to or instead of first NSSAI in the storage unit.

### Advantageous Effects of Invention

The present invention allows the PLMN and the SNPN in the 5GS to support a function of a network slice that is allowed or not allowed under a particular condition.

### Brief Description of Drawings

FIG. 1 is a diagram illustrating an overview of a mobile communication system (EPS/5GS).
FIG. 2 is a diagram illustrating a detailed configuration of the mobile communication system (EPS/5GS).
FIG. 3 is a diagram illustrating an apparatus configuration of a UE.
FIG. 4 is a diagram illustrating a configuration of an access network apparatus (gNB) in the 5GS.
FIG. 5 is a diagram illustrating a configuration of a core network apparatus (AMF/SMF/UPF) in the 5GS.
FIG. 6 is a diagram illustrating a registration procedure.
FIG. 7 is a diagram illustrating a UE configuration modification/update procedure.

### Description of Embodiments

Preferred embodiments for carrying out the present invention will be described below with reference to the drawings. Note that an embodiment of a mobile communication system to which the present invention is applied will be described as an example in the present embodiment.

### 1. Overview of System

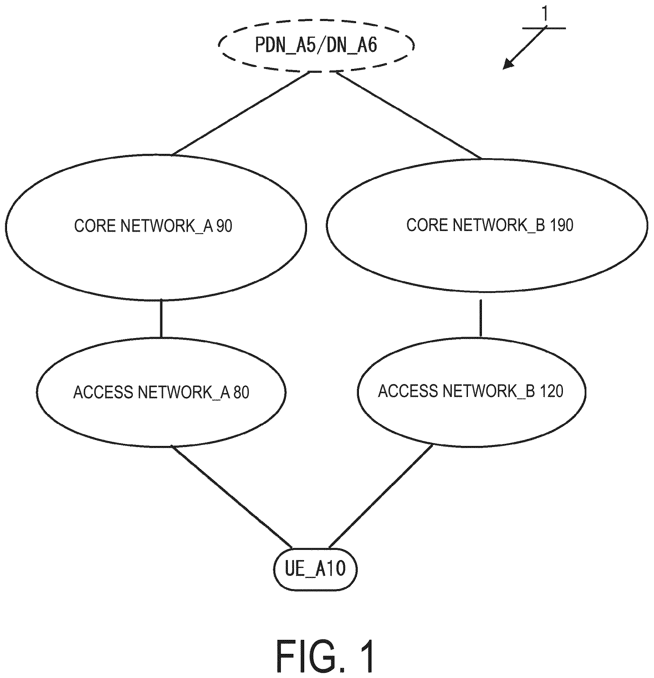

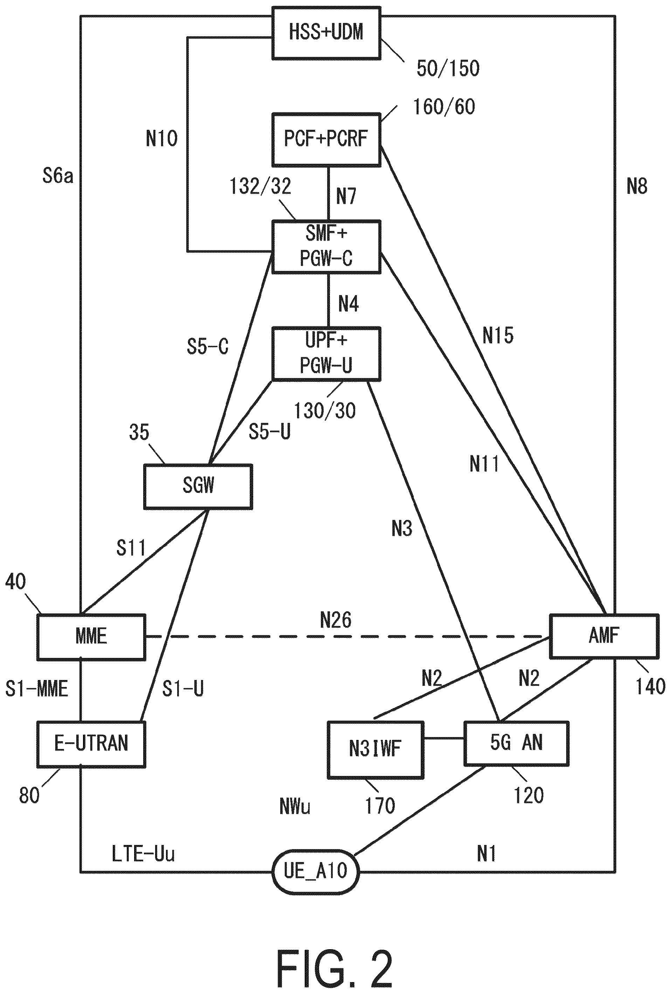

First, FIG. 1 is a diagram illustrating an overview of a mobile communication system 1 used in each embodiment, and FIG. 2 is a diagram illustrating a detailed configuration of the mobile communication system 1.

FIG. 1 illustrates the mobile communication system 1 including UE_A 10, an access network_A 80, a core network_A 90, a Packet Data Network (PDN)_A 5, an access network_B 120, a core network_B 190, and a Data Network (DN)_A 6.

In the following description, the reference numerals of these apparatuses and functions may be omitted, as in UE, an access network_A, a core network_A, a PDN, an access network_B, a core network_B, a DN, and the like.

In addition, FIG. 2 illustrates apparatuses and functions such as the UE_A 10, an E-UTRAN 80, an MME 40, an SGW 35, a PGW-U 30, a PGW-C 32, a PCRF 60, an HSS 50, a 5G AN 120, an AMF 140, a UPF 130, an SMF 132, a PCF 160, a UDM 150, and an N3IWF 170, and interfaces for connecting these apparatuses and functions to each other.

In the following description, the reference numerals of these apparatuses and functions may be omitted as in UE, an E-UTRAN, an MME, an SGW, a PGW-U, a PGW-C, a PCRF, an HSS, a 5G AN, an AMF, a UPF, an SMF, a PCF, a UDM, an N3IWF, and the like.

Note that an Evolved Packet System (EPS) that is a 4G system includes an access network_A and a core network_A and may further include UE and/or a PDN. In addition, a 5G System (5GS) that is a 5G system includes UE, an access network_B, and a core network_B and may further include a DN.

The UE is an apparatus that can be connected to a network service over 3GPP access (also referred to as a 3GPP access network or a 3GPP AN) and/or non-3GPP access (also referred to as a non-3GPP access network or a non-3GPP AN). The UE may be a terminal apparatus capable of performing radio communication, such as a mobile phone or a smartphone, and may be a terminal apparatus that can be connected to both the EPS and the 5GS. The UE may include a Universal Integrated Circuit Card (UICC) and an Embedded UICC (eUICC). Note that the UE may be referred to as user equipment or a terminal apparatus.

In addition, the access network_A corresponds to an Evolved Universal Terrestrial Radio Access Network (E-UTRAN) and/or a wireless LAN access network. In the E-UTRAN, one or multiple evolved Node B (eNBs) 45 are deployed. Note that, in the following description, the reference numeral of the eNB 45 may be omitted as in eNB. In addition, in a case that there are multiple eNBs, the eNBs are connected to each other via, for example, an X2 interface. In addition, one or multiple access points are deployed on the wireless LAN access network.

In addition, the access network_B corresponds to a 5G access network (5G AN). The 5G AN includes an NG Radio Access Network (NG-RAN) and/or a non-3GPP access network. One or multiple NR NodeBs (gNBs) 122 are deployed on the NG-RAN. Note that, in the following description, the reference numeral of the gNB 122 may be omitted, as in eNB. The gNB is a node that provides a New Radio (NR) user plane and control plane to the UE, and is connected to a 5GCN via an NG interface (including an N2 interface or an N3 interface). In other words, the gNB is a base station apparatus newly designed for the 5GS and has functions different from those of the base station apparatus (eNB) used in the EPS that is a 4G system. In addition, in a case that there are multiple gNBs, the gNBs are connected to each other via, for example, an Xn interface.

In addition, a non-3GPP access network may be an untrusted non-3GPP access network or a trusted non-3GPP access network. Here, the untrusted non-3GPP access network may be a non-3GPP access network that does not manage security on the access network, for example, a public wireless LAN. On the other hand, the trusted non-3GPP access network may be an access network defined by the 3GPP and may include a trusted non-3GPP access point (TNAP) and a trusted non-3GPP Gateway function (TNGF).

The NG-RAN refers to a radio access network connected to the 5GCN, and may use NR and/or E-UTRA. In other words, the NG-RAN may be an E-UTRAN.

In addition, in the following description, the E-UTRAN and the NG-RAN may be referred to as 3GPP access. In addition, the wireless LAN access network and the non-3GPP AN may be referred to as non-3GPP access. In addition, nodes deployed on the access network_B may also be collectively referred to as NG-RAN nodes.

In addition, in the following description, the access network_A, and/or the access network_B, and/or an apparatus included in the access network_A, and/or an apparatus included in the access network_B may be referred to as an access network or an access network apparatus.

The core network_A corresponds to an Evolved Packet Core (EPC). In the EPC, for example, a Mobility Management Entity (MME), a Serving Gateway (SGW), a Packet Data Network Gateway (PGW)-U, a PGW-C, a Policy and Charging Rules Function (PCRF), a Home Subscriber Server (HSS), and the like are deployed.

In addition, the core network_B corresponds to a 5G Core Network (5GCN). An Access and Mobility Management Function (AMF), a User Plane Function (UPF), a Session Management Function (SMF), a Policy Control Function (PCF), a Unified Data Management (UDM), and the like are deployed on the 5GCN. Here, the 5GCN may be referred to as a 5GC.

In addition, in the following description, the core network_A, and/or the core network_B, an apparatus included in the core network_A, and/or an apparatus included in the core network_B may be referred to as a core network, a core network apparatus, or an intra-core network apparatus.

The core network (the core network_A and/or the core network_B) may refer to an IP mobile communication network operated by a mobile communication operator (Mobile Network Operator (MNO)) connecting the access network (the access network_A and/or the access network_B) and the PDN and/or the DN, a core network for a mobile communication operator that operates and manages the mobile communication system 1, or a core network for a virtual mobile communication operator and a virtual mobile communication service provider such as a Mobile Virtual Network Operator (MVNO) and a Mobile Virtual Network Enabler (MVNE).

The core network (the core network_A and/or the core network_B) and the access network (access network_A and/or the access network_B) may differ for each mobile communication operator.

In addition, although FIG. 1 illustrates a case that the PDN and the DN are the same, the PDN and the DN may be different. The PDN may be a Data Network (DN) that provides communication services to the UE. Note that the DN may be configured as a packet data service network or may be configured for each service. In addition, the PDN may include a connected communication terminal. Thus, "to be connected to the PDN" may mean "to be connected to a communication terminal and a server apparatus deployed in the PDN". In addition, "to transmit and/or receive user data to and/or from the PDN" may mean "to transmit and/or receive user data to and/or from a communication terminal and a server apparatus deployed in the PDN". Note that the PDN may be referred to as a DN, and the DN may be referred to as a PDN.

In addition, in the following, at least some of the access network_A, the core network_A, the PDN, the access network_B, the core network_B, and the DN, and/or one or multiple apparatuses included in these may be referred to as a network or a network apparatus. In other words, the expression that "the network and/or the network apparatus transmits and/or receives a message and/or performs a procedure" means that "at least some of the access network_A, the core network_A, the PDN, the access network_B, the core network_B, and the DN, and/or one or multiple apparatuses included in these transmit and/or receive a message and/or perform a procedure".

In addition, the UE can be connected to the access network. In addition, the UE can be connected to the core network over the access network. Furthermore, the UE can be connected to the PDN or the DN over the access network and the core network. In other words, the UE can transmit and/or receive (communicate) user data to and/or from the PDN or the DN. In a case that user data is transmitted and/or received, not only Internet Protocol (IP) communication but also non-IP communication may be used.

Here, IP communication refers to data communication using an IP, and data is transmitted and/or received using IP packets. Each IP packet includes an IP header and a payload part. In the payload part, data transmitted and/or received by the apparatuses and functions included in the EPS and the apparatuses and functions included in the 5GS may be included. In addition, non-IP communication refers to data communication performed using no IP, in which data is transmitted and/or received in a form different from the structure of an IP packet. For example, non-IP communication may be data communication implemented through transmission and/or reception of application data to which an IP header is not added, or user data transmitted and/or received by the UE may be transmitted and/or received with another header such as a MAC header and an Ethernet (trade name) frame header added.

In addition, apparatuses which are not illustrated in FIG. 2 may be included in the access network_A, the core network_A, the access network_B, the core network_B, the PDN_A, and the DN_A. For example, the core network_A and/or the core network_B and/or the PDN_A and/or the DN_A may include an Authentication Server Function (AUSF) and an Authentication, authorization, and accounting (AAA) server (AAA-S). The AAA server may be deployed outside the core network.

Here, the AUSF is a core network apparatus provided with an authentication function for 3GPP access and non-3GPP access. Specifically, the AUSF is a network function unit that receives an authentication request for 3GPP access and/or non-3GPP access from the UE and performs an authentication procedure.

The AAA server is an apparatus that is connected directly to the AUSF or indirectly to the AUSF via another network apparatus and has authentication, authorization, and billing functions. The AAA server may be a network apparatus within the core network. Note that the AAA server may not be included in the core network_A and/or the core network_B and may be included in a PLMN and/or an SNPN. In other words, the AAA server may be a core network apparatus or may be an apparatus outside the core network. For example, the AAA server may be a server apparatus within a PLMN and/or an SNPN managed by a third party.

In the present document, the term "NW" may mean a core network, may mean an access network, or may mean both.

Note that, although each of the apparatuses and functions is illustrated one by one for simplicity in FIG. 2, multiple similar apparatuses and functions may be included in the mobile communication system 1. Specifically, multiple apparatuses and functions such as multiple pieces of UE_A 10, E-UTRANs 80, MMEs 40, SGWs 35, PGW-Us 30, PGW-Cs 32, PCRFs 60, HSSs 50, 5G ANs 120, AMFs 140, UPFs 130, SMFs 132, PCFs 160, and/or UDMs 150 may be included in the mobile communication system 1.

### 2. Configuration of Each Apparatus

Next, a configuration of each apparatus (the UE, and/or the access network apparatus, and/or the core network apparatus) used in each embodiment will be described with reference to the drawings. Note that each apparatus may be configured as physical hardware, may be configured as logical (virtual) hardware configured in general-purpose hardware, or may be configured as software. In addition, at least a part (including all) of the functions of each apparatus may be configured as physical hardware, logical hardware, or software.

Note that each storage unit (a storage unit_A 340, a storage unit_A 440, a storage unit_B 540, a storage unit_A 640, and a storage unit_B 740) in each apparatus and function to be described later includes, for example, a semiconductor memory, a Solid State Drive (SSD), a Hard Disk Drive (HDD), or the like. In addition, each storage unit can store not only information originally configured at the time of being shipped, but also various pieces of information transmitted and/or received to and/or from apparatuses and functions (for example, the UE, and/or the access network apparatus, and/or the core network apparatus, and/or the PDN, and/or the DN) other than the apparatus and functions of each storage unit. In addition, each storage unit can store identification information, control information, flags, parameters, and the like included in a control message transmitted and/or received in various communication procedures to be described later. In addition, each storage unit may store these pieces of information for each UE. In addition, in a case that each storage unit performs interworking between the 5GS and the EPS, each storage unit can store a control message and user data transmitted and/or received to and/or from the apparatuses and functions included in the 5GS and/or the EPS. In this case, not only data transmitted and/or received over the N26 interface but also data transmitted and/or received without using the N26 interface can be stored.

### 2.1. Apparatus Configuration of UE

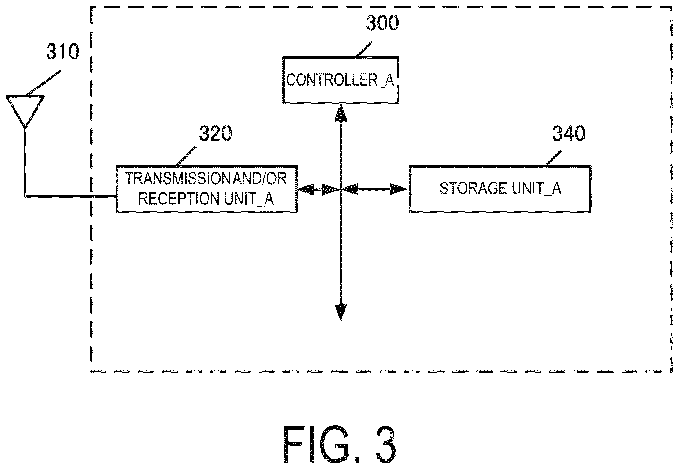

First, an apparatus configuration example of the User Equipment (UE) will be described with reference to FIG. 3. The UE includes a controller_A 300, an antenna 310, a transmission and/or reception unit_A 320, and a storage unit_A 340. The controller_A 300, the transmission and/or reception unit_A 320, and the storage unit_A 340 are connected via a bus. The transmission and/or reception unit_A 320 is connected to the antenna 310.

The controller_A 300 is a function unit that controls overall operations and functions of the UE. The controller_A 300 reads and performs various programs stored in the storage unit_A 340 as necessary, and thereby implements various types of processing in the UE.

The transmission and/or reception unit_A 320 is a function unit that performs radio communication with a base station apparatus (the eNB or the gNB) within the access network via the antenna. In other words, with the use of the transmission and/or reception unit_A 320, the UE can transmit and/or receive user data and/or control information to and/or from the access network apparatus, and/or the core network apparatus, and/or the PDN, and/or the DN.

To provide detailed description with reference to FIG. 2, by using the transmission and/or reception unit_A 320, the UE can communicate with the base station apparatus (eNB) within the E-UTRAN over an LTE-Uu interface. In addition, the UE can communicate with the base station apparatus (gNB) within the 5G AN with the use of the transmission and/or reception unit_A 320. In addition, the UE can transmit and/or receive a Non-Access-Stratum (NAS) message to and/or from the AMF over an N1 interface with the use of the transmission and/or reception unit_A 320. However, the N1 interface is a logical interface, and thus communication between the UE and the AMF is actually performed over the 5G AN.

The storage unit_A 340 is a function unit that stores programs, user data, control information, and the like necessary for each operation of the UE.

### 2.2. Apparatus Configuration of gNB

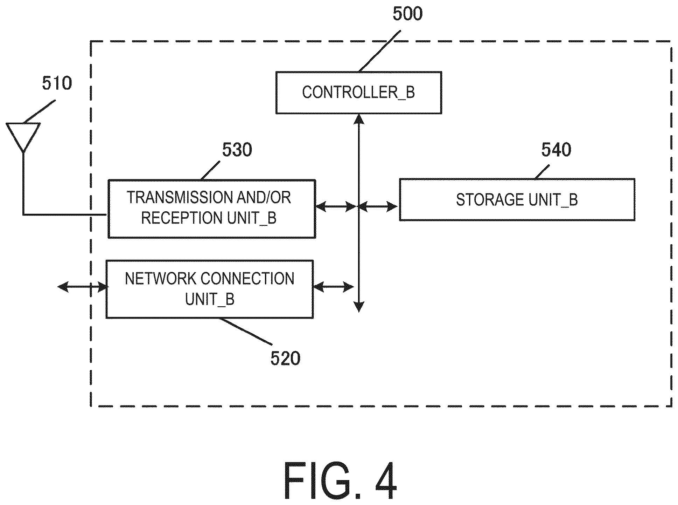

Next, an apparatus configuration example of the gNB will be described with reference to FIG. 4. The gNB includes a controller_B 500, an antenna 510, a network connection unit_B 520, a transmission and/or reception unit_B 530, and a storage unit_B 540. The controller_B 500, the network connection unit_B 520, the transmission and/or reception unit_B 530, and the storage unit_B 540 are connected via a bus. The transmission and/or reception unit_B 530 is connected to the antenna 510.

The controller_B 500 is a function unit that controls overall operations and functions of the gNB. The controller_B 500 reads and performs various programs stored in the storage unit_B 540 as necessary, and thereby implements various types of processing in the gNB.

The network connection unit_B 520 is a function unit for the gNB to communicate with the AMF and/or the UPF. In other words, with the use of the network connection unit_B 520, the gNB can transmit and/or receive user data and/or control information to and/or from the AMF and/or the UPF.

The transmission and/or reception unit_B 530 is a function unit that performs radio communication with the UE via the antenna 510. In other words, with the use of the transmission and/or reception unit_B 530, the gNB can transmit and/or receive user data and/or control information to and/or from the UE.

To provide detailed description with reference to FIG. 2, by using the network connection unit_B 520, the gNB within the 5G AN can communicate with the AMF over the N2 interface and can communicate with the UPF over the N3 interface. In addition, the gNB can communicate with the UE with the use of the transmission and/or reception unit_B 530.

The storage unit_B 540 is a function unit that stores programs, user data, control information, and the like necessary for each operation of the gNB.

### 2.3. Apparatus Configuration of AMF

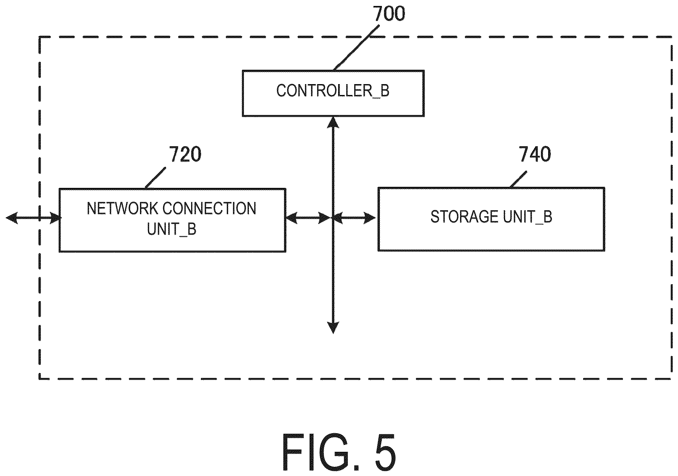

Next, an apparatus configuration example of the AMF will be described with reference to FIG. 5. The AMF includes a controller_B 700, a network connection unit_B 720, and a storage unit_B 740. The controller_B 700, the network connection unit_B 720, and the storage unit_B 740 are connected via a bus. The AMF may be a node that handles a control plane.

The controller_B 700 is a function unit that controls overall operations and functions of the AMF. The controller_B 700 reads and performs various programs stored in the storage unit_B 740 as necessary, and thereby implements various types of processing in the AMF.

The network connection unit_B 720 is a function unit for the AMF to connect to the base station apparatus (gNB) within the 5G AN, and/or the SMF, and/or the PCF, and/or the UDM, and/or an SCEF. In other words, with the use of the network connection unit_B 720, the AMF can transmit and/or receive user data and/or control information to and/or from the base station apparatus (gNB) in the 5G AN, and/or the SMF, and/or the PCF, and/or the UDM, and/or the SCEF.

To provide detailed description with reference to FIG. 2, by using a network connection unit_A 620, the AMF within the 5GCN can communicate with the gNB over the N2 interface, can communicate with the UDM over an N8 interface, can communicate with the SMF over an N11 interface, and can communicate with the PCF over an N15 interface. In addition, the AMF can transmit and/or receive a NAS message to and/or from the UE over the N1 interface with the use of the network connection unit_A 620. However, the N1 interface is a logical interface, and thus communication between the UE and the AMF is actually performed over the 5G AN. In addition, in a case that the AMF supports an N26 interface, the AMF can communicate with the MME over the N26 interface with the use of the network connection unit_A 620.

The storage unit_B 740 is a function unit that stores programs, user data, control information, and the like necessary for each operation of the AMF.

Note that the AMF has a function of exchanging a control message with the RAN using the N2 interface, a function of exchanging a NAS message with the UE using the N1 interface, a function of performing encryption and integrity protection of a NAS message, a Registration management (RM) function, a Connection management (CM) function, a Reachability management function, a Mobility management function for the UE or the like, a function of transferring a Session Management (SM) message between the UE and the SMF, an Access Authentication (Access Authorization) function, a security anchor function (Security Anchor Functionality (SEA)), a Security Context Management (SCM) function, a function of supporting the N2 interface for a Non-3GPP Interworking Function (N3IWF), a function of supporting transmission and/or reception of a NAS signal to an/or from the UE via the N3IWF, a function of authenticating the UE connected via the N3IWF, and the like.

In addition, in registration management, an RM state for each UE is managed. The RM state may be synchronized between the UE and the AMF. The RM state includes a deregistered state (RM-DEREGISTERED state) and a registered state (RM-REGISTERED state). In the RM-DEREGISTERED state, because the UE is not registered with the network, the AMF is in a state of being unable to reach the UE, because a UE context in the AMF does not have location information and routing information that are valid for the UE. In addition, in the RM-REGISTERED state, because the UE is registered in the network, the UE can receive a service that requires registration with the network. Note that the RM state may be referred to as a 5GMM state. In this case, the RM-DEREGISTERED state may be referred to as a 5GMM-DEREGISTERED state, and the RM-REGISTERED state may be referred to as a 5GMM-REGISTERED state.

In other words, 5GMM-REGISTERED may be a state in which each apparatus establishes a 5GMM context, or may be a state in which each apparatus establishes a PDU session context. Note that, in a case that each apparatus is in 5GMM-REGISTERED, the UE_A 10 may start transmission and/or reception of user data and a control message, or may respond to paging. Furthermore, note that, in a case that each apparatus is in 5GMM-REGISTERED, the UE_A 10 may perform a registration procedure other than a registration procedure for initial registration, and/or a service request procedure.

In addition, 5GMM-DEREGISTERED may be a state in which each apparatus does not establish the 5GMM context, may be a state in which the location information of the UE_A 10 is not known to the network, or may be a state in which the network is unable to reach the UE_A 10. Note that, in a case that each apparatus is in 5GMM-DEREGISTERED, the UE_A 10 may initiate the registration procedure, or may perform the registration procedure to thereby establish the 5GMM context.

In addition, in connection management, a CM state for each UE is managed. The CM state may be synchronized between the UE and the AMF. The CM state includes a non-connected state (CM-IDLE state) and a connected state (CM-CONNECTED state). In the CM-IDLE state, the UE is in the RM-REGISTERED state, but does not have NAS signaling connection established with the AMF via the N1 interface. In addition, in the CM-IDLE state, the UE has neither connection of the N2 interface (N2 connection) nor connection of the N3 interface (N3 connection). On the other hand, in the CM-CONNECTED state, the UE has NAS signaling connection established with the AMF via the N1 interface. In addition, in the CM-CONNECTED state, the UE may have connection of the N2 interface (N2 connection) and/or connection of the N3 interface (N3 connection).

Furthermore, in connection management, management may be performed separately for the CM state in 3GPP access and the CM state in non-3GPP access. In this case, the CM state in 3GPP access may include a non-connected state in 3GPP access (CM-IDLE state over 3GPP access) and a connected state in 3GPP access (CM-CONNECTED state over 3GPP access). Furthermore, the CM state in non-3GPP access may include a non-connected state in non-3GPP access (CM-IDLE state over non-3GPP access) and a connected state in non-3GPP access (CM-CONNECTED state over non-3GPP access). Note that the non-connected state may be referred to as an idle mode, and a connected state mode may be referred to as a connected mode.

Note that the CM state may be referred to as a 5GMM mode. In this case, the non-connected state may be referred to as a 5GMM non-connected mode (5GMM-IDLE mode), and the connected state may be referred to as a 5GMM connected mode (5GMM-CONNECTED mode). In addition, the non-connected state in 3GPP access may be referred to as a 5GMM non-connected mode in 3GPP access (5GMM-IDLE mode over 3GPP access), and the connected state in 3GPP access may be referred to as a 5GMM connected mode in 3GPP access (5GMM-CONNECTED mode over 3GPP access). In addition, the non-connected state in non-3GPP access may be referred to as a 5GMM non-connected mode in non-3GPP access (5GMM-IDLE mode over non-3GPP access), and the connected state in non-3GPP access may be referred to as a 5GMM connected mode in non-3GPP access (5GMM-CONNECTED mode over non-3GPP access). Note that the 5GMM non-connected mode may be referred to as an idle mode, and the 5GMM connected mode may be referred to as a connected mode.

In addition, one or multiple AMFs may be deployed within the core network_B. In addition, the AMF may be an NF that manages one or multiple Network Slice Instances (NSIs). In addition, the AMF may be a common CP function (Common Control Plane Network Function (CPNF)(CCNF)) shared among multiple NSIs.

Note that, in a case that the UE connects to the 5GS over non-3GPP access, the N3IWF is an apparatus and/or a function deployed between non-3GPP access and the 5GCN.

### 2.4. Apparatus Configuration of SMF

Next, an apparatus configuration example of the SMF will be described with reference to FIG. 5. The SMF includes a controller_B 700, a network connection unit_B 720, and a storage unit_B 740. The controller_B 700, the network connection unit_B 720, and the storage unit_B 740 are connected via a bus. The SMF may be a node that handles the control plane.

The controller_B 700 is a function unit that controls overall operations and functions of the SMF. The controller_B 700 reads and performs various programs stored in the storage unit_B 740 as necessary, and thereby implements various types of processing in the SMF.

The network connection unit_B 720 is a function unit for the SMF to connect to the AMF, and/or the UPF, and/or the PCF, and/or the UDM. In other words, with the use of the network connection unit_B 720, the SMF can transmit and/or receive user data and/or control information to and/or from the AMF, and/or the UPF, and/or the PCF, and/or the UDM.

To provide detailed description with reference to FIG. 2, by using of the network connection unit_A 620, the SMF in the 5GCN can communicate with the AMF over the N11 interface, can communicate with the UPF over the N4 interface, can communicate with the PCF over an N7 interface, and can communicate with the UDM over an N10 interface.

The storage unit_B 740 is a function unit that stores programs, user data, control information, and the like necessary for each operation of the SMF.

The SMF has a Session Management function for managing establishment, modification, and release of a PDU session, a function of IP address allocation to the UE and management thereof, a function of selection and control of the UPF, a function of configuring the UPF for routing traffic to an appropriate destination (transmission destination), a function of transmitting and/or receiving an SM part of a NAS message, a function of notifying arrival of downlink data (Downlink Data Notification), a function of providing SM information specific to an AN (for each AN) that is transmitted to the AN through the AMF over the N2 interface, a function of determining a Session and Service Continuity mode (SSC mode) for a session, a roaming function, and the like.

### 2.5. Apparatus Configuration of UPF

Next, an apparatus configuration example of the UPF will be described with reference to FIG. 5. The UPF includes a controller_B 700, a network connection unit_B 720, and a storage unit_B 740. The controller_B 700, the network connection unit_B 720, and the storage unit_B 740 are connected via a bus. The UPF may be a node that handles the control plane.

The controller_B 700 is a function unit that controls overall operations and functions of the UPF. The controller_B 700 reads and performs various programs stored in the storage unit_B 740 as necessary, and thereby implements various types of processing in the UPF.

The network connection unit_B 720 is a function unit for the UPF to connect to the base station apparatus (gNB) within the 5G AN, and/or the SMF, and/or the DN. In other words, with the use of the network connection unit_B 720, the UPF can transmit and/or receive user data and/or control information to and/or from the base station apparatus (gNB) within the 5G AN, and/or the SMF, and/or the DN.

To provide detailed description with reference to FIG. 2, by using the network connection unit_A 620, the UPF within the 5GCN can communicate with the gNB over the N3 interface, can communicate with the SMF over the N4 interface, can communicate with the DN over an N6 interface, and can communicate with another UPF over an N9 interface.

The storage unit_B 740 is a function unit that stores programs, user data, control information, and the like necessary for each operation of the UPF.

The UPF has a function as an anchor point for intra-RAT mobility or inter-RAT mobility, a function as an external PDU session point to be mutually connected with the DN (that is, a function of transferring user data as a gateway between the DN and the core network_B), a function of routing and transferring packets, an Uplink Classifier (UL CL) function of supporting routing of multiple traffic flows for one DN, a Branching point function of supporting a multi-homed PDU session, a Quality of Service (QoS) processing function for the user plane, a function of verifying uplink traffic, a function of triggering buffering of downlink packets and Downlink Data Notification, and the like.

In addition, the UPF may be a gateway for IP communication and/or non-IP communication. In addition, the UPF may have a function of transferring IP communication, or a function of conversion between non-IP communication and IP communication. Furthermore, multiple deployed gateways may be gateways for connecting the core network_B and a single DN. Note that the UPF may have connectivity with another NF, and may be connected to each apparatus via another NF.

Note that a user plane refers to user data that is transmitted and/or received between the UE and a network. The user plane may be transmitted and/or received using a PDN connection or a PDU session. Furthermore, in a case of the EPS, the user plane may be transmitted and/or received using an LTE-Uu interface, and/or an S1-U interface, and/or an S5 interface, and/or an S8 interface, and/or an SGi interface. Furthermore, in a case of the 5GS, the user plane may be transmitted and/or received over the interface between the UE and the NG RAN, and/or the N3 interface, and/or the N9 interface, and/or the N6 interface. The user plane may be hereinafter referred to as a U-Plane.

In addition, a control plane refers to a control message that is transmitted and/or received in order to perform communication control of the UE or the like. The control plane may be transmitted and/or received using Non-Access-Stratum (NAS) signaling connection between the UE and the MME. In addition, in a case of the EPS, the control plane may be transmitted and/or received using the LTE-Uu interface and an S1-MME interface. Furthermore, in a case of the 5GS, the control plane may be transmitted and/or received using the interface between the UE and the NG RAN and the N2 interface. The control plane may be hereinafter referred to as a control plane, or may be hereinafter referred to as a C-Plane.

Furthermore, the U-Plane (User Plane (UP)) may be a communication path for transmitting and/or receiving user data, and may include multiple bearers. Furthermore, the C-Plane (Control Plane (CP)) may be a communication path for transmitting and/or receiving a control message, and may include multiple bearers.

### 2.6. Other Apparatuses and/or Functions and/or Terminology in Present Embodiment

Next, other apparatuses and/or functions and/or terminology and/or identification information transmitted and/or received, stored, and managed by each apparatus and/or messages will be described.

A network refers to at least some of the access network_B, the core network_B, and the DN. One or multiple apparatuses included in at least a part of the access network_B B, the core network_B, and the DN may be referred to as a network or a network apparatus. In other words, "a network transmits and/or receives a message and/or performs processing" may mean "an apparatus (a network apparatus and/or a control apparatus) in the network transmits and/or receives the message and/or performs the processing". Conversely, "an apparatus in a network transmits and/or receives a message and/or performs processing" may mean "the network transmits and/or receives the message and/or performs the processing".

A session management (SM) message (also referred to as a Non-Access-Stratum (NAS) SM message) may be a NAS message used in a procedure for SM, or may be a control message transmitted and/or received between the UE_A 10 and the SMF_A 230 via the AMF_A 240. Furthermore, the SM message may include a PDU session establishment request message, a PDU session establishment accept message, a PDU session reject message (PDU session establishment reject message), a PDU session modification request message, a PDU session modification command message, a PDU session modification completion message (PDU session modification complete), a PDU session modification command reject message, a PDU session modification reject message, a PDU session release request message, a PDU session release reject message, a PDU session release command message, a PDU session release completion message, and the like.

The procedure for SM or the SM procedure may include a PDU session establishment procedure, a PDU session modification procedure, and a PDU session release procedure (UE-requested PDU session release procedure). Note that each procedure may be a procedure initiated by the UE, or may be a procedure initiated by the network (NW).

A Mobility management (MM) message (also referred to as a NAS MM message) may be a NAS message used in a procedure for MM, or may be a control message transmitted and/or received between the UE_A 10 and the AMF_A 240. Furthermore, the MM message may include a Registration request message, a Registration accept message, a Registration reject message, a De-registration request message, a De-registration accept message, a configuration update command message, a configuration update complete message, a Service request message, a Service accept message, a Service reject message, a Notification message, a Notification response message, and the like.

The procedure for MM or the MM procedure may include a Registration procedure, a De-registration procedure, a Generic UE configuration update procedure, an authentication and authorization procedure, a Service request procedure, a Paging procedure, and a Notification procedure.

A 5G System (5GS) service may be a connection service provided using the core network_B 190. In addition, the 5GS service may be a service different from an EPS service, or may be a service similar to the EPS service.

A non 5GS service may be a service other than the 5GS service and may include an EPS service and/or a non EPS service.

A Packet Data Network (PDN) type indicates a type of PDN connection and includes IPv4, IPv6, IPv4v6, and non-IP. In a case that IPv4 is specified, it indicates that transmission and/or reception of data is performed using IPv4. In a case that IPv6 is specified, it indicates that transmission and/or reception of data is performed using IPv6. In a case that IPv4v6 is specified, it indicates that transmission and/or reception of data is performed using IPv4 or IPv6. In a case that non-IP is specified, it indicates that communication is performed using a communication method other than the IP, not communication using the IP.

Although a Protocol Data Unit/Packet Data Unit (PDU) session can be defined as a relationship between the DN that provides a PDU connectivity service and the UE, the PDU session may be connectivity established between the UE and an external gateway. In the 5GS, the UE establishes a PDU session via the access network_B and the core network_B, and can thereby perform transmission and/or reception of user data to and/or from the DN by using the PDU session. Here, the external gateway may be a UPF, an SCEF, or the like. The UE can perform transmission and/or reception of user data to and/or from an apparatus deployed in the DN, such as an application server, by using the PDU session.

Note that each apparatus (the UE, and/or the access network apparatus, and/or the core network apparatus) may associate one or multiple pieces of identification information with a PDU session for management. Note that these pieces of identification information may include one or multiple of a DNN, a QoS rule, a PDU session type, application identification information, NSI identification information, access network identification information, and an SSC mode, and may further include other pieces of information. In addition, in a case that multiple PDU sessions are established, pieces of identification information associated with the PDU sessions may have the same or different details.

The Data Network Name (DNN) may be identification information for identifying the core network and/or an external network such as the DN. In addition, the DNN can also be used as information for selecting a gateway such as the PGW_A 30/UPF_A 235 connecting the core network_B 190. In addition, the DNN may correspond to an Access Point Name (APN).

A Protocol Data Unit/Packet Data Unit (PDU) session type indicates a type of PDU session and includes IPv4, IPv6, Ethernet, and Unstructured. In a case that IPv4 is specified, it indicates that transmission and/or reception of data is performed using IPv4. In a case that IPv6 is specified, it indicates that transmission and/or reception of data is performed using IPv6. In a case that Ethernet is specified, it indicates that transmission and/or reception of an Ethernet frame is performed. Alternatively, Ethernet may indicate that communication using the IP is not performed. In a case that Unstructured is specified, it indicates that data is transmitted and/or received to and/or from an application server in the DN or the like by using a Point-to-Point (P2P) tunneling technique. For the P2P tunneling technique, for example, a UDP/IP encapsulation technique may be used. Note that the PDU session type may include the IP, in addition to the above. The IP can be specified in a case that the UE can use both of IPv4 and IPv6.

The Public land mobile network (PLMN) is a communication network that provides mobile radio communication services. The PLMN is a network managed by an operator who is a (mobile) network operator, and the operator can be identified by a PLMN ID. In the present document, the PLMN may mean the PLMN ID. A PLMN that matches a Mobile Network Code (MNC) and a Mobile Country Code (MCC) of an International Mobile Subscriber Identity (IMSI) of the UE may be a Home PLMN (HPLMN). The PLMN may mean a core network.

Furthermore, the UE may hold, in a USIM, an Equivalent HPLMN list for identifying one or multiple Equivalent HPLMNs (EHPLMNs). A PLMN different from the HPLMN and/or the EHPLMN may be a Visited PLMN (VPLMN).

The PLMN that the UE has successfully registered may be a Registered PLMN (RPLMN). Each apparatus may receive and/or hold and/or store, from the RPLMN, an Equivalent PLMN list for identifying one or multiple Equivalent PLMNs (EPLMNs) that can be used equivalently to the RPLMN in the PLMN selection performed by the UE.

The current PLMN may be a PLMN requested by the UE and/or a PLMN selected by the UE and/or the RPLMN and/or the PLMN allowed by the network and/or the PLMN to which the core network apparatus transmitting and/or receiving messages belongs to.

The requested PLMN means a message transmission destination network in a case that the UE transmits a message. Specifically, the requested PLMN may be a PLMN selected by the UE in a case that the UE transmits a message. The requested PLMN is the PLMN requested by the UE and may be a current PLMN. Also, the requested PLMN may be a registered PLMN in a case that the UE is in a registered state.

A Non-public network (NPN) is a network intended for non-public specifications. There are two types of NPN including a Stand-alone non-public network (SNPN) and a Public network integrated non-public network (PNI-NPN). The SNPN and PNI-NPN may be deployed in the 5GS. In the present document, in a case that NPN is referred to, it may mean an SNPN or a PNI-NPN or both.

A Stand-alone non-public network (SNPN) is a network that is operated by an NPN operator and does not depend on the network functions provided by a PLMN. In other words, an SNPN is a network independent of a PLMN and can only be accessed by certain UEs. The SNPN is identified with a PLMN ID and a Network identifier (NID).

Here, a PLMN ID for identifying an SNPN does not need to be unique. For example, one or more PLMN IDs reserved to be used in a private network may be used for an NPN.

A Stand-alone Non-Public Network (SNPN) is a network that is identified by an SNPN ID composed of a combination of a PLMN ID and a Network identifier (NID) and to which only specific UE is allowed to connect. The SNPN may mean a core network. Here, the UE that is allowed to access the SNPN may be an SNPN enabled UE.

Furthermore, the UE may hold, in the USIM, an Equivalent SNPN list for identifying one or multiple Equivalent SNPNs (ESNPNs). An SNPN different from a HSNPN and/or an ESNPN may be a Visited PLMN (VPLMN).

The SNPN with which the UE has been successfully registered may be a Registered SNPN (RSNPN). Each apparatus may receive and/or hold and/or store, from the RSNPN, an equivalent SNPN list for identifying one or multiple Equivalent PLMNs (ESNPNs) that can be used equivalently to the RSNPN in the PLMN selection or SNPN selection performed by the UE.

A Public network integrated non-public network (PNI-NPN) is an NPN deployed with support of a PLMN. In other words, it is a network that uses the functions of a PLMN to implement private specifications.

Onboarding services in SNPN allow an MS (UE) to access the SNPN indicating onboarding using default UE credentials.

A registration procedure for onboarding services in SNPN may be an Initial registration for onboarding services in SNPN. Additionally or alternatively, the registration procedure for an onboarding service in SNPN may be a registration procedure for registration update due to mobility in a case that a UE has been registered for the onboarding service in SNPN. The registration procedure for an onboarding service in SNPN may be referred to as SNPN onboarding registration.

In the registration procedure for an onboarding service in SNPN, MM-based slice admission control may not be performed by the AMF or the NF in the core network for the S-NSSAI for the onboarding service in SNPN.

In addition, a network slice (NS) is a logical network that provides specific network capability and network characteristics. The UE and/or the network can support the network slice (NW slice (NS)) in the 5GS. The network slice may be referred to simply as a slice.

In addition, a network slice instance (NSI) includes a set of an instance (entity) of a network function (NF) and necessary resources and forms a network slice to be mapped. Here, the NF is a processing function for a network, and is adopted or defined by the 3GPP. The NSI is an entity of one or multiple NSs configured in the core network_B. In addition, the NSI may include a virtual Network Function (NF) generated using a Network Slice Template (NST).

Here, the NST is associated with a resource request for provision of a requested communication service and capability, and is a logical expression of one or multiple NFs. In other words, the NSI may be a set of multiple NFs on the core network_B 190. The NSI may be a logical network configured for classifying user data to be delivered depending on a service or the like. In the NS, one or multiple NFs may be configured. Each NF configured in the NS may or may not be an apparatus shared with another NS.

The UE and/or the apparatus in the network can be allocated to one or multiple NSs, based on an NSSAI, and/or an S-NSSAI, and/or a UE usage type, and/or registration information such as one or multiple NSI IDs, and/or an APN. Note that the UE usage type is a parameter value included in registration information of the UE, which is used for identifying the NSI. The UE usage type may be stored in the HSS. The AMF may select the SMF and the UPF based on the UE usage type.

In addition, Single Network Slice Selection Assistance Information (S-NSSAI) is information for identifying the NS. The S-NSSAI may include only a Slice/Service type (SST), or may include both of an SST and a Slice Differentiator (SD). Here, the SST is information indicating an operation of the NS expected in terms of functions and services. In addition, the SD may be information for interpolating an SST in a case that one NSI is selected out of multiple NSIs indicated by the SST. The S-NSSAI may be information unique to each PLMN or SNPN or may be standard information common to PLMNs or SNPNs.

In addition, the S-NSSAI may also be transmitted and/or received between apparatuses using S-NSSAI IEs of the 5GS, in that case, the S-NSSAI may include S-NSSAI (SST and/or SD) associated with the current PLMN or SNPN and/or S-NSSAI (SST and/or SD) of an HPLMN (if any. For example, at a time in a case that a UE performs roaming or in a case that the current PLMN or SNPN is a VPLMN or an SNPN).

In addition, a network may store one or multiple pieces of S-NSSAI in the registration information of the UE as default S-NSSAI. Note that, in a case that the S-NSSAI is default S-NSSAI and the UE does not transmit, to a network, valid S-NSSAI in a registration request message, the network may provide an NS related to the UE.

In addition, the S-NSSAI transmitted and/or received between the UE and the NW may be referred to as an S-NSSAI Information element (IE). Furthermore, an S-NSSAI IE transmitted and/or received between the UE and the NW may include S-NSSAI including the SST and/or SD of the registered PLMN or SNPN and/or the SST and/or SD indicating S-NSSAI of the HPLMN or HSNPN to which the aforementioned S-NSSAI is mapped. One or multiple pieces of S-NSSAI stored in the UE and/or the NW may include the SST and/or the SD, or include the S-NSSAI including the SST and/or the SD and/or the SST and/or the SD indicating the S-NSSAI of the HPLMN to which the S-NSSAI is mapped.

In addition, the Network Slice Selection Assistance Information (NSSAI) is a set of pieces of the S-NSSAI. Each piece of the S-NSSAI included in the NSSAI is information for assisting the access network or the core network to select an NSI. The UE may store the NSSAI allowed by the network for each PLMN or SNPN. In addition, the NSSAI may be information used for selecting the AMF. The UE may apply, to the PLMN and EPLMN or the SNPN and ESNPN, each piece of NSSAI (allowed NSSAI, and/or configured NSSAI, and/or rejected NSSAI, and/or pending NSSAI, and/or first NSSAI).

The mapped S-NSSAI is the S-NSSAI of the HPLMN mapped to the S-NSSAI of the registered PLMN in a roaming scenario. The UE may store one or multiple pieces of mapped S-NSSAI mapped to the S-NSSAI included in the configured NSSAI and the allowed NSSAI of each access type. Furthermore, the UE may store one or multiple pieces of mapped S-NSSAI of the S-NSSAI included in the rejected NSSAI, and/or the pending NSSAI, and/or the S-NSSAI included in the first NSSAI.

In a case that the SNPN roaming scenario is supported, the mapped S-NSSAI may be S-NSSAI of the HSNPN mapped to the S-NSSAI of the registered SNPN.

A Network Slice-Specific Authentication and Authorization (NSSAA) function is a function for implementing network slice-specific authentication and authorization. The network slice-specific authentication and authorization allows the UE to be authenticated and authorized outside the core network, such as in a 3rd Party. The PLMN or the SNPN and the network apparatus having the NSSAA function can perform an NSSAA procedure on certain S-NSSAI, based on registration information of the UE. Furthermore, the UE having the NSSAA function can manage, store, and transmit and/or receive the pending NSSAI and the third rejected NSSAI. In the present document, NSSAA may be referred to as a network slice-specific authentication and authorization procedure or an authentication and authorization procedure.

The S-NSSAI that requires NSSAA is S-NSSAI that requires NSSAA managed by the core network and/or the core network apparatus. Furthermore, at the time of roaming, the S-NSSAI requiring the NSSAA may be S-NSSAI other than that of the HPLMN or HSNPN, which is managed by the core network and/or the core network apparatus, and in which the S-NSSAI of the HPLMN or HSNPN requiring the NSSAA is mapped S-NSSAI.

The core network and/or the core network apparatus may store the S-NSSAI that requires NSSAA by associating the S-NSSAI with information indicating whether NSSAA is required. Furthermore, the core network and/or the core network apparatus may store the S-NSSAI requiring the NSSAA in association with information indicating whether NSSAA has completed or information indicating that NSSAA has completed and been allowed or succeeded. The core network and/or the core network apparatus may manage the S-NSSAI requiring NSSAA as information unrelated to the access network.

In addition, configured NSSAI is NSSAI fed and stored in the UE. The UE may store the configured NSSAI for each PLMN or SNPN. The UE may store the configured NSSAI in association with the PLMN or SNPN.

Note that, in the present document, the configured NSSAI associated with the PLMN may be referred to as configured NSSAI with respect to the PLMN, configured NSSAI of the PLMN, configured NSSAI for the PLMN, or configured NSSAI associated with the PLMN. Similarly, the configured NSSAI associated with the SNPN may be expressed as configured NSSAI with respect to the SNPN, configured NSSAI of the SNPN, configured NSSAI for the SNPN, or configured NSSAI associated with the SNPN.

In addition, the UE may store configured NSSAI that is not associated with the PLMN and is valid for all PLMNs, and such configured NSSAI may be defined as "default configured NSSAI". Similarly, the UE may store configured NSSAI that is not associated with the SNPN and is valid for all SNPNs, and such configured NSSAI may be defined as "default configured NSSAI". The UE may store configured NSSAI that is associated with neither the PLMN nor the SNPN and is valid for all PLMNs and SPNMs, and such configured NSSAI may be defined as "default configured NSSAI".

The configured NSSAI may be associated with multiple PLMNs or SNPNs, these multiple PLMNs may be EPLMNs, or multiple SNPNs may be ESNPNs.

The configured NSSAI may be information configured by a network (or a PLMN or an SNPN). The S-NSSAI included in the configured NSSAI may be referred to as configured S-NSSAI. The configured S-NSSAI may be transmitted and/or received using S-NSSAI IEs, and in this case, the configured S-NSSAI may include S-NSSAI (SST and/or SD) and mapped S-NSSAI (SST of mapped HPLMN or the SNPN and/or SD of mapped HPLMN or SNPN) (if any. For example, at a time in a case that the UE performs roaming or in a case that the associated PLMN or SNPN is a VPLMN or VSNPN).

Alternatively, the S-NSSAI (SST and/or SD) of the PLMN or the SNPN and the S-NSSAI (SST and/or SD) of the HPLMN or the SNPN may be treated independently. Specifically, the configured S-NSSAI of the PLMN or the SNPN may be referred to as "configured S-NSSAI for the PLMN or the SNPN" or "configured S-NSSAI of the PLMN or the SNPN" or "configured S-NSSAI with respect to the PLMN or the SNPN".

Furthermore, one or more pieces of S-NSSAI of the HPLMN or the HSNPN to which the configured S-NSSAI is mapped may be referred to as "one or more pieces of mapped S-NSSAI with respect to the configured NSSAI of the PLMN or the SNPN" or "one or more pieces of mapped S-NSSAI of the configured NSSAI of the PLMN or the SNPN".

In other words, the UE may store "configured NSSAI of the current PLMN or SNPN" included in the S-NSSAI of the current PLMN or SNPN, and further during roaming, the UE may store "one or more pieces of mapped S-NSSAI with respect to the configured NSSAI of the current PLMN or SNPN". The one or more pieces of mapped S-NSSAI with respect to the configured NSSAI may be mapped S-NSSAI(s) for the configured NSSAI of the 3GPP.

The configured NSSAI may be updated by the NW at an arbitrary timing, and the updated configured NSSAI may be transmitted from the NW to the UE based on the update.

In addition, requested NSSAI is NSSAI provided to the network from the UE during the registration procedure. In the registration procedure, the S-NSSAI included in the requested NSSAI transmitted by the UE may be S-NSSAI included in the allowed NSSAI, and/or the configured NSSAI, and/or the first NSSAI stored in the UE.

The requested NSSAI may be information indicating a network slice requested by the UE. The S-NSSAI included in the requested NSSAI may be referred to as requested S-NSSAI. For example, the requested NSSAI is included and transmitted and/or received in a Non-Access-Stratum (NAS) message transmitted from the UE to the network, such as a registration request message or a PDU session establishment request message, or in a Radio Resource Control (RRC) message including the NAS message. Here, in a roaming case, the requested NSSAI may include S-NSSAI of a VPLMN and the S-NSSAI of a mapped HPLMN. In other words, the S-NSSAI included in the requested NSSAI (requested S-NSSAI) may include S-NSSAI and mapped S-NSSAI.

The requested NSSAI may be information including one or multiple pieces of S-NSSAI associated with a network slice requested by the UE. Note that the network slice requested by the UE may be a network slice that the UE wants to use, or a network slice that the UE requests to be allowed to use by the network. The S-NSSAI included in the requested NSSAI may be S-NSSAI included in the configured NSSAI associated with the current PLMN, or may be S-NSSAI included in allowed NSSAI associated with the current PLMN.

In other words, requested NSSAI may be one or more pieces of S-NSSAI included in the configured NSSAI associated with the current PLMN/SNPN, or one or more pieces of S-NSSAI included in the allowed NSSAI associated with the current PLMN, or one or more pieces of S-NSSAI included in the first NSSAI associated with the current PLMN, or a combination of the above-described three cases. More specifically, the allowed NSSAI associated with the current PLMN may be allowed NSSAI associated with the current PLMN and the current access type. Furthermore, the requested NSSAI may be requested NSSAI of the 5GS.

Note that, the S-NSSAI included in the requested NSSAI may be S-NSSAI that is stored in the UE but not included in the rejected NSSAI associated with the current PLMN or SNPN, and/or S-NSSAI that is stored in the UE but not included in pending NSSAI associated with the current PLMN or SNPN, or S-NSSAI that is stored in the UE but not included in the fourth rejected NSSAI associated with the current PLMN or SNPN.

Furthermore, the S-NSSAI included in the requested NSSAI may be S-NSSAI for which the back-off timer associated with the S-NSSAI and/or the mapped S-NSSAI of the S-NSSAI is not running for the UE.

In addition, the allowed NSSAI is information indicating one or multiple network slices allowed for the UE. In other words, the allowed NSSAI is information identifying a network slice to which the UE is allowed to connect by the network. The allowed NSSAI may be allowed NSSAI stored in the UE and/or the NW, or allowed NSSAI transmitted from the NW to the UE. In this case, the allowed NSSAI may refer to an allowed NSSAI IE of the 3GPP.

The allowed NSSAI IE transmitted from the NW to the UE may include a list of pieces of the S-NSSAI of the current PLMN or SNPN that are valid for the current PLMN or SNPN at the time of non-roaming.

At the time of roaming, the allowed NSSAI IE transmitted from the NW to the UE may include a list pieces of the S-NSSAI of the current PLMN or SNPN that are valid for the current PLMN or SNPN and also a list of pieces of mapped S-NSSAI that is the S-NSSAI of the HPLMN or HSNPN to which the S-NSSAI of the current PLMN or SNPN is further mapped.

Note that the list of pieces of S-NSSAI of the current PLMN or SNPN that are included in the allowed NSSAI IE and are valid for the current PLMN or SNPN may be referred to as Allowed NSSAI, and the list of pieces of mapped S-NSSAI that are S-NSSAI of the HPLMN or HSNPN to which the S-NSSAI of the current PLMN or SNPN is mapped may be referred to as a list of pieces of mapped S-NSSAI of the Allowed NSSAI. Here, the list of pieces of mapped S-NSSAI of the Allowed NSSAI may be mapped S-NSSAI(s) for the allowed NSSAI for a PLMN of the 3GPP. Similarly, the Allowed NSSAI may mean allowed NSSAI for a PLMN or an SNPN of the 3GPP.

The UE and/or the NW may store and manage the allowed NSSAI for each access (the 3GPP access or the non-3GPP access), as information regarding the UE. The UE and/or the NW may further manage the allowed NSSAI in association with the registration area.

Furthermore, the UE and/or the NW may store and manage the allowed NSSAI in association with the PLMN or the SNPN as information regarding UE. The allowed NSSAI may be associated with multiple PLMN, these multiple PLMNs may be EPLMNs, or multiple SNPNs may be ESNPNs.

Note that, in the present document, the allowed NSSAI associated with the PLMN or SNPN and the access type may be referred to as "allowed NSSAI with respect to the PLMN or SNPN and the access type" or "allowed NSSAI with respect to the access type of the PLMN or SNPN".

The S-NSSAI included in the allowed NSSAI may be referred to as an allowed S-NSSAI. The allowed S-NSSAI may be transmitted and/or received using S-NSSAI IEs, and in this case, the allowed S-NSSAI (SST and/or SD) may include S-NSSAI and mapped S-NSSAI (SST of mapped HPLMN or the SNPN and/or SD of mapped HPLMN or SNPN) (if any. For example, at a time in a case that the UE performs roaming or in a case that the associated PLMN or SNPN is a VPLMN or VSNPN).

Alternatively, the S-NSSAI (SST and/or SD) of the PLMN or the SNPN and the S-NSSAI) of the HPLMN or the SNPN (SST of the mapped HPLMN or SNPN and/or SD of the mapped HPLMN or SNPN may be treated independently. Specifically, the Allowed S-NSSAI of the PLMN or the SNPN may be expressed as "allowed S-NSSAI for the PLMN or the SNPN" or "allowed S-NSSAI of the PLMN or the SNPN" or "allowed S-NSSAI with respect to the PLMN or the SNPN".

Furthermore, one or more pieces of S-NSSAI of the HPLMN or the HSNPN to which the allowed S-NSSAI is mapped may be referred to as "one or more pieces of mapped S-NSSAI with respect to the allowed NSSAI of the PLMN or the SNPN" or "one or more pieces of mapped S-NSSAI of the allowed NSSAI of the PLMN or the SNPN".

In addition, the rejected NSSAI is information indicating one or multiple network slices not allowed for the UE to use or request. In other words, the rejected NSSAI is information identifying a network slice to which the UE is not allowed to connect by the network. The rejected NSSAI transmitted from the NW to the UE may be included in a rejected NSSAI IE or an Extended rejected NSSAI IE.

The rejected NSSAI transmitted and/or received by using the rejected NSSAI IE may be information including one or multiple combinations of S-NSSAI (SST and/or SD) and a rejection cause value (rejected S-NSSAI). The rejected NSSAI transmitted and/or received using an Extended rejected NSSAI IE may be, during roaming, information including one or multiple combinations (Rejected S-NSSAI) of S-NSSAI (SST and/or SD) and mapped S-NSSAI (SST of the mapped HPLMN or SNPN and/or SD of the mapped HPLMN or SNPN) (if any. For example, at a time in a case that the UE performs roaming, or in a case that the associated PLMN or SNPN is the VPLMN or VSNPN) and the rejection cause value.

The Extended rejected NSSAI IE may include one or more sets of Rejected S-NSSA and/or NSSAI (Partial extended rejected NSSAI list in the 5GS), and the set of Rejected S-NSSAI may include information indicating the type of the set.

The information indicating the type of the set may be, for example, information indicating that the set includes one or more pieces of rejected S-NSSAI (SST and/or SD) with associated back-off timer values, or information indicating that the set does not include associated back-off timer values but includes one or more pieces of rejected S-NSSAI (SST and/or SD).

In a case that the information indicating the type of the set is information indicating that one or more pieces of rejected S-NSSAI are included in the set together with the associated back-off timer value, the set of Rejected S-NSSAI may include the back-off timer value.

Here, the S-NSSAI included in the rejected NSSAI may be associated with a PLMN ID or an SNPN ID. Note that a PLMN or an SNPN indicated by a PLMN ID or an SNPN ID with which the S-NSSAI included in the rejected NSSAI is associated may be the current PLMN or the current SNPN. Alternatively, the PLMN ID or the SNPN ID with which the S-NSSAI included in the rejected NSSAI is associated may be information indicating the HPLMN or the HSNPN regardless of the current PLMN or SNPN.

Here, the rejection cause value is information indicating the reason that the network rejects the corresponding S-NSSAI or a combination (if any) of the corresponding S-NSSAI and the mapped S-NSSAI. The UE and/or network may store and manage each piece of S-NSSAI and/or mapped S-NSSAI (if any) as appropriate rejected NSSAI and/or mapped S-NSSAI of the rejected NSSAI based on the rejection cause value with which each S-NSSA or a combination of the corresponding S-NSSAI and the mapped S-NSSAI is associated.

Furthermore, the rejected NSSAI may be included in the NAS message transmitted from the network to the UE, such as a registration accept message, a configuration update command, or a registration reject message, or in an RRC message including a NAS message. The S-NSSAI included in the rejected NSSAI may be referred to as rejected S-NSSAI.

The rejected NSSAI may be transmitted by using a Rejected NSSAI IE or may be transmitted by using an Extended rejected NSSAI IE in a case that the UE is roaming. The Extended rejected NSSAI IE may include one or multiple pieces rejected S-NSSAI (IE) including the S-NSSAI of the current PLMN or SNPN (SST and/or SD), the mapped S-NSSAI (SST of the mapped HPLMN or SNPN and/or SD of the mapped HPLMN or SNPN) and the rejection cause value, and it may be understood that the UE has been rejected to request the received S-NSSAI of the current PLMN or SNPN to the NW together with the received mapped S-NSSAI. Meanwhile, the Rejected NSSAI IE may include the rejected S-NSSAI IE according to the S-NSSAI of the current PLMN or SNPN and the rejection cause value, and it may be understood that the UE has been rejected to request the received S-NSSAI of the current PLMN or SNPN or S-NSSAI associated with the S-NSSAI of the HPLMN or HSNPN from the NW.

The rejected NSSAI may be any one of the first to fourth rejected NSSAI, one or more pieces of mapped S-NSSAI with respect to the rejected NSSAI, one or more pieces of mapped S-NSSAI with respect to the second rejected NSSAI, and one or more pieces of mapped S-NSSAI with respect to the fourth rejected NSSAI, or may be a combination thereof. The S-NSSAI included in the rejected NSSAI may be referred to as rejected S-NSSAI. The rejected S-NSSAI may be transmitted and/or received between apparatuses by using S-NSSAI IEs, and an S-NSSAI IE indicating the rejected NSSAI may include S-NSSAI and mapped S-NSSAI.

The UE and/or the NW may store and manage the rejected NSSAI in association with the PLMN or the SNPN as information regarding the UE. The rejected NSSAI may be further associated with the other one or multiple PLMNs or SNPNs, and the other one or multiple PLMNs may be EPLMNs, and the other one or multiple SNPNs may be ESNPNs.

Note that, in the present document, the rejected NSSAI associated with the PLMN or the SNPN may be referred to as rejected NSSAI with respect to the PLMN or the SNPN, rejected NSSAI of the PLMN or the SNPN, or rejected NSSAI for the PLMN or the SNPN. The UE and/or the NW may further store second rejected NSSAI and/or second rejected S-NSSAI in association with a registration area. The UE and/or the NW may store the second rejected NSSAI and/or the second rejected S-NSSAI in association with an access type and/or a registration area.

Here, the first rejected NSSAI is a set of one or multiple pieces of the S-NSSAI available in the current PLMN or the current SNPN. The first rejected NSSAI may be rejected NSSAI for the current PLMN or SNPN in the 5GS, may be rejected S-NSSAI for the current PLMN or SNPN, may be S-NSSAI included in the rejected NSSAI for the current PLMN or SNPN, may be mapped S-NSSAI(s) for rejected S-NSSAI for the current PLMN or SNPN, or may be S-NSSAI included in mapped S-NSSAI(s) for rejected S-NSSAI for the current PLMN or SNPN. The list (set) of pieces of mapped S-NSSAI of the first rejected NSSAI may be one or multiple pieces of mapped S-NSSAI with respect to the first rejected NSSAI or mapped S-NSSAI(s) for the rejected NSSAI for the current PLMN or SNPN of the 5GS. The first rejected NSSAI may be rejected NSSAI stored by the UE or the NW or may be rejected NSSAI transmitted from the NW to the UE.

In a case that the first rejected NSSAI is rejected NSSAI transmitted from the NW to the UE, one or multiple S-NSSAIs rejected because they are unavailable in the current PLMN or the current SNPN among the S-NSSAIs included in the requested NSSAI transmitted from the UE to the NW are included. In this case, the first rejected NSSAI may be information including one or multiple combinations of the S-NSSAI and the rejection cause value. The rejection cause value at this time may be "S-NSSAI not available in the current PLMN or SNPN" or may be information indicating that the S-NSSAI associated with the rejection cause value is not available in the current PLMN or SNPN. The S-NSSAI included in the first rejected NSSAI may be referred to as first rejected S-NSSAI.

In a case that the first rejected NSSAI is rejected NSSAI transmitted from the NW to the UE, the first rejected NSSAI may be included and transmitted and/or received in the rejected NSSAI IE or the Extended rejected NSSAI IE. The rejected NSSAI IE or the Extended rejected NSSAI IE may include at least one combination of the S-NSSAI of the current PLMN or SNPN and the rejection cause value. In a case that the UE is roaming, the foregoing combination may further include mapped S-NSSAI that is S-NSSAI of the HPLMN.

In other words, in a roaming case, the first rejected NSSAI transmitted from the NW to the UE may include at least one combination of the S-NSSAI of the current PLMN or SNPN, the mapped S-NSSAI, and the rejection cause value.

The first rejected NSSAI may be applied to all of registered PLMNs or SNPNs. The UE and/or NW may handle the first rejected NSSAI and the S-NSSAI included in the first rejected NSSAI as information regardless of the access type. In other words, the first rejected NSSAI may be information valid for 3GPP access and non-3GPP access.

In a case that the UE transitions to a deregistered state on both the 3GPP access and the non-3GPP access for the current PLMN, the UE may delete the first rejected NSSAI from storage. In other words, the UE deletes the first rejected NSSAI in a case that the UE transitions to the deregistered state for the current PLMN via certain access, in a case that the UE successfully registers with a new PLMN via certain access, in a case that the UE fails to register with a new PLMN via certain access and transitions to the deregistered state, or in a case that the UE is not registered (deregistered state) via other access. In other words, in a case that the UE transitions to a deregistered state with respect to the current PLMN via certain access and the UE is in a state of being registered (registered state) with the current PLMN via the other access, the UE need not delete the first rejected NSSAI.

The S-NSSAI included in the first rejected NSSAI or the first rejected NSSAI may be referred to as S-NSSAI of the current PLMN. In other words, the S-NSSAI included in the first rejected NSSAI or the first rejected NSSAI may be stored and/or managed and/or transmitted and/or received only in association with the current PLMN ID or SNPN ID. Additionally or alternatively, the S-NSSAI included in the first rejected NSSAI may be S-NSSAI of the HPLMN, or may be an S-NSSAI of the current PLMN.

Second rejected NSSAI is a set of one or multiple pieces of the S-NSSAI that are not available in the current registration area. The second rejected NSSAI may be rejected NSSAI for the current registration area of the 5GS, mapped S-NSSAI(s) for rejected NSSAI for the current registration area, or S-NSSAI included in the mapped S-NSSAI(s) for rejected NSSAI for the current registration area. The list (set) of pieces of mapped S-NSSAI of the second rejected NSSAI may be one or multiple pieces of mapped S-NSSAI with respect to the second rejected NSSAI, or mapped S-NSSAI(s) for the rejected NSSAI for the current registration area of the 5GS. The second rejected NSSAI may be rejected NSSAI stored by the UE or the NW or may be rejected NSSAI transmitted from the NW to the UE. In a case that the second rejected NSSAI is rejected NSSAI transmitted from the NW to the UE, the second rejected NSSAI may be information including one or multiple combinations of S-NSSAI and a cause value. The rejection cause value at this time may be "S-NSSAI not available in the current registration area" or may be information indicating that the S-NSSAI associated with the cause value is not available in the current registration area. The S-NSSAI included in the second rejected NSSAI may be referred to as second rejected S-NSSAI.

In a case that the second rejected NSSAI is rejected NSSAI transmitted from the NW to the UE, one or multiple pieces of S-NSSAI rejected because they are unavailable in the current registration area among pieces of the S-NSSAI included in the requested NSSAI by the UE are included. In that case, the second rejected NSSAI may be included and transmitted and/or received in the rejected NSSAI IE or the Extended rejected NSSAI IE. The rejected NSSAI IE or the Extended rejected NSSAI IE may include at least one combination of the S-NSSAI of the current PLMN or SNPN and the rejection cause value. In a case that the UE is roaming, the foregoing combination may further include mapped S-NSSAI that is S-NSSAI of the HPLMN.

In other words, in the roaming case, the second rejected NSSAI transmitted from the NW to the UE may include at least one combination of the S-NSSAI of the current PLMN or SNPN, the mapped S-NSSAI, and the rejection cause value.

The second rejected NSSAI may be valid within the current registration area and may be applied to the current registration area. The UE and/or the NW may handle the second rejected NSSAI and the S-NSSAI included in the second rejected NSSAI as information for each access type. In other words, the second rejected NSSAI may be information valid for each of 3GPP access and non-3GPP access. In other words, once the UE transitions to the deregistered state with respect to certain access, the UE may delete the second rejected NSSAI associated with the access from the storage.

The S-NSSAI included in the second rejected NSSAI or the second rejected NSSAI may be referred to as S-NSSAI of the current PLMN. In other words, the S-NSSAI included in the second rejected NSSAI or the second rejected NSSAI may be stored and/or managed and/or transmitted and/or received only in association with the current PLMN ID or SNPN ID. Alternatively, the S-NSSAI included in the second rejected NSSAI may be S-NSSAI of the HPLMN, or may be an S-NSSAI of the current PLMN.

The third rejected NSSAI is S-NSSAI that requires NSSAA and is a set of one or multiple pieces of S-NSSAI for which the NSSAA for the S-NSSAI is failed or revoked. The third rejected NSSAI may be NSSAI stored in the UE and/or the NW or NSSAI transmitted and/or received between the NW and the UE. In a case that the third rejected NSSAI is transmitted from the NW to the UE, the third rejected NSSAI may be information including one or multiple combinations of S-NSSAI and a rejection cause value. The rejection cause value at this time may be "S-NSSAI not available due to the failed or revoked NSSAA" and may be information indicating that the NSSAA for the S-NSSAI associated with the rejection cause value has been failed or revoked. The S-NSSAI included in the third rejected NSSAI may be referred to as third rejected S-NSSAI.

In a case that the third rejected NSSAI is NSSAI transmitted from the NW to the UE, the third rejected NSSAI may be transmitted and/or received by using the rejected NSSAI IE or the Extended rejected NSSAI IE.

The third rejected NSSAI may be applied to a registered PLMN or a registered SNPN, may be applied to a registered PLMN and/or an EPLMN, or may be applied to a registered SNPN and/or an ESNPN, or may be applied to all PLMNs or SNPNs. The fact that the third rejected NSSAI is applied to all the PLMNs may mean that the third rejected NSSAI is not associated with the PLMNs or may mean that the third rejected NSSAI is associated with the HPLMN or the HSNPN.

Furthermore, the UE and/or the NW may handle the third rejected NSSAI and the third rejected S-NSSAI as information regardless of the access type. In other words, the third rejected NSSAI may be valid information for 3GPP access and non-3GPP access. The third rejected NSSAI may be NSSAI different from the rejected NSSAI. The third rejected NSSAI may be the first rejected NSSAI. The third rejected NSSAI may be rejected NSSAI for the failed or revoked NSSAA of the 5GS, or may be rejected S-NSSAI for the failed or revoked NSSAA, or may be S-NSSAI included in the rejected NSSAI for the failed or revoked NSSAA.

The third rejected NSSAI is rejected NSSAI allowing the UE to identify the slice that is rejected due to failure or revocation of NSSAA from the core network. Specifically, the UE does not initiate the registration request procedure for the S-NSSAI included in the third rejected NSSAI while storing the third rejected NSSAI. The third rejected NSSAI may be identification information including one or multiple pieces of S-NSSAI received from the core network in association with the rejection cause value indicating failure of NSSAA.

The third rejected NSSAI is information regardless of the access type. Specifically, in a case that the UE stores the third rejected NSSAI, the UE may not attempt to transmit, either on 3GPP access or on non-3GPP access, a registration request message including the S-NSSAI included in the third rejected NSSAI. Alternatively, the UE can transmit the registration request message including the S-NSSAI included in the third rejected NSSAI, based on a UE policy.

Alternatively, the UE may delete the third rejected NSSAI based on the UE policy and transition to a state in which the UE can transmit the registration request message including the S-NSSAI included in the third rejected NSSAI. In other words, in a case that the UE transmits, based on the UE policy, the registration request message including the S-NSSAI included in the third rejected NSSAI, the UE may delete the S-NSSAI from the third rejected NSSAI.

The S-NSSAI included in the third rejected NSSAI at the time of roaming may be referred to as S-NSSAI of the HPLMN. In other words, the third rejected NSSAI received by the UE from the VPLMN or the VSNPN may include the S-NSSAI of the HPLMN or the HSNPN.

In other words, the UE and/or each apparatus may store a "third rejected NSSAI" in which the S-NSSAI of the HPLMN or the HSNPN is configured. That is, even at the time of roaming, the "third rejected NSSAI" may be stored without being associated with mapped S-NSSAI.

The fourth rejected NSSAI is information including one or multiple pieces of S-NSSAI that have reached the maximum number of UEs for each network slice. The fourth rejected NSSAI may be NSSAI stored by the UE or the NW, or may be NSSAI transmitted from the NW to the UE.

The fourth rejected NSSAI may be a rejected NSSAI for the maximum number of UEs reached in the 5GS, may be rejected S-NSSAI for the maximum number of UEs reached, may be S-NSSAI included in the rejected NSSAI for the maximum number of UEs reached, may be mapped S-NSSAI(s) for the maximum number of UEs reached, or may be S-NSSAI included in the mapped S-NSSAI(s) for the maximum number of UEs reached. The list (set) of pieces of the mapped S-NSSAI of the fourth rejected NSSAI may be one or multiple pieces of mapped S-NSSAI with respect to the fourth rejected NSSAI, or may be mapped S-NSSAI(s) for the maximum number of UEs reached in the 5GS.

In a case that the fourth rejected NSSAI is transmitted from the NW to the UE, the fourth rejected NSSAI may be information including one or multiple pieces of information including at least one of S-NSSAI (SST and/or SD), mapped S-NSSAI (SST and/or SD) (if any), a rejection cause value, and a value of the back-off timer. The rejection cause value at this time may be "S-NSSAI having reached the maximum number of UEs for each network slice (S-NSSAI not available due to maximum number of UEs reached)" and may be information indicating that the maximum number of UEs that can give notification of or allow the S-NSSAI associated with the rejection cause value as Allowed NSSAI has been reached.

Here, the rejection cause value may be a rejection cause value included in the rejected NSSAI. Furthermore, at this time, the value of the back-off timer may be information indicating a time period during which the UE is prohibited from transmitting an MM message using the one or more pieces of S-NSSAI associated with the value of the back-off timer and/or the S-NSSAI of the current PLMN or SNPN associated with one or more pieces of mapped S-NSSAI.

The fourth rejected NSSAI may be applied to the registered PLMN and/or EPLMN, may be applied to the registered SNPN and/or ESNPN, or may be applied to one or multiple PLMNs or SNPNs to which TAIs included in a TA list (a TAI list or a registration area) belong.

The UE and/or the NW may handle the fourth rejected NSSAI and the S-NSSAI included in the fourth rejected NSSAI as information for each access type.

In a case that the fourth rejected NSSAI is NSSAI transmitted from the NW to the UE, the fourth rejected NSSAI may be transmitted and/or received by using the rejected NSSAI IE or the Extended rejected NSSAI IE.

In a case that the first to fourth rejected NSSAIs are transmitted and/or received using the rejected NSSAI IE or the Extended rejected NSSAI IE, the rejected NSSAI IE and the Extended rejected NSSAI IE may include a list of rejected S-NSSAIs.

In a case that the first to fourth rejected NSSAIs are transmitted and/or received using the rejected NSSAI IE, the list of the rejected S-NSSAIs included in the rejected NSSAI IE may be one or more Rejected S-NSSAIs of the 5GS. In the Rejected S-NSSAI, the S-NSSAI (SST and/or SD) of the current PLMN or SNPN and a corresponding rejection cause value may be configured.

In a case that the first to fourth rejected NSSAIs are transmitted and/or received using the Extended rejected NSSAI IE, the list of the rejected S-NSSAIs included in the Extended rejected NSSAI IE may be a Partial extended rejected NSSAI list of the 5GS.

The list of the rejected S-NSSAIs includes a list of a first type not including the value of the back-off timer and a list of a second type including the value of the back-off timer applied to all of the S-NSSAIs included in the list of the rejected S-NSSAIs. In the Extended rejected NSSAI IE, one or more lists of the first type and/or one or more second lists may be configured.

In the list of the first type, information indicating that the list is of the first type and one or more Rejected S-NSSAIs of one or more 5GSs may be configured. In the Rejected S-NSSAI, the S-NSSAI (SST and/or SD) of the current PLMN or SNPN and a corresponding rejection cause value may be configured. In addition, in the Rejected S-NSSAI, the mapped S-NSSAI (SST and/or SD) may be configured.

The information indicating that the list is of the first type may mean that the list includes one or more S-NSSAIs not together with the value of a corresponding back-off timer. In other words, it may mean that the list does not include the value of the back-off timer corresponding to one or more S-NSSAIs included in the list.

In the list of the second type, information indicating that the list is of the second type, the back-off timer value, and one or more Rejected S-NSSAIs of the 5GS may be configured. In the Rejected S-NSSAI, the S-NSSAI (SST and/or SD) of the current PLMN or SNPN and a corresponding rejection cause value may be configured. In addition, in the Rejected S-NSSAI, the mapped S-NSSAI (SST and/or SD) may be configured.

The information indicating that the list is of the second type may be information meaning that the list includes one or more S-NSSAIs and the value of the back-off timer corresponding thereto and that the value of the back-off timer is adapted to all of the S-NSSAIs.

Note that the value of the back-off timer included in the list of the second type may be the value applied to all of the S-NSSAIs included in the same list of the second type.

The pending NSSAI may be pending NSSAI of the 5GS. The pending NSSAI may be NSSAI stored in the UE and/or the NW or may be NSSAI transmitted and/or received between the NW and the UE.

In a case that the pending NSSAI is NSSAI transmitted from the NW to the UE, the pending NSSAI may be transmitted and/or received using pending NSSAI IEs configured with one or more S-NSSAI IEs, and the S-NSSAI IEs may include S-NSSAI (SST and/or SD) and the mapped S-NSSAI (SST of the mapped HPLMN or HSNPN and/or SD of the mapped HPLMN or HSNPN) (if any. For example, at a time in a case that the UE performs roaming or in a case that the associated PLMN or SNPN is a VPLMN or VSNPN).

The pending NSSAI may be applied to all registered PLMNs or registered SNPNs, may be applied to the registered PLMNs and one or multiple EPLMNs of the registered PLMNs, or may be applied to the registered SNPNs and one or multiple ESNPN of the registered SNPNs.

The UE and/or the NW may handle the S-NSSAI included in the pending NSSAI as information regardless of the access type. In other words, the pending NSSAI may be information in common to 3GPP access and non-3GPP access.

The pending NSSAI is NSSAI including one or multiple pieces of S-NSSAI identifying slices for which the UE is pending the procedure. Specifically, while storing the pending NSSAI, the UE does not initiate the registration request procedure for the S-NSSAI included in the pending NSSAI or mapped S-NSSAI of the pending NSSAI.

In other words, the UE does not use the S-NSSAI included in the stored pending NSSAI during the registration procedure until NSSAA for the S-NSSAI included in the pending NSSAI is completed. The pending NSSAI is information regardless of the access type. Specifically, in a case that the UE stores the pending NSSAI, the UE does not attempt to transmit, either on 3GPP access or on non-3GPP access, a registration request message including the S-NSSAI included in the pending NSSAI.

During roaming (roaming scenario), the S-NSSAI included in the pending NSSAI stored in the UE may be the S-NSSAI of the HPLMN or the HSNPN. In other words, the pending NSSAI IE received by the UE from the VPLMN or VSNPN may include the S-NSSAI of the HPLMN or the SNPN. The pending NSSAI may be referred to as first pending NSSAI.

In other words, the UE storing the first pending NSSAI intends not to store the mapped S-NSSAI for the first pending NSSAI, and the S-NSSAI configured for the first pending NSSAI stored in the UE is the S-NSSAI of the HPLMN or the HSNPN, regardless of roaming or non-roaming being performed.

Note that, in a case that the first pending NSSAI is transmitted from the NW to the UE, that is, the UE receives the pending NSSAI from the NW, the pending NSSAI IE including the pending NSSAI may include the mapped S-NSSAI of the current S-NSSAI, or may include only the mapped S-NSSAI.

On the other hand, during roaming (roaming scenario), the S-NSSAI included in the pending NSSAI stored in the UE may be the S-NSSAI of the current PLMN (VPLMN) or SNPN (VSNPN). In other words, the pending NSSAI received by the UE from the VPLMN or VSNPN may include the S-NSSAI of the VPLMN or VSNPN. Such pending NSSAI may be referred to as second pending NSSAI.

In other words, at the time of roaming, there may be one or more pieces of mapped S-NSSAI with respect to the second pending NSSAI. The S-NSSAI included in the second pending NSSAI may be the S-NSSAI of the current PLMN or SNPN, regardless of roaming or non-roaming being performed.

In the present document, the term "pending NSSAI" may mean the first pending NSSAI, may mean the second pending NSSAI, may mean both of the pending NSSAIs, or may mean other pending NSSAI.

A tracking area is a single or multiple ranges that can be expressed using location information of the UE_A 10 managed by the core network. The tracking area may include multiple cells. Furthermore, the tracking area may be a range in which a control message such as paging is broadcast, or may be a range in which the UE_A 10 can move without performing a handover procedure. Furthermore, the tracking area may be a routing area, may be a location area, or may be any area similar to these. The tracking area may be hereinafter a Tracking Area (TA). The tracking area may be identified by a Tracking Area Identity (TAI) including a Tracking area code (TAC) and a PLMN.

The Registration area is a set of one or multiple TAs allocated to the UE by the AMF. Note that, while moving within one or multiple TAs included in a registration area, the UE_A 10 may be able to move without transmitting and/or receiving a signal for updating the tracking area. In other words, the registration area may be an information group indicating an area in which the UE_A 10 can move without performing a tracking area update procedure. The registration area may be identified with a TAI list including one or multiple TAIs.

A TAI included in the TAI list may belong to one PLMN or SNPN, or multiple PLMNs or SNPNs. In a case that multiple TAIs included in the TAI list belong to different PLMNs or SNPNs, the PLMNs or SNPNs may be EPLMNs or ESNPNs.

A UE ID is information for identifying the UE. Specifically, the UE ID may be a Subscription Concealed Identifier (SUCI), or a Subscription Permanent Identifier (SUPI), or a Globally Unique Temporary Identifier (GUTI), or an International Mobile Subscriber Identity (IMEI), or an IMEI Software Version (IMEISV), or a Temporary Mobile Subscriber Identity (TMSI), for example. Alternatively, the UE ID may be other information configured by an application or within the network. Moreover, the UE ID may be information for identifying the user.

Management of the maximum number of UEs connected to a slice is to manage and/or control the maximum number of UEs that can be registered with the network slice or S-NSSAI simultaneously, or management and/or control of the maximum number of UEs that can establish a PDU session using the network slice or S-NSSAI simultaneously. Management of the maximum number of UEs connected to a slice may be network slice admission control (NSAC) in the 5GS. NSAC may be expressed as slice admission control.

Management and/or control of the maximum number of UEs that can be simultaneously registered in a network slice or an S-NSSAI may be referred to as MM based slice admission control (Mobility management based slice admission control). Management and/or control of the maximum number of UEs that can establish a PDU session using a network slice or S-NSSAI simultaneously may be referred to as Session management (SM) based slice admission control. The slice admission control may mean Network Slice Admission Control (NSAC).

Here, the UE registered with the network slice or the S-NSSAI may refer to the S-NSSAI indicating the network slice included in allowed NSSAI for storage. An apparatus within a network, the apparatus supporting the function to manage the maximum number of UEs connected to a slice or the function to manage and/or control the maximum number of UEs that can be registered with a network slice or S-NSSAI simultaneously can store, for each piece of S-NSSAI, whether to require management of the maximum number of UEs connected to the slice and can further check, during the registration procedure, whether the number of registered UEs has reached a certain constant corresponding to the maximum number.

Furthermore, each apparatus supporting the function to manage the maximum number of UEs connected to a slice or the function to manage and/or control the maximum number of UEs that can be registered with the network slice or S-NSSAI simultaneously is good to be able to store the fourth rejected NSSAI. In the present document, the maximum number of UEs connected to a slice may be referred to as a maximum number of UEs connected for each slice, or a maximum number of UEs that can be registered with the network slice or the S-NSSAI, or a maximum number of UEs, or a fixed value.

### 2.6.1 Behavior of UE and/or NW with respect to equivalent SNPN

An equivalent SNPN will be described below. A behavior of the UE and/or the NW with respect to the equivalent NSSAI will be described.

First, in a case that the UE roams between SNPNs, the SNPNs may be classified into a Home SNPN (also referred to as an HSNPN) and a Visited SNPN (also referred to as a VSNPN). Note that, in a case that the UE does not roam between the SNPNs, the SNPNs may be handled as being the same as the Home SNPN.

The Home SNPN may be an SNPN in which the UE can be registered as a home. The Home SNPN may be an SNPN that the UE selects first in SNPN selection. The Home SNPN may be an SNPN in which at least a part of information included in an SNPN identity (also referred to as an SNPN ID) matches at least a part of information included in an IMSI of the UE. The Home SNPN may be an SNPN in which the MCC and the MNC included in a PLMN Identity (also referred to as a PLMN ID) included in an SNPN identity (also referred to as an SNPN ID) match the MCC and the MNC included in the IMSI of the UE.

The Visited SNPN may be an SNPN in which the UE can be registered as other than a home. The Visited SNPN may be an SNPN in which the UE is not registered as a home. The Visited SNPN may be an SNPN that the UE does not select first in SNPN selection. The Visited SNPN may be an SNPN in which at least a part of information included in the SNPN identity (also referred to as an SNPN ID) does not match at least a part of information included in the IMSI of the UE. The Visited SNPN may be an SNPN in which the MCC and the MNC included in the PLMN Identity (also referred to as a PLMN ID) included in the SNPN identity (also referred to as an SNPN ID) do not match the MCC and the MNC included in the IMSI of the UE.

An equivalent HSNPN (also referred to as an equivalent Home SNPN or an EHSNPN) may be an SNPN considered to be equivalent to the current SNPN (here, the Home SNPN (also referred to as an HSNPN)) in SNPN selection, and/or cell selection, and/or cell reselection. The equivalent HSNPN may be one or more SNPNs included in an equivalent HSNPN list or may be one or more SNPNs not included in an equivalent VSNPN list.

An equivalent VSNPN (also referred to as an equivalent Visited SNPN or an EVSNPN) may be an SNPN considered to be equivalent to the current SNPN (here, the Visited SNPN (also referred to as a VSNPN)) in SNPN selection, and/or cell selection, and/or cell reselection. The equivalent VSNPN may be one or more SNPNs included in the equivalent VSNPN list or may be one or more SNPNs not included in the equivalent HSNPN list.

An equivalent SNPN (also referred to as an ESNPN) may be a concept including the equivalent HSNPN and/or the equivalent VSNPN. In other words, the ESNPN may indicate the equivalent HSNPN and/or the equivalent VSNPN.

Next, the equivalent HSNPN list (also referred to as an EHSNPN list) will be described. In order to be able to provide multiple HSNPN codes (also referred to as a Home SNPN code, a Home SNPN identity, or a Home SNPN ID), an SNPN code (also referred to as an SNPN identity or an SNPN ID) present in the EHSNPN list may be replaced by an HSNPN code obtained from the IMSI during or for SNPN selection. The EHSNPN list may be stored in the USIM. The EHSNPN list may include the HSNPN code obtained from the IMSI. In a case that the HSNPN code obtained from the IMSI is not present in the EHSNPN list, the HSNPN code may be handled as the Visited SNPN during or for SNPN selection.

Next, the equivalent VSNPN list (also referred to as an EVSNPN list) will be described. In order to be able to provide multiple VSNPN codes (also referred to as a Visited SNPN code, a Visited SNPN identity, or a Visited SNPN ID), the SNPN code (also referred to as the SNPN identity or the SNPN ID) present in the EVSNPN list may be replaced by a VSNPN code obtained from the IMSI during or for SNPN selection. The EVSNPN list may be stored in the USIM. The EVSNPN list may include the HVNPN code obtained from the IMSI. In a case that the VSNPN code obtained from the IMSI is not present in the EVSNPN list, the VSNPN code may be handled as the Home SNPN during or for SNPN selection.

An equivalent SNPN list (also referred to as an ESNPN list) may be a concept including the EHSNPN list and/or the EVSNPN list. In other words, the ESNPN list may indicate the EHSNPN list and/or the EVSNPN list.

The UE may store the equivalent SNPN list transmitted from the network. For example, in a case that the UE receives the MM message (for example, the registration request message, the configuration update command, or the like) transmitted by the AMF, the UE may store the equivalent SNPN list included in the MM message.

The UE may treat the equivalent SNPN as being equivalent to each other with the current SNPN (Home SNPN or Visited SNPN) at the time of SNPN selection, cell selection, and/or cell reselection. In other words, in a case that the UE cannot select the Home SNPN at the time of SNPN selection, the UE may preferentially select the equivalent SNPN (the equivalent Home SNPN) treated as equivalent to the Home SNPN. In a case that the UE cannot select the Home SNPN at the time of cell selection and/or cell reselection in the SNPN, the UE may preferentially select the equivalent SNPN (the equivalent Home SNPN) treated as equivalent to the Home SNPN.

The UE may update or delete the equivalent SNPN list every time the registration procedure ends.

The UE may maintain the equivalent SNPN list in a case that power is turned off. This may be for subsequent use in SNPN selection in a case that the power is turned on.

The UE may delete the equivalent SNPN list in a case that the USIM is removed from the UE or in a case that the UE registered for the emergency service enters 5GMM-DEREGISTERED.

The AMF may include the equivalent SNPN list in the registration accept message in the registration procedure. The equivalent SNPN list may include one or more SNPN codes (also referred to as SNPN IDs) including a combination of a PLMN code (also referred to as a PLMN ID) and the NID. In a case that the equivalent SNPN list is included in the registration accept message, the UE may update the stored equivalent SNPN list with the received list. In a case that the equivalent SNPN list is not included in the registration accept message, the UE may delete the stored equivalent SNPN list.

In a case that the UE performs the registration procedure and the procedure is not performed for the emergency service, the UE may delete the SNPN code (also referred to as the SNPN ID) present in a permanently forbidden SNPNs list or a temporarily forbidden SNPNs list from the equivalent SNPN list.

In the registration procedure initiated by the UE, in a case that the UE receives a registration reject message without integrity protection including a 5GMM cause value (5GSM cause value) indicating illegal UE, illegal ME, 5GS services not allowed, Tracking area not allowed, Roaming not allowed in this tracking area, No suitable cells in tracking area, N1 mode not allowed, Non-3GPP access to 5GCN not allowed (alternatively, it may be expressed that connection from non-3GPP access to 5GCN is not allowed, or the like), Temporarily not authorized for this SNPN, or Permanently not authorized for this SNPN, the running timer T3510 or timer T3517 may be stopped, and in a case that a timer T3247 is not running, the timer T3247 may be started to delete the equivalent SNPN list.

In the service request procedure initiated by the UE, in a case that the UE receives a service reject message without integrity protection including a 5GMM cause value (5GSM cause value) indicating illegal UE, illegal ME, 5GS services not allowed, Tracking area is not allowed, Roaming not allowed in this tracking area, No suitable cells in tracking area, N1 mode not allowed, Non-3GPP access to 5GCN not allowed (alternatively, it may be expressed that connection from non-3GPP access to 5GCN is not allowed, or the like), Temporarily not authorized for this SNPN, or Permanently not authorized for this SNPN, the running timer T3510 or timer T3517 may be stopped, and in a case that a timer T3247 is not running, the timer T3247 may be started to delete the equivalent SNPN list.

In the de-registration procedure initiated by the network, in a case that the UE receives a de-registration request message without integrity protection including a 5GMM cause value (5GSM cause value) indicating illegal UE, illegal ME, 5GS services not allowed, Tracking area not allowed, Roaming not allowed in this tracking area, No suitable cells in tracking area, N1 mode not allowed, Non-3GPP access to 5GCN not allowed (alternatively, it may be expressed that connection from non-3GPP access to 5GCN is not allowed, or the like), Temporarily not authorized for this SNPN, or Permanently not authorized for this SNPN, the equivalent SNPN list may be deleted.

The UE may include and transmit information indicating whether the UE supports the equivalent SNPN or the equivalent SNPN list in the registration request message. The AMF may include and transmit information indicating whether the network supports the equivalent SNPN or the equivalent SNPN list in the registration accept message or the registration reject message. Specifically, based on the information indicating whether the UE supports the equivalent SNPN or the equivalent SNPN list included in the registration request message received from the UE, the AMF may determine whether to include the information indicating whether the network supports the equivalent SNPN or the equivalent SNPN list, and the equivalent SNPN list in the registration accept message or the registration reject message to be transmitted to the UE.

For example, in a case that the registration request message includes information indicating that the UE supports the equivalent SNPN or the equivalent SNPN list, and in a case that the AMF supports the equivalent SNPN list, and the AMF allows the registration request, the AMF may transmit, to the UE, the registration accept message including information indicating that the network supports the equivalent SNPN or the equivalent SNPN list, and including the equivalent SNPN list.

In a case that the registration request message includes information indicating that the UE supports the equivalent SNPN or the equivalent SNPN list, and in a case that the AMF does not support the equivalent SNPN list, and the AMF allows the registration request, the AMF may transmit, to the UE, the registration accept message including information indicating that the network does not support the equivalent SNPN or the equivalent SNPN list, and not including the equivalent SNPN list.

In a case that the registration request message includes information indicating that the UE supports the equivalent SNPN or the equivalent SNPN list, and in a case that the AMF supports the equivalent SNPN list, and the AMF does not allow the registration request, the AMF may transmit, to the UE, the registration reject message including information indicating that the network supports the equivalent SNPN or the equivalent SNPN list, and including the equivalent SNPN list.

In a case that the registration request message includes information indicating that the UE supports the equivalent SNPN or the equivalent SNPN list, and in a case that the AMF does not support the equivalent SNPN list, and the AMF does not allow the registration request, the AMF may transmit, to the UE, the registration reject message including information indicating that the network does not support the equivalent SNPN or the equivalent SNPN list, and not including the equivalent SNPN list.

The UE may recognize whether the network supports the equivalent SNPN or the equivalent SNPN list based on the information indicating whether the network supports the equivalent SNPN or the equivalent SNPN list included in the registration accept message or the registration reject message received from the AMF.

The UE may recognize the equivalent SNPN to the current SNPN based on the equivalent SNPN list included in the registration accept message or the registration reject message received from the AMF.

### 2.7. Description of Identification Information in Present Embodiment

Next, identification information transmitted and/or received and stored and managed by apparatuses will be described in the present embodiment.

The first identification information is information indicating whether the UE has a capability of storing the first NSSAI, and/or information indicating whether the UE includes a function of storing condition information associated with S-NSSAI included in the first NSSAI, and information indicating whether the UE has a control function based on the condition information. The first identification information may be capability information of the UE.

The first identification information may be information indicating that the UE includes a function of storing condition information associated with the S-NSSAI and/or controlling the condition information based on the storage. Note that the first identification may be individually provided for each type of condition information.

Specifically, the first identification information may be information indicating whether the UE is equipped with a function of storing location-related condition information associated with the S-NSSAI and/or controlling the condition information based on the storage, information indicating whether the UE is equipped with a function of storing time-related condition information associated with the S-NSSAI and/or controlling the condition information based on the storage, or both types of information.

In this case, the information indicated by the first identification information may be indicated by multiple pieces of identification information. Specifically, transmission and/or reception of the first identification information may mean transmission and/or reception of the second identification information indicating whether the UE includes a function of storing and/or controlling based on storage the location-related condition information associated with the S-NSSAI and/or the third identification information indicating whether the UE includes a function of storing and/or controlling based on storage the time-related condition information associated with the S-NSSAI.

The tenth identification information is an NSSAI IE (Information Element) including the first NSSAI. Note that the tenth identification information may include at least one piece of identification information out of the eleventh identification information to the fourteenth identification information.

Specifically, the tenth identification information may include one or multiple pieces of eleventh identification information and/or one or multiple pieces of twelfth identification information and/or one or multiple pieces of thirteenth identification information and/or one or multiple pieces of fourteenth identification information.

The eleventh identification information may be information indicating S-NSSAI associated with identification information indicating a specific condition (a condition for the UE). The specific condition may be a condition indicated by the twelfth identification information and/or the thirteenth identification information.

The eleventh identification information may be an S-NSSAI IE and may include S-NSSAI of the current PLMN or SNPN and/or S-NSSAI of the HPLMN or HSNPN to which the above-described S-NSSAI is mapped. The S-NSSAI of the HPLMN or HSNPN to which the S-NSSAI the current PLMN or SNPN is mapped may be mapped S-NSSAI.

The S-NSSAI indicated by the eleventh identification information may be the same as or different from the S-NSSAI requested by the UE. In other words, the eleventh identification information may be information included in the requested NSSAI IE transmitted from the UE, or may be information not included in the requested NSSAI IE.

In a case that the eleventh identification information is associated with the twelfth identification information, in the condition indicated in the twelfth identification information, the UE may recognize the S-NSSAI indicated in the eleventh identification information as available S-NSSAI and/or allowed S-NSSAI. The twelfth identification information is information indicating a condition for the UE under which the UE can use the associated S-NSSAI. The condition that is indicated in the twelfth identification information and under which the S-NSSAI is available may be expressed as a first condition.

In a case that the condition for the UE matches the first condition, each apparatus may recognize the state in which the UE is allowed to transmit the registration request message and/or the PDU session establishment request message using the S-NSSAI with which the first condition is associated.

In other words, each apparatus may recognize that the UE is allowed to request registration using the S-NSSAI with which the first condition is associated and/or to request establishment of a PDU session using the S-NSSAI with which the first condition is associated while the UE is in the first condition, and/or in a case that the UE enters the first condition, and/or in a case that the condition for the UE matches the first condition.

In yet other words, each apparatus may recognize that the UE is not allowed to request registration using the S-NSSAI with which the first condition is associated and/or to request establishment of a PDU session using the S-NSSAI with which the first condition is associated in a case that the UE is not in and/or exits the first condition, and/or the condition for the UE does not match the first condition.

In other words, in a case that the Allowed NSSAI and/or the configured NSSAI includes the S-NSSAI associated with the first condition, the UE may include and transmit the S-NSSAI in the registration request message in a case that the S-NSSAI matches the first condition, but should not include and transmit the S-NSSAI in the registration request message in a case that the S-NSSAI does not match the first condition.

Similarly, in a case that the Allowed NSSAI includes the S-NSSAI associated with the first condition, the UE may transmit the PDU session establishment request message together with the S-NSSAI in a case that the S-NSSAI matches the first condition, but should not transmit the PDU session establishment request message together with the S-NSSAI in a case that the S-NSSAI does not match the second condition.

On the other hand, in a case that the eleventh identification information is associated with the thirteenth identification information, then in the condition indicated in the thirteenth identification information, the UE may recognize the S-NSSAI indicated in the eleventh identification information as unavailable S-NSSAI and/or disallowed S-NSSAI and/or rejected S-NSSAI. The condition indicated in the thirteenth identification information under which the S-NSSAI is not allowed to be used may be expressed as a second condition.

In a case that the condition for the UE matches the second condition, each apparatus may recognize the state in which the UE is allowed to transmit the registration request message and/or the PDU session establishment request message using the S-NSSAI with which the first condition is associated.

In other words, each apparatus may recognize that the UE is not allowed to request and/or is prohibited from requesting registration using the S-NSSAI with which the second condition is associated, and/or is not allowed to request and/or is prohibited from requesting establishment of a PDU session using the S-NSSAI with which the first condition is associated, while the UE is in the second condition, and/or in a case that the UE enters the second condition, and/or in a case that the condition for the UE matches the second condition.

In yet other words, each apparatus may recognize that the second condition is allowed and/or not prohibited from requesting registration using the associated S-NSSAI and/or to request establishment of a PDU session using the associated S-NSSAI in a case that the UE is not in and/or exits the second condition, and/or the condition for the UE does not match the second condition.

In other words, in a case that the Allowed NSSAI and/or the configured NSSAI includes the S-NSSAI associated with the second condition, the UE cannot include and transmit the S-NSSAI in the registration request message in a case that the S-NSSAI matches the second condition, but may include and transmit the S-NSSAI in the registration request message in a case that the S-NSSAI does not match the second condition.

Similarly, in a case that the Allowed NSSAI includes the S-NSSAI associated with the second condition, the UE cannot transmit the PDU session establishment request message together with the S-NSSAI in a case that the S-NSSAI matches the second condition, but may transmit the PDU session establishment request message together with the S-NSSAI in a case that the S-NSSAI does not match the second condition.

The twelfth identification information includes information that indicates one or multiple conditions associated with the S-NSSAI indicated by the associated one or multiple pieces of eleventh identification information. The information indicates one or multiple conditions in which the S-NSSAI is available by the UE and/or is allowed to be used by the UE. The twelfth identification information may include one or multiple information related to locations and/or information related to time. In other words, the condition information included in the twelfth identification information may be location-related information and/or time-related information.

The twelfth identification information may be expressed as condition information. In a case that the twelfth identification information includes information indicating one or multiple conditions, each piece of information included in the twelfth identification information may be expressed as condition information. In other words, the condition information in the present disclosure may be information indicating one or multiple conditions.

Here, the availability and/or allowance of the S-NSSAI may mean that transmission of the registration request message including the S-NSSAI in the requested NSSAI IE is allowed and/or transmission of the PDU session establishment request message for establishing a PDU session using the S-NSSAI is allowed.

In a case that the condition for the UE matches the first condition indicated by the twelfth identification information, each apparatus may recognize that the UE can use and/or is allowed to use the S-NSSAI indicated by the associated one or multiple pieces of eleventh identification information.

The thirteenth identification information includes information that indicates one or multiple conditions under which the associated UE cannot use and/or is not allowed to use the S-NSSAI indicated by the associated one or multiple pieces of eleventh identification information, and/or the use of the S-NSSAI by the UE is rejected. The thirteenth identification information may include information related to one or multiple locations and/or information related to time. In other words, the condition information included in the thirteenth identification information may be location-related information and/or time-related information.

The thirteenth identification information may be expressed as condition information. In a case that the thirteenth identification information includes information indicating one or multiple conditions, each piece of information included in the thirteenth identification information may be expressed as condition information. In other words, the condition information in the present disclosure may be information indicating one or multiple conditions.

In a case that the condition for the UE matches the condition indicated in the thirteenth identification information, each apparatus may recognize that the UE cannot use and/or is not allowed to use the S-NSSAI indicated by the associated one or multiple pieces of eleventh identification information, and/or the use of the S-NSSAI by the UE is rejected.

The TAI included in the TAI list included in the twelfth identification information and the thirteenth identification information may or may not be included in the TAI list indicating the registration area, or may be included in the TAI list of the registration area.

The location-related information may be location-related condition information, and may be a TAI list in which the TAI is configured and/or area information.

The area information is information that is not mapped to the area information identified by the tracking area. In other words, the area information is location-related information that is unrelated to the TA. The area information may be information associated with a service, and may be expressed as Area of Service.

The time-related information may be information indicating time-related conditions. The time-related information may be a timer value or may be information indicating a specific period.

In a case that the time-related information included in the twelfth identification information is a timer value, this may mean that, while the timer is counting using the timer value, the UE can use and/or is allowed to use the S-NSSAI indicated by the one or multiple pieces of eleventh identification information with which the twelfth identification information is associated. The timer using the timer value included in the twelfth identification information may be expressed as a timer for restricting the use of the S-NSSAI.

On the other hand, in a case that the time-related information included in the thirteenth identification information is a timer value, this may mean that, while the timer is counting using the timer value, the UE cannot use and/or is not allowed to use the S-NSSAI indicated by the one or multiple pieces of eleventh identification information with which the thirteenth identification information is associated, and/or the use of the S-NSSAI by the UE is rejected. The timer using the timer value included in the thirteenth identification information may be expressed as a timer for restricting the use of the S-NSSAI.

In a case that the time-related information included in the twelfth identification information indicates a period of time, this may mean that, for the period of time indicated in the twelfth identification information, the UE can use and/or is allowed to use one or multiple pieces of the S-NSSAI indicated by the eleventh identification information with which the twelfth identification information is associated.

On the other hand, in a case that the time-related information the time-related information included in the thirteenth identification information indicates a period of time, this may mean that, during the period of time indicated in the thirteenth identification information, the UE cannot use and/or is not allowed to use the S-NSSAI indicated by the one or multiple eleventh identification information with which the thirteenth identification information is associated, and/or the use of the S-NSSAI by the UE is rejected.

In a case that the twelfth identification information and/or the thirteenth identification information includes information indicating multiple conditions, the condition indicated by each piece of identification information may mean that the conditions indicated by all pieces of information included in each piece of identification information have been achieved.

Specifically, in a case that the twelfth identification information/the thirteenth identification information, the time-related information, and the location-related information are included, the condition may be that the twelfth identification information/the thirteenth identification information indicates a state in which the UE is positioned at the location indicated by the location-related information during the period indicated by the time-related information and/or during running of the timer.

In other words, in a case that the twelfth identification information/the thirteenth identification information, the time-related information, and the location-related information are included, even during the period indicated by the time-related information and/or during running of the timer, the state in which the UE is not positioned at the location indicated by the location-related information need not be the condition indicated by the twelfth identification information/the thirteenth identification information.

Alternatively, in a case that information indicating multiple conditions is included in the twelfth identification information and/or the thirteenth identification information, the condition indicated by each piece of identification information may mean that the condition indicated by each piece of identification information achieves the condition indicated by at least one piece of information included in each piece of identification information.

Specifically, in a case that the twelfth identification information/the thirteenth identification information, the time-related information, and the position-related information are included, during the period indicated by the time-related information and/or during running of the timer, the condition may be as indicated by the twelfth identification information/the thirteenth identification information even in the state in which the UE is not positioned at the location indicated by the position-related information.

The fourteenth identification information is information indicating that the S-NSSAI indicated by the associated eleventh identification information is information indicating rejection due to a specific condition, and may be a rejection cause value. The S-NSSAI indicated in the eleventh identification information associated with the fourteenth identification information may be expressed as the S-NSSAI included in the first NSSAI and/or the first S-NSSAI.

The fourteenth identification information may be transmitted and/or received between the apparatuses by using the rejected NSSAI IE or the Extended rejected NSSAI IE.

The first NSSAI is NSSAI that includes one or multiple pieces of S-NSSAI associated with a particular condition. The particular condition may be a condition under which corresponding one or multiple pieces of S-NSSAI can be used and/or are allowed to be used, or a condition under which the corresponding one or multiple pieces of S-NSSAI cannot be used and/or are not allowed to be used, and/or the use of S-NSSAI is rejected.

In other words, the first NSSAI and/or the first S-NSSAI included in the first NSSAI may be NSSAI and/or S-NSSAI that can be used under the associated condition, or may be NSSAI and/or S-NSSAI that is not allowed to be used under the associated condition.

The first NSSAI that is a set of pieces of S-NSSAI and/or mapped S-NSSAI that can be used under the associated condition may be represented as second NSSAI, and the first NSSAI that is a set of pieces of S-NSSAI and/or mapped S-NSSAI that are not allowed to be used under the associated condition may be represented as third NSSAI. Note that, unless otherwise specified herein, the first NSSAI may be the second NSSAI and/or the third NSSAI.

The first NSSAI may be Configured NSSAI, and/or Allowed NSSAI, and/or Rejected NSSAI, and/or pending NSSAI, or may be any other NSSAI.

The first NSSAI and/or the first S-NSSAI included in the first NSSAI may be transmitted and/or received between the UE and the NW using the first NSSAI IE. The first NSSAI Information Element (IE) may be a configured NSSAI IE, and/or an allowed NSSAI IE, and/or a rejected NSSAI IE, and/or an extended Rejected NSSAI IE, and/or a pending NSSAI IE, or may be any other IE.

The first NSSAI and/or the condition information associated with the first NSSAI (information indicating the first condition and/or the second condition) may be information preset for the UE, or may be information transmitted from the core network to the UE.

The UE may store the first NSSAI including the S-NSSAI of the current PLMN or SNPN, and store the S-NSSAI of the HPLMN or HSNPN in the set of pieces of mapped S-NSSAI for the first NSSAI. Alternatively, the S-NSSAI of the HPLMN or the HSNPN may be stored in the first NSSAI.

For the S-NSSAI and/or the mapped S-NSSAI included in the first NSSAI, each apparatus may be controlled such that NSAC is not performed. In other words, the AMF, the NSACF, and/or the like may perform control such that the S-NSSAI and/or the mapped S-NSSAI included in the first NSSAI is not a target of the NSAC.

### 3. Description of Procedures Used in Each Embodiment

Next, procedures used in each embodiment will be described. Note that the procedures used in each embodiment include a Registration procedure and a Network-initiated de-registration procedure. Is included. Each procedure will be described below.

Note that, in each embodiment, a case that each of the HSS and the UDM, the PCF and the PCRF, the SMF and the PGW-C, and the UPF and the PGW-U is configured as a single apparatus (that is, the same physical hardware, or the same logical hardware, or the same software) as illustrated in FIG. 2 will be described as an example. However, the details described in the present embodiment can also be applied to a case that each of the combinations is configured as different apparatuses (that is, different pieces of physical hardware, or different pieces of logical hardware, or different pieces of software). For example, between the apparatuses/functions, data may be directly transmitted and/or received, data may be transmitted and/or received via an N26 interface between the AMF and the MME, or data may be transmitted and/or received via the UE.

### 3.1. Registration Procedure

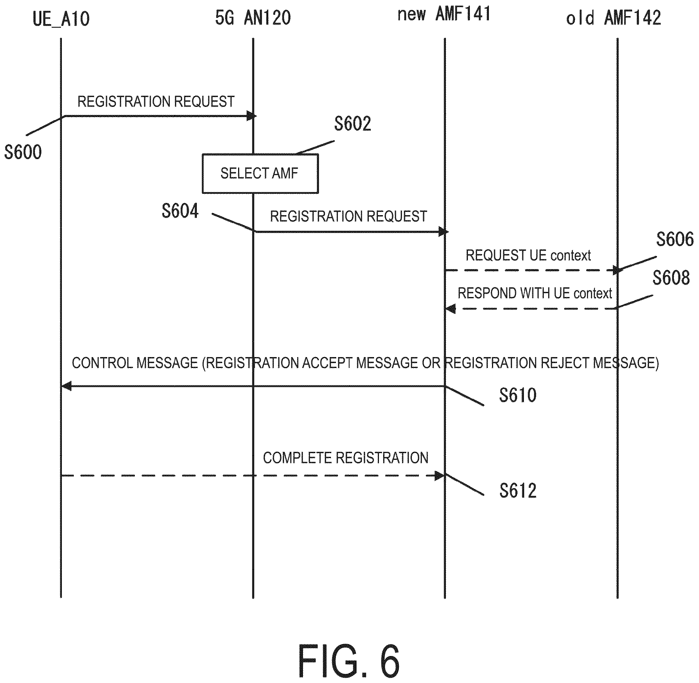

First, a Registration procedure will be described with reference to FIG. 6. Hereinafter, the registration procedure will be referred to as the present procedure. The registration procedure is a procedure for registration with the access network_B, and/or the core network_B, and/or the DN initiated by the UE. In a case that the UE is in a state of not being registered with the network, for example, the UE can perform the present procedure at any timing, for example, a power input time. In other words, the UE can initiate the present procedure at any timing as long as the UE is in the deregistered state (5GMM-DEREGISTERED state). In addition, each apparatus (in particular, the UE and the AMF) can transition to the registered state (5GMM-REGISTEDED state), based on completion of the registration procedure. Note that each registered state may be managed by each apparatus for each access. Specifically, each apparatus may independently manage the registration state (registered state or deregistered state) for 3GPP access and the registration state for non-3GPP access.

In addition, the registration procedure may be a procedure for updating position registration information of the UE on the network, and/or periodically provide notification of the state of the UE from the UE to the network, and/or updating a specific parameter related to the UE on the network.

The UE may initiate the registration procedure in a case that the UE has had mobility across tracking areas (TAs). In other words, the UE may initiate the registration procedure in a case that the UE has moved to a TA that is different from the TA indicated by a TA list (TAI list or registration area) held by the UE. In addition, the UE may initiate the present procedure in a case that a running back-off timer or another timer has expired. In addition, the UE may initiate the registration procedure in a case that a context of each apparatus needs to be updated due to disconnection and/or invalidation of a PDU session. Furthermore, in a case that there has been a change in capability information and/or a preference, related to PDU session establishment of the UE, the UE may initiate the registration procedure. In addition, the UE may periodically initiate the registration procedure. Furthermore, the UE may initiate the registration procedure based on completion of the UE configuration update procedure (Generic UE configuration update procedure), or based on completion of the registration procedure, or based on completion of the PDU session establishment procedure, or based on completion of the PDU session management procedure, or based on information received from the network in each procedure, or based on expiry or stop of the back-off timer. Note that the UE is not limited to this configuration, and can perform the registration procedure at any timing.

For example, in a case that the UE enters the condition indicated by the first condition information with which the S-NSSAI included in the first NSSAI stored in the UE is associated, and/or in a case that the UE exits the second condition with which the S-NSSAI included in the first NSSAI stored in the UE is associated, UE_A 10 may transmit the registration request message and/or initiate the registration procedure.

Note that, in a case that information indicating multiple conditions is included in the condition information with which the S-NSSAI included in the first NSSAI stored in the UE is associated, the UE may consider all the conditions or at least one condition.

In other words, in a case that the condition information includes information indicating multiple conditions, the UE may recognize, as the condition indicated by the condition information, a state that satisfies the conditions indicated by the information indicating all the conditions.

Specifically, in a case that the condition information is configured with location-related information and time-related information, a state in which the condition indicated by the location-related information matches the condition for the UE and the condition indicated by the time-related information further matches the condition for the UE may mean that the condition for the UE matches and/or has entered and/or is in the condition indicated by the condition information.

In a case that the condition information is configured with location-related information and time-related information, a state in which at least one of the condition indicated by the location-related information and the condition indicated by the time-related information does not match the condition for the UE may mean that the condition for the UE the condition for the UE does not match, and/or has exited, and/or is out of the condition indicated by the condition information.

In other words, in a case that the condition information includes information indicating multiple conditions, and that the condition for the UE matches and/or do not match the conditions indicated by all pieces of information included in the condition information, the UE may initiate the registration request procedure by including, in the requested NSSAI IE, the S-NSSAI and/or the NSSAI associated with the condition information and transmitting the registration request message.

In a case that the condition information includes information indicating multiple conditions, and that the condition information does not match any of the conditions indicated by the information included in the condition information, the UE may initiate the registration request procedure by including, in the requested NSSAI IE, one or multiple pieces of S-NSSAI and/or NSSAI associated with the condition information and transmitting the registration request message.

Note that the above-described procedure for the UE to transition from a state of not being registered with the network to a state of being registered with the network may be considered to be an initial registration procedure or a registration procedure for initial registration, and the registration procedure performed for the UE being registered with the network may be considered to be a registration procedure for mobility and periodic registration update or a mobility and periodic registration procedure.

Furthermore, the registration procedure for mobility and periodic registration update may be a procedure independent of the registration procedure for mobility registration update and the registration procedure for periodic registration update.

A new AMF 141 in FIG. 6 indicates an AMF with which the UE_A 10 is registered through the present procedure, and an old AMF 142 means an AMF with which the UE has been registered with a procedure before the present procedure. In a case that no change in AMF occurs in the present procedure, an interface between the old AMF 142 and the new AMF 141 and a procedure between the old AMF 142 and the new AMF 141 do not occur, and the new AMF 141 may be the same apparatus as the old AMF 142. In the present embodiment, a description of the AMF may mean the new AMF 141, the old AMF 142, or both. Note that the new AMF 141 and the old AMF 142 may be AMFs 140.

First, the UE_A 10 initiates the registration procedure by transmitting a Registration request message to the new AMF 141 (S600), (S602), and (S604). Specifically, the UE transmits an RRC message including the registration request message to the 5G AN 120 (or the gNB) (S600). Moreover, the registration request message is a NAS message transmitted and/or received over the N1 interface. In addition, the RRC message may be a control message transmitted and/or received between the UE and the 5G AN 120 (or the gNB). In addition, the NAS message is processed in the NAS layer, and the RRC message is processed in the RRC layer. Note that the NAS layer is a layer higher than the RRC layer.

Here, the UE_A 10 can include and transmit at least the first identification information in the registration request message and/or the RRC message. Furthermore, the UE_A 10 may include identification information indicating the type of the present procedure in the registration request message and/or the RRC message and transmit the identification information.

Here, the identification information indicating the type of the present procedure may be a 5GS registration type IE, and may be information indicating that the present procedure is a registration procedure for initial registration, mobility registration updating, periodic registration updating, emergency registration, or SNPN onboarding service (SNPN onboarding registration).

In other words, in a case where the present procedure is a registration procedure for initial registration, the UE_A 10 may transmit a registration request message including a 5GS registration type IE indicating initial registration. In a case that the present procedure is a registration procedure for updating registration information accompanying mobility, the UE_A 10 may transmit a registration request message including a 5GS registration type IE indicating mobility registration updating. In a case that the present procedure is a registration procedure for periodic registration information updating, the UE_A 10 may transmit the registration request message including the 5GS registration type IE indicating periodic registration updating. In a case that the present procedure is registration at the time of emergency, the UE_A 10 may transmit a registration request message including a 5GS registration type IE indicating emergency registration. In a case that the present procedure is a registration procedure for onboarding services in SNPN, the UE_A 10 may transmit a registration request message including a 5GS registration type IE indicating SNPN onboarding registration.

The UE_A 10 may include UE capability information in a registration request message to notify the network of the functions supported by the UE_A 10. Here, the UE capability information may be a 5G MM capability IE of the 5GS. The first identification information may be information included in the 5G MM capability IE of the 5GS.

The UE_A 10 may include and transmit the identification information and/or IEs in a control message that is different from the above messages, for example, a control message of a lower layer than the RRC layer (e.g., a MAC layer, an RLC layer, or a PDCP layer). Note that the UE_A 10 may indicate that the UE_A 10 supports each function, may indicate a request of the UE, or may indicate both, by transmitting these pieces of identification information. In addition, in a case that multiple pieces of identification information are transmitted and/or received, two or more pieces of identification information of these pieces of identification information may be configured as one or multiple pieces of identification information. Note that information indicating support of each function and information indicating a request for use of each function may be transmitted and/or received as the same piece of identification information, or may be transmitted and/or received as different pieces of identification information.

The UE_A 10 may transmit capability information indicating that the UE_A 10 supports the function for management of the maximum number of UEs connected to a slice, in a case of having the function of the management of the maximum number of UE connected to a slice or in a case of requesting at least one piece of S-NSSAI that requires management for the management of the maximum number of UE connected to a slice. By transmitting the capability information, the UE_A 10 may notify the network that the UE_A 10 includes a function of storing the fourth rejected NSSAI.

Furthermore, in a case that the UE_A 10 includes the NSSAA function, or requests at least one piece of S-NSSAI for identifying a slice that requires NSSAA and/or S-NSSAI associated as mapped S-NSSAI by the S-NSSAI for identifying a slice that requires NSSAA, the UE_A 10 may include and transmit capability information indicating that the UE_A 10 supports the NSSAA function in the registration request message. By transmitting the capability information indicating that the UE_A 10 supports the NSSAA function, the UE may request the network to treat the UE as UE with the NSSAA function and to perform an authentication and authorization procedure based on the NSSAA function in the procedure related to the UE.

In a case that the UE stores "allowed NSSAI associated with the PLMN or SNPN requested by the UE and the access type requested by the UE", and/or that the UE stores "configured NSSAI for the requested PLMN or SNPN", and/or that the UE stores "default configured NSSAI", and/or that the UE stores the "first NSSAI" and the first condition with which the S-NSSAI included in the "first NSSAI" is associated matches the condition for the UE, and/or that the UE stores the "first NSSAI" and the second condition with which the S-NSSAI included in the "first NSSAI" is associated does not match the condition for the UE, the UE may include a requested NSSAI IE in the registration request message and transmit the message to the requested PLMN or SNPN.

The requested NSSAI IE may include a requested NSSAI configured with S-NSSAI (SST and/or SD) of the requested PLMN or SNPN and "one or more pieces of mapped S-NSSAI with respect to the requested NSSAI" configured with S-NSSAI (SST and/or SD) of an HPLMN or HSNPN.

In other words, while the UE is non-roaming, the UE may include the requested NSSAI in the registration request message and transmit the message, and while the UE is roaming, the UE may include and transmit the requested NSSAI and one or more pieces of mapped S-NSSAI with respect to the requested NSSAI in the registration request message.

Note that the UE may include the requested NSSAI in the registration request message except for the case that the present procedure is a registration procedure for onboarding services in SNPN.

Alternatively, in a case that the UE stores "allowed NSSAI associated with a PLMN that is different from the PLMN requested by the UE or an SNPN that is different from the SNPN requested by the UE, and the access type requested by the UE," and a case that the allowed NSSAI or TAI included in a registration area associated with the S-NSSAI included in the allowed NSSAI belongs to the PLMN or SNPN requested by the UE, the UE may include the requested NSSAI in the registration request message and transmit the message to the requested PLMN or SNPN.

The UE_A 10 may determine information included in the requested NSSAI based on one or multiple pieces of NSSAI stored in the UE. The one or multiple pieces of NSSAI stored in the UE may be, for example, allowed NSSAI associated with the requested PLMN or SNPN and the requested access type, and/or one or more pieces of mapped S-NSSAI with respect to the allowed NSSAI, and/or configured NSSAI associated with the requested PLMN or SNPN, and/or one or more pieces of mapped S-NSSAI with respect to the configured, and/or default configured NSSAI, and/or rejected NSSAI associated with the requested PLMN or SNPN, and/or one or more pieces of mapped S-NSSAI with respect to the rejected NSSAI. Additionally or alternatively, the one or multiple pieces of NSSAI stored in the UE stores may be pending NSSAI associated with the requested PLMN or SNPN, or one or more pieces of mapped S-NSSAI with respect to the pending NSSAI.

Additionally or alternatively, the one or multiple pieces of NSSAI the UE stores may be allowed NSSAI associated with a PLMN or SNPN other than the PLMN or SNPN requested by the UE and the access type requested by the UE, and/or one or more pieces of mapped S-NSSAI with respect to the allowed NSSAI, and/or second rejected NSSAI associated with a PLMN or SNPN other than the requested PLMN or SNPN, and the current registration area, and/or one or more pieces of mapped S-NSSAI with respect to the second rejected NSSAI. Furthermore, the UE_A 10 may also store the mapped S-NSSAI of the S-NSSAI included in each piece of the NSSAI the UE stores. A set of the mapped S-NSSAI may be expressed as one or more pieces of mapped S-NSSAI with respect to each piece of NSSAI, or may be expressed as a list of mapped S-NSSAI for each piece of NSSAI.

The UE may select one or multiple pieces of S-NSSAI from the stored allowed NSSAI and/or configured NSSAI and/or first NSSAI, and include and transmit the one or multiple pieces of S-NSSAI in the requested NSSAI IE.

To be specific, in a case that the UE_A 10 stores the allowed NSSAI associated with the requested PLMN or SNPN and the requested access type, the UE_A 10 may include and transmit, in the requested NSSAI IE, the allowed NSSAI or a part thereof, that is, one or multiple pieces of S-NSSAI included in the allowed NSSAI.

Additionally or alternatively, in a case that the UE_A 10 stores the configured NSSAI associated with the requested PLMN or SNPN, the UE_A 10 may include and transmit the configured NSSAI or a part thereof, that is, one or multiple pieces of S-NSSAI included in the configured NSSAI, in the requested NSSAI.

Additionally or alternatively, in a case that the UE_A 10 stores the first NSSAI associated with the requested PLMN or SNPN and/or access type, and that the first condition indicated in the condition information with which the S-NSSAI included in the first NSSAI is associated matches the condition for the UE_A 10, the UE_A 10 may include and transmit the S-NSSAI in the requested NSSAI IE.

Additionally or alternatively, in a case that the UE_A 10 stores the first NSSAI associated with the requested PLMN or SNPN and/or access type, and further that the second condition indicated in the condition information associated with the S-NSSAI included in the first NSSAI does not match the condition for the UE_A 10, the UE_A 10 may include and transmit the S-NSSAI in the requested NSSAI IE.

Additionally or alternatively, in a case that the UE_A 10 stores a list of the mapped S-NSSAI of the allowed NSSAI associated with the requested PLMN or SNPN and/or access type, the UE_A 10 may select the mapped S-NSSAI included in the list of the mapped S-NSSAI of the allowed NSSAI as mapped S-NSSAI (SST and/or SD) of the S-NSSAI IE to be included in the requested NSSAI IE, include and transmit the selected mapped S-NSSAI in the requested NSSAI IE.

Additionally or alternatively, in a case that the UE_A 10 stores a list of the mapped S-NSSAI of the configured NSSAI associated with the requested PLMN or SNPN, the UE_A 10 may select the mapped S-NSSAI included in the list of the mapped S-NSSAI of the configured NSSAI as mapped S-NSSAI (SST and/or SD) of the S-NSSAI IE to be included in the requested NSSAI IE, include and transmit the selected mapped S-NSSAI in the requested NSSAI IE.

Additionally or alternatively, in a case that the UE_A 10 stores a list of the mapped S-NSSAI of the first NSSAI associated with the requested PLMN or SNPN and/or access type, the UE_A 10 may select the mapped S-NSSAI included in the list of the mapped S-NSSAI of the first NSSAI as mapped S-NSSAI (SST and/or SD) of the S-NSSAI IE to be included in the requested NSSAI IE, include and transmit the selected mapped S-NSSAI in the requested NSSAI IE.

In other words, during roaming, the UE_A 10 may include and transmit an S-NSSAI IE including the S-NSSAI of the current PLMN or SNPN and the mapped S-NSSAI of the HPLMN or HSNPN in the one or more registration request messages in the requested NSSAI IE.

Additionally or alternatively, in a case that the UE_A 10 stores "allowed NSSAI associated with a PLMN other than the requested PLMN or an SNPN other than the requested SNPN and the requested access type", and further in a case that the TAI included in a registration area (TAI list) associated with the allowed NSSAI or the S-NSSAI included in the allowed NSSAI is associated with the requested PLMN or requested SNPN, the UE_A 10 may include the allowed NSSAI or one or multiple pieces of S-NSSAI included in the allowed NSSAI in the requested NSSAI, and then include and transmit the requested NSSAI in the requested NSSAI IE.

In other words, the UE_A 10 may include, in the requested NSSAI, "the S-NSSAI included in the allowed NSSAI associated with the PLMN other than the requested PLMN or the SNPN other than the requested SNPN and the registration area" or "the S-NSSAI included in the allowed NSSAI associated with the PLMN other than the requested PLMN or the SNPN other than the requested SNPN and associated with the registration area" the UE stores.

The requested NSSAI may include one or multiple pieces of the S-NSSAI. However, the UE_A 10 may perform control such that one or multiple pieces of the S-NSSAI included in the requested NSSAI do not overlap.

Hereinafter, a method of controlling S-NSSAI to be included in requested NSSAI to be included in a requested NSSAI IE and/or mapped S-NSSAI to be included in "one or more pieces of mapped S-NSSAI with respect to requested NSSAI to be included in a requested NSSAI IE" and/or a method of generating a requested NSSAI IE in a case that the UE_A 10 stores at least one of the first to fourth rejected NSSAIs will be collectively described. Note that, the first to fourth rejected NSSAI may herein mean first to fourth rejected NSSAIs associated with a requested PLMN or EPLMN or a requested SNPN or ESNPN.

In a case that the UE_A 10 stores rejected NSSAI for a requested PLMN or SNPN, the UE_A 10 may transmit the S-NSSAI included in the rejected NSSAI without including the S-NSSAI in a requested NSSAI IE.

Specifically, in a case that the UE_A 10 stores "first rejected NSSAI associated with the requested PLMN or SNPN", the UE_A 10 may transmit the S-NSSAI included in the first rejected NSSAI without including the S-NSSAI in the requested NSSAI. In other words, the UE_A 10 may perform control such that the one or multiple pieces of S-NSSAI included in the requested NSSAI are not the S-NSSAI included in the "first rejected NSSAI associated with the requested PLMN or SNPN" stored in the UE.

However, in a case that the UE_A 10 also stores a list of mapped S-NSSAI of the "first rejected NSSAI associated with the requested PLMN or SNPN", and that one or multiple pieces of mapped S-NSSAI that is not included in the list of mapped S-NSSAI of the first rejected NSSAI but included in the list of mapped S-NSSAI of configured NSSAI are stored, the UE_A 10 may perform control such that the S-NSSAI of the current PLMN or SNPN to which the mapped S-NSSAI is mapped can be included in the requested NSSAI.

While the UE_A 10 is roaming, in a case that the UE_A 10 stores one or more pieces of the mapped S-NSSAI with respect to the first rejected NSSAI, and further in a case that the UE_A 10 stores one or more pieces of mapped S-NSSAI that is not included in the one or more pieces of mapped S-NSSAI with respect to the first rejected NSSAI stored in the UE_A 10 but is included in one or more pieces of the mapped S-NSSAI with respect to the Configured NSSAI, the UE may include and transmit S-NSSAI included in the first rejected NSSAI associated with the mapped S-NSSAI in the registration request message, together with the mapped S-NSSAI.

Furthermore, in a case that the UE_A 10 stores at least one piece of "second rejected NSSAI associated with the requested PLMN or EPLMN or SNPN or ESNPN and the current registration area", the UE_A 10 may transmit the S-NSSAI included in the second rejected NSSAI without including the S-NSSAI in the requested NSSAI. In other words, the UE_A 10 may perform control such that the one or multiple pieces of the S-NSSAI included in the requested NSSAI are not the S-NSSAI included in the "second rejected NSSAI associated with the requested PLMN or EPLMN or the requested SNPN or ESNPN and the current registration area" stored in the UE_A 10.

In a case that the information indicating the current registration area stored in the UE_A 10 includes the TAI belonging to one or multiple PLMNs different from the requested PLMN or one or multiple SNPNs different from the requested SNPN, the one or multiple different PLMNs or SNPNs may be EPLMNs of the requested PLMN or ESNPNs of the requested SNPN, and the UE_A 10 may perform control such that the one or multiple pieces of S-NSSAI included in the requested NSSAI are not the S-NSSAI included in each piece of the "second rejected NSSAI associated with one PLMN or SNPN of the one or multiple different PLMNs or SNPNs and the current registration area" stored in the UE_A 10.

In other words, in a case that the information indicating the current registration area stored in the UE_A 10 includes the TAI belonging to one or multiple PLMNs or SNPNs different from the requested PLMN or SNPN, the UE_A 10 may not include the S-NSSAI included in each piece of the "second rejected NSSAI associated with one PLMN or SNPN of the different one or multiple PLMNs or SNPNs and the current registration area" in the requested NSSAI.

However, in a case that the UE_A 10 also stores a list of mapped S-NSSAI of the "second rejected NSSAI associated with the requested PLMN or EPLMN or SNPN or ESNPN and the current registration area", and that one or multiple pieces of mapped S-NSSAI that is not included in the list of mapped S-NSSAI of the second rejected NSSAI but is included in the list of mapped S-NSSAI of the configured NSSAI are stored, the UE_A 10 may perform control such that the S-NSSAI of the current PLMN or SNPN to which the mapped S-NSSAI is mapped can be included in the requested NSSAI.

In addition, while the UE_A 10 is roaming, in a case that the UE_A 10 stores one or more pieces of the mapped S-NSSAI with respect to the second rejected NSSAI, and further in a case that the UE_A 10 stores one or more pieces of mapped S-NSSAI that is not included in the one or more pieces of the mapped S-NSSAI with respect to the second rejected NSSAI stored in the UE_A 10 but is included in one or more pieces of the mapped S-NSSAI with respect to the Configured NSSAI, the UE may include and transmit the S-NSSAI included in the second rejected NSSAI associated with the mapped S-NSSAI in the registration request message, together with the mapped S-NSSAI.

Furthermore, in a case that the UE_A 10 stores "third rejected NSSAI associated with the requested PLMN or SNPN", the UE_A 10 may transmit the S-NSSAI included in the third rejected NSSAI without including the S-NSSAI in a requested NSSAI IE. In other words, the UE_A 10 may perform control such that the one or multiple pieces of S-NSSAI included in the requested NSSAI IE are not the S-NSSAI included in the "third rejected NSSAI associated with the requested PLMN or SNPN" stored in the UE_A 10.

Furthermore, in a case that the UE_A 10 stores at least one piece of the "third rejected NSSAI associated with the EPLMN of the requested PLMN or the ESNPN of the requested SNPN", the UE_A 10 may transmit the S-NSSAI included in the third rejected NSSAI without including the S-NSSAI in the requested NSSAI IE. In other words, the UE_A 10 may perform control such that the one or multiple pieces of S-NSSAI included in the requested NSSAI IE are not the S-NSSAI included in each piece of the "third rejected NSSAI associated with the EPLMN of the requested PLMN or the ESNPN of the requested SNPN" stored in the UE_A 10.

In a case that the UE_A 10 stores neither the mapped S-NSSAI of the first rejected NSSAI nor the mapped S-NSSAI of the second rejected NSSAI, the UE_A 10 may perform control such that the S-NSSAI of the current PLMN or SNPN included in the registration request message is included in neither the first rejected NSSAI nor the second rejected NSSAI.

In other words, in a case that the UE_A 10 does not store the mapped S-NSSAI with respect to the rejected NSSAI, the UE_A 10 may perform control such that the S-NSSAI of the current PLMN or SNPN included in the registration request message is included in neither the first rejected NSSAI nor the second rejected NSSAI.

Furthermore, while the UE_A 10 is roaming, in a case that the UE_A 10 stores the mapped S-NSSAI of the first rejected NSSAI or the mapped S-NSSAI of the second rejected NSSAI, and further in a case that the UE_A 10 stores the mapped S-NSSAI that is included neither in the list of the mapped S-NSSAI of the first rejected NSSAI stored in the UE_A 10 nor in the list of the mapped S-NSSAI of the second rejected NSSAI stored in the UE_A 10 but is included in the list of the mapped S-NSSAI of the Configured NSSAI, the UE_A 10 may perform control such that the S-NSSAI of the current PLMN or SNPN included in the registration request message is included in the first rejected NSSAI or the second rejected NSSAI stored in the UE_A 10.

Further, regardless of whether the UE_A 10 stores the mapped S-NSSAI of the first rejected NSSAI or the mapped S-NSSAI of the second rejected NSSAI, the UE_A 10 may perform control such that the S-NSSAI of the current PLMN or SNPN included in the registration request message is not included in the third rejected NSSAI.

In other words, the UE_A 10 may perform control such that the S-NSSAI of the current PLMN and/or SNPN included in the registration request message is included in neither the first rejected NSSAI stored in the UE_A 10 nor the second rejected NSSAI stored in the UE_A 10 nor the third rejected NSSAI stored in the UE_A 10. However, while the UE_A 10 is roaming, in a case that the UE_A 10 stores the mapped S-NSSAI of the first rejected NSSAI and/or the mapped S-NSSAI of the second rejected NSSAI, and further in a case that the UE_A 10 stores the mapped S-NSSAI that is included neither in the list of the mapped S-NSSAI of the first rejected NSSAI stored in the UE_A 10 nor in the list of the mapped S-NSSAI of the second rejected NSSAI stored in the UE_A 10 but is included in the list of the mapped S-NSSAI of the Configured NSSAI, the UE_A 10 may perform control such that the S-NSSAI of the current PLMN or SNPN to which the mapped S-NSSAI is mapped can be included in the registration request message.

The S-NSSAI of the current PLMN or SNPN to which the mapped S-NSSAI is mapped may mean S-NSSAI of the current PLMN or SNPN that is mapped to the mapped S-NSSAI.

Performing control such that the S-NSSAI of the current PLMN or SNPN mapped to the mapped S-NSSAI can be included in the registration request message means that the S-NSSAI of the current PLMN or SNPN mapped to the mapped S-NSSAI is stored and/or managed as available S-NSSAI.

In addition, while the UE_A 10 is roaming, in a case that the UE_A 10 stores the mapped S-NSSAI of the first rejected NSSAI and/or the mapped S-NSSAI of the second rejected NSSAI, and further in a case that the UE_A 10 stores the mapped S-NSSAI that is included neither in the list of the mapped S-NSSAI of the first rejected NSSAI stored in the UE_A 10 nor in the list of the mapped S-NSSAI of the second rejected NSSAI stored in the UE_A 10 but is included in the list of the mapped S-NSSAI of the Configured NSSAI, the UE_A 10 may perform control such that the S-NSSAI of the current PLMN or SNPN to which the mapped S-NSSAI is mapped can be included in the registration request message along with the mapped S-NSSAI.

Note that, while the UE_A 10 is roaming, in a case that the UE_A 10 stores the mapped S-NSSAI of the first rejected NSSAI and/or the mapped S-NSSAI of the second rejected NSSAI, the UE_A 10 may perform control such that the mapped S-NSSAI included in the registration request message is mapped S-NSSAI that is included neither in the list of the mapped S-NSSAI of the first rejected NSSAI stored in the UE_A 10 nor in the list of the mapped S-NSSAI of the second rejected NSSAI stored in the UE_A 10.

In other words, in a case that the UE_A 10 stores one or more pieces of mapped S-NSSAI with respect to rejected NSSAI at a time when roaming, and in a case that the mapped S-NSSAIs included in the one or more pieces of stored mapped S-NSSAI for the configured NSSAI are not included in the one or more pieces of mapped S-NSSAI for the rejected NSSAI, then the S-NSSAI included in the configured NSSAI associated with the mapped S-NSSAI may be included in the registration request message together with the mapped S-NSSAI in the requested NSSAI.

In a case that the UE is not roaming, the S-NSSAI included in the third rejected NSSAI is controlled such that the S-NSSAI is not included in the requested NSSAI, and in the case that the UE is roaming, the S-NSSAI associated with the S-NSSAI included in the third rejected NSSAI as mapped S-NSSAI may not be included in the requested NSSAI.

In other words, in the case that the UE is not roaming, the S-NSSAI of the current PLMN or SNPN that is included in the requested NSSAI is included in the configured NSSAI with respect to the current PLMN or SNPN and is not included in the third rejected NSSAI.

On the other hand, in the case that the UE is roaming, the S-NSSAI of the current PLMN or SNPN included in the requested NSSAI is not associated with the S-NSSAI included in the configured NSSAI with respect to the current PLMN or SNPN and included in the third rejected NSSAI.

In other words, in the case that the UE is not roaming, the UE may include, in the requested NSSAI, one or more pieces of S-NSSAI that are included in the configured NSSAI with respect to the current PLMN or SNPN and are not included in the third rejected NSSAI.

On the other hand, in the case that the UE is roaming, the UE may include, in the requested NSSAI, S-NSSAI that is included in the configured NSSAI with respect to the current PLMN or SNPN and is not associated with the S-NSSAI included in the third rejected NSSAI.

However, while the UE is roaming, in a case that there is one or more pieces of S-NSSAI not included in the third rejected NSSAI but included in the stored one or more pieces of mapped S-NSSAI with respect to configured NSSAI, the UE may include and transmit the S-NSSAI included in the configured NSSAI with respect to the current PLMN or SNPN with which the S-NSSAI is associated as mapped S-NSSAI in the registration request message, together with the mapped S-NSSAI. Specifically, in that case, the UE may configure the requested NSSAI IE with the NSSAI IE that includes the S-NSSAI IE including the mapped S-NSSAI and the S-NSSAI with which the mapped S-NSSAI is associated.

Furthermore, in a case that the back-off timer associated with certain S-NSSAI is valid, in other words, the back-off timer is running, or until the back-off timer is stopped, the UE_A 10 may transmit the S-NSSAI or S-NSSAI related to the S-NSSAI without including the S-NSSAI in the requested NSSAI. Specifically, in a case that the S-NSSAI with which the back-off timer is associated is the S-NSSAI associated with the requested PLMN or SNPN, or the S-NSSAI included in the NSSAI associated with the requested PLMN or SNPN, the UE_A 10 may transmit the S-NSSAI without including the S-NSSAI in the requested NSSAI during counting of the back-off timer or until the back-off timer expires or stops.

Hereinafter, a case that a back-off timer associated with S-NSSAI included in the fourth rejected NSSAI is valid and/or the back-off timer is running may mean that the S-NSSAI is valid and/or the fourth rejected NSSAI is valid.

Furthermore, in a case that the UE_A 10 stores a list of mapped S-NSSAI of the fourth rejected NSSAI, that the fourth rejected NSSAI is valid may also mean that the list of mapped S-NSSAI of the fourth rejected NSSAI and the mapped S-NSSAI of the fourth rejected NSSAI are valid.

In a case that the fourth rejected NSSAI and/or the list of the mapped S-NSSAI of the fourth rejected NSSAI is managed by the UE_A 10 regardless of whether the back-off timer is running, the valid fourth rejected NSSAI and/or the list of the mapped S-NSSAI of the valid fourth rejected NSSAI may be fourth rejected NSSAI stored in the UE_A 10 and/or a list of the mapped S-NSSAI of the fourth rejected NSSAI stored in the UE_A 10.

Alternatively, in a case that the S-NSSAI with which the back-off timer is associated is associated with the HPLMN or HSNPN, the UE_A 10 may transmit the S-NSSAI of the requested PLMN or SNPN to which the S-NSSAI is mapped without including the S-NSSAI in the requested NSSAI.

Furthermore, in a case that the UE stores "the fourth rejected NSSAI associated with the requested PLMN or SNPN", the UE may transmit the S-NSSAI included in the fourth rejected NSSAI without including the S-NSSAI in the requested NSSAI. In other words, the UE may perform control such that one or multiple pieces of S-NSSAI included in the requested NSSAI are not the S-NSSAI included in "the fourth rejected NSSAI associated with the requested PLMN or SNPN" the UE stores.

Here, in the present document, the requested PLMN or SNPN may have the same meaning as the registered PLMN or SNPN.

Furthermore, in a case that the UE stores at least one piece of "the fourth rejected NSSAI associated with the EPLMN of the requested PLMN or the ESNPN of the SNPN", the UE may transmit the S-NSSAI included in the fourth rejected NSSAI without including the S-NSSAI in the requested NSSAI. In other words, the UE may perform control such that the one or multiple pieces of S-NSSAI included in the requested NSSAI are not the S-NSSAI included in each piece of "the fourth rejected NSSAI associated with the EPLMN of the requested PLMN or the ESNPN of the SNPN".

During roaming, the UE_A 10 may perform control such that the one or multiple pieces of S-NSSAI included in the requested NSSAI do not include, as the mapped S-NSSAI, the mapped S-NSSAI(s) of the rejected NSSAI stored in the UE_A 10, and/or the mapped S-NSSAI(s) of the pending NSSAI, and/or the S-NSSAI of the HPLMN or HSNPN included in the fourth rejected NSSAI. In other words, the UE_A 10 may perform control such that the S-NSSAI of the current PLMN or SNPN to which the S-NSSAI included in the rejected NSSAI and/or the pending NSSAI and/or the fourth rejected NSSAI are mapped is not included in the requested NSSAI.

Furthermore, in other words, for the S-NSSAI included in the requested NSSAI generated by the UE_A 10, mapped S-NSSAI of the S-NSSAI is not included in the rejected NSSAI, and/or the pending NSSAI, and/or the fourth rejected NSSAI stored in the UE_A 10. Here, the rejected NSSAI may be at least one of the first to fourth rejected NSSAI or may include the S-NSSAI of the HPLMN or HSNPN.

Furthermore, in a case that the UE_A 10 stores mapped S-NSSAI of valid fourth rejected NSSAI while the UE_A 10 is roaming, and further in a case that the UE_A 10 stores mapped S-NSSAI that is not included in a list of the mapped S-NSSAI of first rejected NSSAI stored in the UE_A 10 but is included in the list of the mapped S-NSSAI of the Configured NSSAI, the UE_A 10 may perform control such that the S-NSSAI of the current PLMN or SNPN included in the registration request message may be included in the fourth rejected NSSAI.

In other words, the UE_A 10 may perform control such that the S-NSSAI of the current PLMN or SNPN included in the registration request message is not included in the fourth rejected NSSAI. However, in a case that the UE_A 10 stores the list of the mapped S-NSSAI of the fourth rejected NSSAI while the UE_A 10 is roaming, and further in a case that the UE_A 10 stores mapped S-NSSAI that is not included in the list of the mapped S-NSSAI of the fourth rejected NSSAI stored in the UE_A 10 but is included in the list of the mapped S-NSSAI of the Configured NSSAI, the UE may perform control such that the S-NSSAI of the current PLMN or SNPN to which the mapped S-NSSAI is mapped can be included in the registration request message.

The S-NSSAI of the current PLMN or SNPN to which the mapped S-NSSAI is mapped may mean S-NSSAI of the current PLMN or SNPN that is mapped to the mapped S-NSSAI.

Performing control such that the S-NSSAI of the current PLMN or SNPN mapped to the mapped S-NSSAI can be included in the registration request message means that the S-NSSAI of the current PLMN or SNPN mapped to the mapped S-NSSAI is stored and/or managed as available S-NSSAI.

In addition, in a case that the UE_A 10 stores the list of the mapped S-NSSAI of the fourth rejected NSSAI while the UE_A 10 is roaming, and further in a case that the UE_A 10 stores mapped S-NSSAI that is not included in the list of the mapped S-NSSAI of the fourth rejected NSSAI stored in the UE_A 10 but is included in the list of the mapped S-NSSAI of the Configured NSSAI, the UE may perform control such that the S-NSSAI of the current PLMN or SNPN to which the mapped S-NSSAI is mapped can be included in the registration request message together with the mapped S-NSSAI.

Furthermore, in a case that the UE stores the "pending NSSAI associated with the requested PLMN or SNPN", the UE may transmit the S-NSSAI included in the pending NSSAI without including the S-NSSAI in the requested NSSAI IE. In other words, the UE may perform control such that the one or multiple pieces of S-NSSAI included in the requested NSSAI IE are not the S-NSSAI included in the "pending NSSAI associated with the requested PLMN or SNPN" stored in the UE.

Furthermore, in a case that the UE stores at least one piece of the "pending NSSAI associated with the EPLMN of the requested PLMN or ESNPN of the requested SNPN", the UE may transmit the S-NSSAI included in the pending NSSAI without including the S-NSSAI in the requested NSSAI IE. In other words, the UE may perform control such that the one or multiple pieces of S-NSSAI included in the requested NSSAI IE are not the S-NSSAI included in each piece of the "pending NSSAI associated with the EPLMN of the requested PLMN or the ESNPN of the requested SNPN".

However, in a case that the UE_A 10 also stores the list of the mapped S-NSSAI of the "pending NSSAI associated with the requested PLMN or EPLMN, or the ESNPN of the requested SNPN" ("pending NSSAI" below) and one or multiple pieces of mapped S-NSSAI that is not included in the list of mapped S-NSSAI of the pending NSSAI but is included in the list of mapped S-NSSAI of the configured NSSAI are stored, the UE_A 10 may perform control such that the S-NSSAI of the current PLMN or SNPN to which the mapped S-NSSAI is mapped can be included in the requested NSSAI.

In other words, in a case that the UE_A 10 does not store the mapped S-NSSAI of the pending NSSAI but stores the pending NSSAI, the UE_A 10 may perform control such that the S-NSSAI of the current PLMN or SNPN included in the registration request message or S-NSSAI of the HPLMN or HSNPN (mapped S-NSSAI) is the S-NSSAI not included in the pending NSSAI stored in the UE_A 10.

In addition, in a case that the UE_A 10 stores the mapped S-NSSAI with respect to the pending NSSAI and the pending NSSAI while the UE_A 10 is roaming, and further in a case that the UE_A 10 stores one or more pieces of mapped S-NSSAI that is not included in the mapped S-NSSAI with respect to the pending NSSAI stored in the UE_A 10 but is included in the list of the mapped S-NSSAI of the Configured NSSAI, the UE may include and transmit the pending NSSAI associated with the mapped S-NSSAI and the S-NSSAI included in the configured NSSAI in the registration request message, together with the mapped S-NSSAI.

The following describes behaviors of the UE during roaming or non-roaming in a case that the UE does not store mapped S-NSSAI for pending NSSAI. Note that, the case that the UE does not store the mapped S-NSSAI with respect to the pending NSSAI may mean that the S-NSSAI included in the pending NSSAI stored by the UE is the S-NSSAI of the HPLMN or the HSNPN regardless of whether the UE is roaming or non-roaming.

In the case that the UE is not roaming, it is controlled such that the S-NSSAI included in the pending NSSAI is not included in the requested NSSAI, and in the case that the UE is roaming, the S-NSSAI associated with the S-NSSAI included in the pending NSSAI as the mapped S-NSSAI may not be included in the requested NSSAI. The requested NSSAI may be included in the requested NSSAI IE.

In other words, in a case that the UE is not roaming, the S-NSSAI of the current PLMN or SNPN that is included in the requested NSSAI is included in the configured NSSAI with respect to the current PLMN or SNPN and is not included in the pending NSSAI.

On the other hand, in the case that the UE is roaming, the S-NSSAI of the current PLMN or SNPN included in the requested NSSAI is not associated with the S-NSSAI included in the configured NSSAI with respect to the current PLMN or SNPN and included in the pending NSSAI.

In yet other words, in the case that the UE is not roaming, the UE may include, in the requested NSSAI, one or more pieces of S-NSSAI that are included in the configured NSSAI with respect to the current PLMN or SNPN and not included in the pending NSSAI.

On the other hand, in the case that the UE is roaming, the UE may include, in the requested NSSAI, S-NSSAI that is included in the configured NSSAI with respect to the current PLMN or SNPN and is not associated with the S-NSSAI included in the pending NSSAI.

However, while the UE is roaming, in a case that there is one or more pieces of S-NSSAI that are included in the stored one or more pieces of mapped S-NSSAI for configured NSSAI and that are not included in the pending NSSAI, the UE may include and transmit, in the registration request message, the S-NSSAI included in the configured NSSAI with respect to the current PLMN or SNPN with which the S-NSSAI is associated as the mapped S-NSSAI, together with the mapped S-NSSAI. Specifically, in that case, the UE may configure the requested NSSAI IE with the NSSAI IE that includes the S-NSSAI IE including the mapped S-NSSAI and the S-NSSAI with which the mapped S-NSSAI is associated.

Hereinafter, a method of controlling the S-NSSAI and/or the mapped S-NSSAI included in a requested NSSAI IE and/or a method of generating a requested NSSAI IE in a case that the UE_A 10 stores S-NSSAI in at least one of the first to fourth rejected NSSAIs and the pending NSSAI will be collectively described. Note that the first to fourth rejected NSSAIs and the pending NSSAI may mean the first to fourth rejected NSSAIs and the pending NSSAI associated with the requested PLMN or EPLMN or requested SNPN or ESNPN.

In a case that the UE_A 10 stores neither the mapped S-NSSAI of the first rejected NSSAI nor the mapped S-NSSAI of the second rejected NSSAI nor the mapped S-NSSAI of the pending NSSAI, the UE_A 10 may perform control such that the S-NSSAI of the current PLMN or SNPN included in a registration request message is included in neither the first rejected NSSAI nor the second rejected NSSAI nor the pending NSSAI.

Furthermore, in a case that the UE_A 10 stores the mapped S-NSSAI of the first rejected NSSAI and/or the mapped S-NSSAI of the second rejected NSSAI and/or the mapped S-NSSAI of the pending NSSAI, and further in a case that the UE_A 10 stores the mapped S-NSSAI that is included neither in the list of the mapped S-NSSAI of the first rejected NSSAI stored in the UE_A 10 nor in the list of the mapped S-NSSAI of the second rejected NSSAI stored in the UE_A 10 nor in the list of the mapped S-NSSAI of the pending NSSAI stored in the UE_A 10 but is included in the list of the mapped S-NSSAI of the Configured NSSAI, the UE_A 10 may perform control such that the S-NSSAI of the current PLMN or SNPN in the registration request message may be included in the first rejected NSSAI or the second rejected NSSAI or the pending NSSAI.

In other words, the UE_A 10 may perform control such that the S-NSSAI of the current PLMN or SNPN included in the registration request message is included neither in the first rejected NSSAI nor the second rejected NSSAI nor the third rejected NSSAI, nor the pending NSSAI. However, while the UE_A 10 is roaming, in a case that the UE_A 10 stores the mapped S-NSSAI of the first rejected NSSAI or the mapped S-NSSAI of the second rejected NSSAI or the list of the mapped S-NSSAI of the pending NSSAI, and further in a case that the UE_A 10 stores the mapped S-NSSAI that is included neither in the list of the mapped S-NSSAI of the first rejected NSSAI stored in the UE_A 10 nor in the list of the mapped S-NSSAI of the second rejected NSSAI stored in the UE_A 10 nor in the list of the mapped S-NSSAI of the pending NSSAI stored in the UE_A 10 but is included in the list of the mapped S-NSSAI of the Configured NSSAI, the UE_A 10 may perform control such that the S-NSSAI of the current PLMN or SNPN to which the mapped S-NSSAI is mapped can be included in the registration request message.

The S-NSSAI of the current PLMN or SNPN with which the mapped S-NSSAI is associated may mean S-NSSAI of the current PLMN or SNPN that is mapped to the mapped S-NSSAI.

Performing control such that the S-NSSAI of the current PLMN or SNPN mapped to the mapped S-NSSAI can be included in the registration request message means that the S-NSSAI of the current PLMN or SNPN mapped to the mapped S-NSSAI is stored and/or managed as available S-NSSAI.

However, while the UE_A 10 is roaming, in a case that the UE_A 10 stores the mapped S-NSSAI of the first rejected NSSAI or the mapped S-NSSAI of the second rejected NSSAI or the list of the mapped S-NSSAI of the pending NSSAI, and further in a case that the UE_A 10 stores the mapped S-NSSAI that is included neither in the list of the mapped S-NSSAI of the first rejected NSSAI stored in the UE_A 10 nor in the list of the mapped S-NSSAI of the second rejected NSSAI stored in the UE_A 10 nor in the list of the mapped S-NSSAI of the pending NSSAI stored in the UE_A 10 but is included in the list of the mapped S-NSSAI of the Configured NSSAI, the UE_A 10 may perform control such that the S-NSSAI of the current PLMN or SNPN to which the mapped S-NSSAI is mapped can be included in the registration request message together with the mapped S-NSSAI.

Note that, while the UE_A 10 is roaming, in a case that the UE_A 10 stores the mapped S-NSSAI of the first rejected NSSAI and/or the mapped S-NSSAI of the second rejected NSSAI and/or the pending NSSAI, the UE_A 10 may perform control such that the mapped S-NSSAI included in the registration request message is mapped S-NSSAI that is included neither in the list of the mapped S-NSSAI of the first rejected NSSAI stored in the UE_A 10 nor the list of the mapped S-NSSAI of the second rejected NSSAI stored in the UE_A 10 nor the pending NSSAI stored in the UE_A 10.

As described above, the S-NSSAI and/or mapped S-NSSAI included in the requested NSSAI IE may be controlled not to be included in the rejected NSSAI and/or pending NSSAI stored in the UE and/or the mapped S-NSSAI(s) for the rejected NSSAI and/or the mapped S-NSSAI(s) for the pending NSSAI.

However, in a case that the S-NSSAI selected from the first NSSAI is included in the requested NSSAI IE, the above-described control may not be performed. In other words, the S-NSSAI included in the first NSSAI may be controlled in such a manner that the S-NSSAI can be included in the requested NSSAI IE even in a case that the S-NSSAI is included in the rejected NSSAI and/or pending NSSAI stored in the UE.

Similarly, the mapped S-NSSAI for the S-NSSAI included in the first NSSAI may be controlled in such a manner that the mapped S-NSSAI can be included in the requested NSSAI IE even in a case that the mapped S-NSSAI is included in the mapped S-NSSAI(s) for the rejected NSSAI stored in the UE and/or the mapped S-NSSAI(s) for the pending NSSAI stored in the UE.

The UE_A 10 may include identification information other than these pieces of identification information in the registration request message and/or the RRC message including the registration request message, and may include and transmit, for example, the UE ID and/or the PLMN ID and/or NID and/or AMF identification information. Here, the AMF identification information may be information for identifying an AMF or a set of AMFs, and may be, for example, a 5G S-Temporary Mobile Subscription Identifier (5G-S-TMSI) or a Globally Unique AMF Identifier (GUAMI).

In addition, the UE_A 10 may include and transmit an SM message (for example, a PDU session establishment request message) in the registration request message, or may transmit an SM message (for example, a PDU session establishment request message) together with the registration request message to thereby initiate a PDU session establishment procedure during the registration procedure.

Note that the UE_A 10 may select or determine whether to transmit these pieces of identification information to the network, based on the UE capability information and/or the UE policy and/or the UE state and/or the user registration information and/or a context stored in the UE and/or the like.

In a case that the 5G AN 120 (or the gNB) receives an RRC message including the registration request message, then the 5G AN 120 (or the gNB) selects an AMF to transfer the registration request message (S602). Note that the 5G AN 120 (or the gNB) can select an AMF based on one or multiple pieces of identification information included in the registration request message and/or the RRC message including the registration request message.

For example, the 5G AN 120 (or the gNB) may select an AMF based on the requested NSSAI. Specifically, the 5G AN (or the gNB) may select an AMF included in a network slice identified by the S-NSSAI included in the requested NSSAI or an AMF having connectivity to a network slice.

Note that the method of selecting an AMF is not limited thereto and the 5G AN (or the gNB) may select an AMF based on other conditions. The 5G AN (or the gNB) extracts the registration request message from the received RRC message and transfers the registration request message to the selected new AMF (S604). Note that the 5G AN (or the gNB) may transfer the identification information that is not included in the registration request message but included in the RRC message to the selected AMF (new AMF 141) together with the registration request message (S604).

In a case that the registration request message has been received, the new AMF 141 can perform first condition fulfillment determination. The first condition fulfillment determination is performed by the network (or the new AMF 141) to determine whether to accept the request from the UE. In a case that the first condition fulfillment determination is true, the new AMF 141 performs the procedure from S606 to S612. On the other hand, in a case that the first condition fulfillment determination is false, the new AMF 141 may skip the procedure from S606 to S608 and perform the procedure of S610.

Alternatively, the new AMF 141 may perform the first condition fulfillment determination after requesting a UE context from the old AMF 142 and then receiving the UE context from the old AMF 142 (S606 and S608). In that case, the new AMF 141 may perform S610 and/or S612 in a case that the first condition fulfillment determination is true. On the other hand, in a case that the first condition fulfillment determination is false, the new AMF 141 may perform S610.

Note that in this regard, in a case that the first condition fulfillment determination is true, the control message transmitted and received in S610 may be a Registration accept message, and in a case that the first condition fulfillment determination is false, the control message transmitted and received in S610 may be a Registration reject message.

Note that the first condition fulfillment determination may be performed based on reception of the registration request message, and/or each piece of identification information included in the registration request message, and/or subscriber information, and/or capability information of the network, and/or the operator policy, and/or a state of the network, and/or registration information of the user, and/or a context stored in the AMF, and/or the like.

For example, the first condition fulfillment determination may be true in a case that the network allows the request from the UE, and the first condition fulfillment determination may be false in a case that the network does not allow the request from the UE. In addition, in a case that a network with which the UE is to be registered and/or an apparatus in the network supports the function requested by the UE, the first condition fulfillment determination may be true, whereas in a case that the network and/or the apparatus does not support the function requested by the UE, the first condition fulfillment determination may be false. Furthermore, in a case that the transmitted and/or received identification information is allowed, the first condition fulfillment determination may be true, whereas in a case that the transmitted and/or received identification information is not allowed, the first condition fulfillment determination may be false.

In addition, in a case that the S-NSSAI included in the requested NSSAI received by the AMF from the UE is information for identifying a slice that requires the NSSAA procedure, and further in a case that the AMF stores that the result of the NSSAA procedure of the S-NSSAI for the UE is successful, the first condition fulfillment determination may be true. Alternatively, the first condition fulfillment determination may be false in a case that no S-NSSAI is allowed for the UE and that no allowed NSSAI is expected to be allocated to the UE in the future as well.

In addition, the first condition fulfillment determination may be true in a case that the S-NSSAI included in the requested NSSAI received by the AMF from the UE is information for identifying a slice requiring management of the maximum number of UE connected to the slice and further in a case that the maximum number of UE has not been reached. Alternatively, in a case that no S-NSSAI is allowed for the UE as well and in a case that the allowed NSSAI is expected to be allocated to the UE in the future, the first condition fulfillment determination may be true.

In a case that the S-NSSAI included in the requested NSSAI received by the AMF from the UE is S-NSSAI that needs to be controlled by the condition information, the control may be performed in such a manner that the NSAC is not performed on the S-NSSAI.

For the AMF, the first condition fulfillment determination may be true or may be false in a case that no S-NSSAI is allowed for the UE and that the fourth rejected NSSAI is allocated to the UE.

The new AMF 141 performs the procedure of S606 and S608 in a case that the AMF indicated by the AMF identification information included in the message received by the new AMF 141 from the UE is the old AMF 142, and does not perform the procedure of S606 and S608 in a case that the AMF indicated by the AMF identification information included in the message received by the new AMF 141 from the UE_A 10 is the new AMF 141. In other words, the procedure of S606 and S608 is performed in a case that a change occurs in the AMF (AMF change) due to the present procedure, and the procedure of S606 and S608 is skipped in a case that no change occurs in the AMF.

A UE context transfer procedure will be described (S606 and S608). The new AMF 141 transmits a UE context request message to the old AMF 142 (S606). The old AMF 142 transmits the UE context to the new AMF 141 based on the received UE context request message. The new AMF 141 generates a UE context based on the received UE context.

Here, the UE context transmitted from the new AMF 141 to the old AMF 142 may include the UE ID and the allowed NSSAI. Furthermore, the UE context may include the configured NSSAI and/or rejected NSSAI, the NSSAI and/or pending NSSAI, and/or the fourth rejected NSSAI. In addition, information as to whether notification to the UE has been completed may be linked to the allowed NSSAI and/or the configured NSSAI and/or the rejected NSSAI and/or the pending NSSAI, and/or the fourth rejected NSSAI included in the UE context and the S-NSSAI included in each piece of NSSAI.

In addition, the UE context may include information of the S-NSSAI that requires the NSSAA procedure, and/or information indicating authentication that the NSSAA procedure has completed for the UE is successful, and/or information indicating that the authentication has failed.

In addition, the UE context may include the information of the S-NSSAI requiring management of the maximum number of UE connected to a slice, and/or information indicating that the maximum number of UE has been reached, and/or information indicating whether the maximum number of UE connected to a slice has been reached.

Note that the information regarding the characteristics of the S-NSSAI may be managed as one piece of information, and specifically, the network may associate, with each piece of S-NSSAI, information indicating whether the NSSAA is required, whether the NSSAA is successful, whether the maximum number of UE connected to a slice requires to be managed, and whether the maximum number of UE connected to a slice has been reached to be stored.

The new AMF 141 may transmit the control message to the UE based on the determination of the first condition fulfillment determination and/or based on the UE context received from the old AMF 142 (S610). The control message may be a registration accept message, or may be a registration reject message.

In a case that the requested NSSAI has been received from the UE and further that the S-NSSAI included in the requested NSSAI requires NSSAA, the new AMF 141 may include and transmit pending NSSAI in the control message.

Furthermore, in a case that the configuration information of the UE has been updated, the new AMF 141 may include the configured NSSAI and/or the allowed NSSAI and/or the rejected NSSAI and/or the pending NSSAI in the control message and transmit the message to the UE_A 10. Note that the message transmitted by the new AMF 141 to the UE may be based on information received from the UE. To be specific, the S-NSSAI included in the rejected NSSAI transmitted by the new AMF 141 to the UE may be the S-NSSAI included in the requested NSSAI received from the UE.

In a case that the new AMF 141 is scheduled to perform the NSSAA procedure after completion of the present procedure or in parallel with the present procedure although there is no S-NSSAI (allowed NSSAI) allowed for the UE at the time of transmission of the control message, or the new AMF 141 is in the middle of performing the NSSAA procedure between the UE and the network, or the new AMF 141 includes the pending NSSAI IE in the control message for transmission, the new AMF 141 may include and transmit an empty value in the allowed NSSAI.

At the time of transmission of the control message, in a case that there is no S-NSSAI (allowed NSSAI) allowed for the UE but the Allowed NSSAI is included in the control message, or in a case that the UE has been notified of the fourth rejected NSSAI before the present procedure, the new AMF 141 may include and transmit an empty value in the allowed NSSAI.

The new AMF 141 may include the Allowed NSSAI in the control message using the Allowed NSSAI IE. Note that the Allowed NSSAI IE may include one or multiple pieces of S-NSSAI of the current PLMN or SNPN. In addition, during roaming, the Allowed NSSAI IE may include one or multiple pieces of mapped S-NSSAI.

Noted that the S-NSSAI of the PLMN or the SNPN included in the Allowed NSSAI IE may be referred to as the Allowed S-NSSAI of the current PLMN or SNPN. One or more pieces of Allowed S-NSSAI may also be referred to as the Allowed NSSAI of the current PLMN or SNPN.

Further, the mapped S-NSSAI included in the Allowed NSSAI IE may be referred to as the mapped S-NSSAI of the Allowed NSSAI of the PLMN or SNPN. The mapped S-NSSAI of the Allowed NSSAI of one or more current PLMNs or SNPNs may also be referred to as one or more mapped S-NSSAI(s) of the Allowed NSSAI of the current PLMN or SNPN (mapped S-NSSAI(s) for the Allowed NSSAI).

The new AMF 141 may include the rejected NSSAI in the control message by using rejected NSSAI IE or the Extended rejected NSSAI IE. Note that the rejected NSSAI IE or the Extended rejected NSSAI IE may include one or multiple pieces of S-NSSAI of the current PLMN or SNPN.

In a case that the rejected NSSAI is included in the control message by using an Extended rejected NSSAI IE, the new AMF 141 may include the value of the back-off timer in the control message and transmit the message. Alternatively, the new AMF 141 may include the value of the back-off timer in the Extended rejected NSSAI IE, further include and transmit the Extended rejected NSSAI IE in the control message. Further, during roaming, the Extended rejected NSSAI IE may include one or multiple pieces of mapped S-NSSAI.

Noted that the S-NSSAI of the current PLMN or SNPN included in the Extended rejected NSSAI IE may be referred to as the rejected S-NSSAI of the current PLMN or SNPN, and one or more pieces of rejected S-NSSAI may be referred to as the rejected NSSAI of the current PLMN or SNPN.

The new AMF 141 may include the pending NSSAI in the control message using the pending NSSAI IE. Note that the pending NSSAI IE may include one or multiple pieces of S-NSSAI of the current PLMN or SNPN. Additionally or alternatively, during roaming, the pending NSSAI IE may include one or multiple pieces of mapped S-NSSAI.

The new AMF 141 may include at least one piece of identification information of the tenth identification information to the fourteenth identification information in the control message and transmit the control message to the UE. Based on reception of the first identification information, the new AMF 141 may determine whether to include at least one piece of identification information among the tenth identification information to the fourteenth identification information in the control message and transmit the control message, and may determine information to be transmitted.

To be specific, in a case that the new AMF 141 receives the first identification information and/or that the first identification information is information indicating that the UE includes a function of storing the condition information associated with the S-NSSAI and/or controlling the condition information based on the storage, the new AMF 141 may include and transmit at least one piece of identification information among the tenth identification information to the fourteenth identification information in the control message.

The UE_A 10 receives, from the network, the control message and/or one or multiple pieces of information included in the control message.

The UE_A 10 may recognize the received information based on the reception of the control message and/or one or more pieces of the information included in the control message.

To be specific, in a case of receiving information related to the NSSAI, the UE may perform storage and/or update of the information related to the NSSAI, and start and/or stop of the timer, and details of a storage and/or update method for the information related to the NSSAI will be described in the NSSAI update and/or storage procedure in section 3.3.

Note that the NSSAI update and/or storage procedure in section 3.3 may be performed during or after completion of the present procedure. The NSSAI update and/or storage procedure in section 3.3 may be performed based on completion of the present procedure in a case that the procedure is performed after completion of the present procedure.

For example, in a case of receiving the tenth identification information to the fourteenth identification information, the UE may perform the NSSAI update and/or storage procedure in section 3.3 as a UE having received the first NSSAI.

In a case of receiving the twelfth identification information and/or the thirteenth identification information including the timer value, the UE may start running the timer using the received timer value. The timer value included in the thirteenth identification information may be a back-off timer value, and in this case, the timer run by the UE may be a back-off timer.

The UE may run the timer in association with the S-NSSAI and/or the mapped S-NSSAI indicated in the eleventh identification information. Further, the timer may be associated with the same information as the information with which the S-NSSAI and/or the mapped S-NSSAI indicated in the eleventh identification information is associated.

During running of the timer, the UE may recognize that the condition is as indicated by the timer value and/ perform corresponding management. During running of the timer may mean a period from the start of the timer until the timer expires or is stopped.

In a case of receiving the twelfth identification information and/or the thirteenth identification information including the information indicating the period, the UE may recognize that the period indicated in the information indicating the period corresponds to the condition indicated in the information.

Note that the AMF may select and determine identification information including the identification information in the control message and/or information for providing a notification of the identification information, based on each piece of received identification information, and/or subscriber information, and/or capability information of the network, and/or the operator policy, and/or a state of the network, and/or registration information of the user, and/or a context stored in the AMF, and/or the like.

In a case that the control message is a registration accept message, the AMF can either include and transmit an SM message (for example, a PDU session establishment accept message) in the registration accept message, or transmit an SM message (for example, a PDU session establishment accept message) together with the registration accept message. However, such a transmission method may be performed in a case that an SM message (for example, a PDU session establishment request message) is included in the registration request message. In addition, the transmission method may be performed in a case that the SM message (for example, the PDU session establishment request message) is transmitted along with the registration request message. By performing such a transmission method as described above, the AMF can indicate that a procedure for SM has been accepted in the registration procedure.

In addition, based on each piece of the received identification information, and/or subscriber information, and/or capability information of the network, and/or the operator policy, and/or a state of the network, and/or the registration information of the user, and/or the context stored in the AMF, and/or the like, the AMF may indicate that the request from the UE has been accepted by transmitting a registration accept message, or may indicate that the request from the UE has been rejected by transmitting a registration reject message.

The UE receives the control message via the 5G AN (gNB) (S608). In a case that the control message is a registration accept message, then by receiving the registration accept message, the UE can recognize that the request from the UE on the registration request message has been accepted, and recognize the details of the various pieces of identification information included in the registration accept message. Alternatively, in a case that the control message is a registration reject message, then by receiving the registration reject message, the UE can recognize that the request from the UE using the registration request message has been rejected and recognize the details of the various pieces of identification information included in the registration reject message. In addition, in a case that the UE does not receive the control message even after a prescribed period of time has elapsed after transmitting the registration request message, the UE may recognize that the request from the UE has been rejected.

Furthermore, in a case that the control message is a registration accept message, the UE can further transmit to the AMF a registration complete message as a response message to the registration accept message via the 5G AN (gNB) (S610). Note that, in a case that the UE receives the SM message such as the PDU session establishment accept message, the UE may include and transmit the SM message such as the PDU session establishment completion message in the registration complete message, or may indicate that the procedure for SM has been completed by including the SM message. Here, although the registration complete message is a NAS message transmitted and/or received over the N1 interface, the registration complete message is transmitted and/or received between the UE and the 5G AN (gNB) by being included in an RRC message.

The AMF receives the registration complete message via the 5G AN (gNB) (S612). In addition, each apparatus completes the present procedure based on transmission and/or reception of the registration accept message and/or the registration complete message.

Alternatively, each apparatus may complete the registration procedure based on the transmission and/or the reception of the registration reject message.

Note that each apparatus may transition to or maintain a state in which the UE is registered with the network (an RM_REGISTERED state or a 5GMM-REGISTERED state) based on the transmission and/or reception of the registration accept message and/or the registration complete message or may transition to or maintain a state in which the UE is not registered with the network (an RM _DEREGISTERED state or a 5GMM-DEREGISTERED state) on the access in which the UE has received the registration reject message for the current PLMN or SNPN based on the transmission and/or reception of the registration reject message. Also, the transition of each apparatus to each state may be performed based on transmission and/or reception of the registration complete message, or completion of the registration procedure.

Furthermore, each apparatus may perform processing based on information transmitted and/or received in the registration procedure, based on completion of the registration procedure. For example, in a case that information indicating that a part of the request from the UE has been rejected is transmitted and/or received, the reason for rejection of the request from the UE may be recognized. Furthermore, each apparatus may perform the present procedure again or may perform the registration procedure on the core network_A or another cell based on the reason for the rejection of the request from the UE.

Moreover, the UE may store the identification information received along with the registration accept message and/or the registration reject message or may recognize determination of the network based on the completion of the registration procedure.

Furthermore, the UE may delete stored one or multiple pieces of NSSAI based on completion of the registration procedure. Specifically, the UE_A 10 may delete the stored first rejected NSSAI and/or the third rejected NSSAI and/or the fourth rejected NSSAI in a case that the UE_A 10 has transitioned to the deregistered state on both types of the access (the 3GPP access and the non-3GPP access) for the current PLMN or SNPN based on completion of the present procedure.

Furthermore, the UE_A 10 may delete the second rejected NSSAI associated with the current PLMN or SNPN, the current registration area, and/or the access type thereof in a case that the UE_A 10 has transitioned to the deregistered state with the current PLMN or SNPN on a certain access (the 3GPP access and the non-3GPP access) based on the completion of the present procedure, or in a case that the UE_A 10 has successfully performed the registration procedure in a new registration area, or in a case that the UE_A 10 has transitioned to the deregistered state or the registered state on a certain access as a result of performing the registration procedure in a new registration area.

Further, each apparatus may initiate the registration procedure again, based on expiration or stop of the back-off timer.

Furthermore, each apparatus may initiate the registration procedure again based on the updating of the NSSAI to be stored.

Furthermore, each apparatus may initiate the SM procedure by transmitting and/or receiving the SM message based on a transition to or maintaining of a state in which the UE is registered with the network (RM_REGISTERED state or 5GMM-REGISTERED state).

### 3.2 UE Configuration Update Procedure

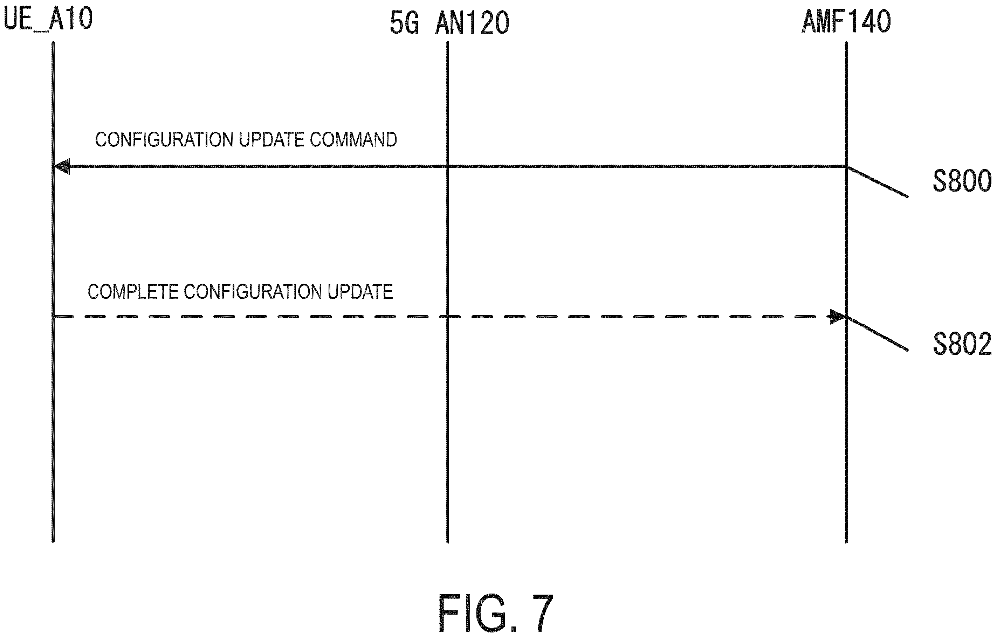

Next, the UE configuration update procedure (generic UE configuration update procedure) will be described with reference to FIG. 7. The UE configuration update procedure is hereinafter also referred to as the present procedure. The present procedure is a procedure for the core network to update the configuration information of the UE. The present procedure may be a procedure for mobility management that is initiated and performed by the network with respect to the UE registered with the network.

Furthermore, apparatuses in the core network, such as the AMF, may initiate the present procedure based on update of a configuration of the network and/or update of the operator policy. Note that the present procedure may be triggered by detection of mobility of the UE, detection of a state change in the UE, and/or the access network, and/or the core network, or a state change in the network slice. Furthermore, the present procedure may be triggered by reception of a request from the DN and/or an application server of the DN, a change in a configuration of the network, or a change in the operator policy. Furthermore, the present procedure may be triggered by expiration of the running timer. Note that a trigger for the apparatus in the core network to initiate the present procedure is not limited to these. In other words, the present procedure may be performed at any timing after the above-described registration procedure and/or PDU session establishment procedure are completed. Furthermore, the present procedure may be performed at any timing in a state in which each apparatus has established a 5GMM context and/or in a state in which each apparatus is in a 5GMM connected mode.

In addition, during the present procedure, each apparatus may transmit and/or receive a message including identification information for changing the configuration information of the UE and/or identification information for stopping or changing the function being performed by the UE. Furthermore, each apparatus may update the configuration information to a configuration indicated by the network, or may start the behavior indicated by the network based on completion of the present procedure.

The UE may update the configuration information of the UE based on control information transmitted and/or received in the present procedure. Furthermore, the UE may stop the function being performed, or may start a new function, along with the update of the configuration information of the UE. In other words, the apparatus in the core network may initiate the present procedure and further transmit a control message and control information of the present procedure to the UE to cause the UE to update the configuration information of the UE that can be identified using these pieces of control information. Furthermore, by causing the configuration information of the UE to be updated, the apparatus in the core network may stop the function performed by the UE, or may cause the UE to start a new function.

First, the AMF 140 transmits a Configuration update command message to the UE_A 10 via the 5G AN 120 (or gNB) (S800), and thereby initiates a UE configuration update procedure.

Further, the new AMF 141 may include the tenth identification information in the configuration update command message and transmit the message in a case that the configuration information of the UE is updated, in a case that the pending NSSAI is included in the configuration update command message, and in a case that the UE supports the function of storing one or more pieces of mapped S-NSSAI of the pending NSSAI.

The UE_A 10 receives, from the network, the configuration update command message and/or the tenth identification information. More specifically, the UE receives, from the new AMF 141, the configuration update command message and/or the tenth identification information.

The UE_A 10 may recognize the received information based on the reception of the tenth identification information.

The AMF 140 may include one or more pieces of the NSSAI about the UE_A 10 (which means the configured NSSAI, the allowed NSSAI, the rejected NSSAI, and the pending NSSAI hereinbelow) in the configuration update command message and transmit the message. Note that, by transmitting one or more pieces of the NSSAI, the AMF may indicate configuration information of new UE or may request update of the configuration information of the UE. Note that information indicating support of each function and information indicating a request for use of each function may be transmitted and/or received as the same piece of identification information, or may be transmitted and/or received as different pieces of identification information.

Furthermore, the AMF 140 may include a TAI list indicating new registration areas in the configuration update command message and transmit the message.

The new AMF 141 may include, in the configuration update command message, at least one piece of identification information of the tenth identification information to the fourteenth identification information and transmit the configuration update command message to the UE. Based on reception of the first identification information, the new AMF 141 may include, in the configuration update command message, at least one piece of identification information of the tenth identification information to the fourteenth identification information and transmit the configuration update command message.

To be specific, in a case that the AMF receives the first identification information in the registration procedure, and/or that the first identification information is information indicating that the UE includes a function of storing the condition information associated with the S-NSSAI and/or controlling the condition information based on the storage, the new AMF 141 may include, in the configuration update command message, at least one piece of identification information of the tenth identification information to the fourteenth identification information and transmit the configuration update command message.

The UE_A 10 receives, from the network, the control message and/or one or multiple pieces of information included in the configuration update command message.

In addition, in a case that multiple pieces of identification information are transmitted and/or received, two or more pieces of identification information of these pieces of identification information may be configured as one or multiple pieces of identification information. Note that information indicating support of each function and information indicating a request for use of each function may be transmitted and/or received as the same piece of identification information, or may be transmitted and/or received as different pieces of identification information.

Note that the AMF 140 may select and determine whether to include each piece of the NSSAI and the TAI list in the configuration update command message based on each piece of the received identification information, and/or the subscriber information, and/or the capability information of the network, and/or the operator policy, and/or the state of the network, and/or the registration information of the user, and/or the context stored in the AMF 140, and/or the like.

In addition, by transmitting the configuration update command message based on each piece of received identification information, and/or subscriber information, and/or capability information of the network, and/or the operator policy, and/or a state of the network, and/or registration information of the user, and/or a context stored in the AMF 140, and/or the like, the AMF 140 may indicate a request for update of the configuration information of the UE_A 10.

The UE_A 10 receives the configuration update command message from the AMF 140 via the 5G AN 120(or gNB) (S800). The UE_A 10 may update the configuration information of the UE based on the configuration update command message, and/or the identification information included in the configuration update command message.

In a case of receiving the TAI list indicating the registration area, the UE_A 10 may validate the received TAI list indicating the registration area. In a case of already storing the valid TAI list indicating the registration area, the UE_A 10 may delete or invalidate the old TAI list indicating the registration area. Hereinafter, the valid TAI list indicating the registration area may be referred to as a registration area. Note that, in a case that the UE_A 10 stores no valid TAI list indicating the registration area and has received no TAI list indicating the registration area, from the core network during the present procedure, then the UE_A 10 may be in a state in which no valid TAI list indicating the registration area is stored.

In addition, the UE_A 10 may appropriately store each piece of the received NSSAI. Furthermore, the stored information about the NSSAI of the UE_A 10 may be updated based on the received NSSAI. Furthermore, the information about the NSSAI stored in the UE_A 10 may be deleted and/or updated based on the state of the UE_A 10. The specific behavior of the method for updating the storage of the NSSAI by the UE_A 10 and the condition for updating are described in the NSSAI update and/or storage procedure in section 3.3.

Note that the NSSAI update and/or storage procedure in section 3.3 may be performed during the present procedure or after completion of the present procedure or may be performed based on completion of the present procedure after completion of the present procedure.

In addition to the NSSAI update and/or storage procedure, the behavior of each apparatus based on the transmission and/or reception of the configuration update command message and/or the identification information included in the configuration update command message may be the behavior of each apparatus based on the transmission and/or reception of the control message and/or the identification information included in the control message in the registration procedure in the present embodiment.

Based on the identification information included in the configuration update command message, the UE may transmit a Configuration update complete message to the AMF 140 via the 5G AN (gNB) as a response message to the configuration update command message (S802).

In a case that the UE_A 10 has transmitted the configuration update completion command message, the AMF 140 receives the configuration update completion message via the 5G AN (gNB) (S802). In addition, each apparatus completes the present procedure based on transmission and/or reception of the configuration update command message and/or the configuration update completion message.

Furthermore, each apparatus may perform processing based on the information transmitted and/or received in the present procedure based on completion of the present procedure. For example, in a case that update information for the configuration information has been transmitted and/or received, each apparatus may update the configuration information. Furthermore, in a case that information indicating that the registration procedure needs to be performed is transmitted and/or received, the UE_A 10 may initiate the registration procedure based on completion of the present procedure.

Furthermore, the UE_A 10 may store identification information received together with the configuration information command message, or may recognize determination of the network based on completion of the present procedure. In addition, the UE may perform each procedure based on the stored information based on completion of the present procedure.

By transmitting and/or receiving the configuration update command message in the above-described procedure, the apparatuses in the core network can indicate to the UE to update the configuration information already applied by the UE and indicate to the UE to stop or change the function performed by the UE.

### 3.3. NSSAI Update and/or Storage Procedure

Hereinafter, the procedure for updating and/or storing each piece of NSSAI stored in the UE_A 10 will be described. Note that the NSSAI update procedure by the UE may be performed during the other procedures described in section 3, or may be performed based on completion of each procedure. The aforementioned procedure may also be performed during other procedures or based on completion of other procedures. The other procedures may be, for example, a Deregistration procedure or a UE configuration update procedure.

In a case that the UE_A 10 receives the configured NSSAI, the UE_A 10 may store the received configured NSSAI as "configured NSSAI associated with the current PLMN or SNPN". That is, the UE_A 10 may replace the "configured NSSAI stored in the UE_A 10 and associated with the current PLMN or SNPN" with the "received configured NSSAI".

Furthermore, in a case that the UE_A 10 receives the configured NSSAI, the UE_A 10 may delete the mapped S-NSSAI of the S-NSSAI included in the "configured NSSAI stored in the UE_A 10 and associated with the current PLMN or SNPN". Furthermore, in a case that one or multiple pieces of mapped S-NSSAI are included in the "received configured NSSAI", the UE_A 10 may store the one or multiple pieces of mapped S-NSSAI.

Furthermore, in a case that the UE_A 10 receives the configured NSSAI, the UE_A 10 may delete the "rejected NSSAI stored in the UE_A 10 and associated with the current PLMN or SNPN".

Alternatively, in a case that the UE_A 10 receives the configured NSSAI, the UE_A 10 may delete at least one of "the first rejected NSSAI stored in the UE_A 10 and associated with the current PLMN or SNPN", "the second rejected NSSAI stored in the UE_A 10 and associated with the current PLMN or SNPN", and "the third rejected NSSAI stored in the UE_A 10 and associated with the current PLMN".

Furthermore, in a case that the UE_A 10 receives the configured NSSAI, the UE_A 10 may delete "the fourth rejected NSSAI stored in the UE_A 10" and/or "the fourth rejected NSSAI stored in the UE_A 10 and associated with the current PLMN or SNPN" and/or one or multiple pieces of "fourth rejected NSSAI stored in the UE_A 10 and associated with the EPLMN of the current PLMN or the ESNPN of the current SNPN".

Furthermore, in a case that the UE_A 10 receives the configured NSSAI, the UE_A 10 may delete the "pending NSSAI stored in the UE_A 10" and/or the "pending NSSAI stored in the UE_A 10 and associated with the current PLMN or SNPN" and/or one or multiple pieces of "pending NSSAI stored in the UE_A 10 and associated with the EPLMN of the current PLMN or the ESNPN of the current SNPN" and/or "one or more pieces of mapped S-NSSAI with respect to the pending NSSAI stored in the UE_A 10 and associated with the current PLMN or SNPN" and/or one or multiple pieces of "one or more pieces of mapped S-NSSAI of the second pending NSSAI stored in the UE_A 10 and associated with the EPLMN of the current PLMN or the ESNPN of the current SNPN".

Furthermore, in a case that the UE_A 10 receives the configured NSSAI, the UE_A 10 may delete the "first NSSAI stored in the UE_A 10", and/or the "first NSSAI stored in the UE_A 10 and associated with the current PLMN or SNPN", and/or one or multiple pieces of "first NSSAI stored in the UE_A 10 and associated with the EPLMN of the current PLMN or the ESNPN of the current SNPN", and/or "one or more pieces of mapped S-NSSAI for the first NSSAI stored in the UE_A 10 and associated with the current PLMN or SNPN", and/or one or multiple pieces of "one or more pieces of mapped S-NSSAI of the first NSSAI stored in the UE_A 10 and associated with the EPLMN of the current PLMN or the ESNPN of the current SNPN".

Furthermore, in a case that the UE_A 10 receives the allowed NSSAI, the UE_A 10 may store the received allowed NSSAI as the "allowed NSSAI associated with current PLMN or SNPN and current access type". That is, the UE_A 10 may replace the "allowed NSSAI associated with the current PLMN or SNPN and the current access type" stored in the UE_A 10 with the "received allowed NSSAI".

Furthermore, in a case that the UE_A 10 receives the TAI list and the allowed NSSAI from the new AMF 141, and further in a case that at least one TAI included in the TAI list belongs to the EPLMN or ESNPN, the UE_A 10 may replace the "allowed NSSAI associated with the EPLMN or ESNPN to which the TAI included in the TAI list belongs and the current access type" with the received allowed NSSAI.

Note that, in a case that the allowed NSSAI is to be stored, the UE_A 10 may store the allowed NSSAI in association with a registration area, or may store the S-NSSAI included in the allowed NSSAI in association with a registration area.

In a case that the UE_A 10 receives the allowed NSSAI, the UE_A 10 may delete the mapped S-NSSAI of the S-NSSAI included in "allowed NSSAI deleted based on reception" or "old allowed NSSAI updated based on reception". Furthermore, in a case that mapped S-NSSAI is included in the "received allowed NSSAI IE" at the UE_A 10, the UE_A 10 may store the one or multiple pieces of mapped S-NSSAI.

In a case that the UE_A 10 receives the allowed NSSAI, the UE_A 10 may delete the S-NSSAI of the "rejected NSSAI stored in the UE_A 10 and associated with the current PLMN or SNPN".

In a case that the UE_A 10 receives the Allowed NSSAI, the UE_A 10 may delete the S-NSSAI included in the received Allowed NSSAI from the first rejected NSSAI and/or the second rejected NSSAI stored in the UE_A 10 under the following conditions. The condition for deleting the S-NSSAI from the first rejected NSSAI and/or the second rejected NSSAI stored in the UE_A 10 may be: a case that the UE_A 10 is not roaming; a case that the mapped S-NSSAI of the S-NSSAI is not stored in the UE_A 10 as a set of pieces of mapped S-NSSAI of the first rejected NSSAI and/or the second rejected NSSAI; a case that the mapped S-NSSAI of the S-NSSAI is stored in at least one piece of UE_A 10 in the set of pieces of mapped S-NSSAI of the first rejected NSSAI and/or the second rejected NSSAI stored in the UE_A 10 and further all pieces of the mapped S-NSSAI are included in the Allowed NSSAI received by the UE; a case that the mapped S-NSSAI of the S-NSSAI is not included in the Allowed NSSAI received by the UE_A 10; or a case that the S-NSSAI is not associated with multiple pieces of mapped S-NSSAI.

In a case that the UE_A 10 receives the Allowed NSSAI, the UE_A 10 may delete the S-NSSAI included in the received Allowed NSSAI from the first rejected NSSAI and/or the second rejected NSSAI stored in the UE_A 10. The condition for not deleting the S-NSSAI from the first rejected NSSAI and/or the second rejected NSSAI stored in the UE_A 10 may be a case that the UE_A 10 is roaming, and/or a case that the UE_A 10 stores the mapped S-NSSAI of the S-NSSAI in the list (set) of pieces of the mapped S-NSSAI of the first rejected NSSAI and/or the second rejected NSSAI and/or the mapped S-NSSAI is associated with multiple pieces of mapped S-NSSAI, and/or a case that none of the pieces of mapped S-NSSAI is included in the new Allowed NSSAI and/or pending NSSAI.

Note that the condition for deleting the S-NSSAI included in the received Allowed NSSAI from the fourth rejected NSSAI and/or the pending NSSAI stored in the UE_A 10 may be the same as the condition for deleting the S-NSSAI included in the received Allowed NSSAI from the first rejected NSSAI and/or the second rejected NSSAI stored in the UE_A 10.

In a case that the UE_A 10 stores mapped S-NSSAI of the first rejected NSSAI and/or mapped S-NSSAI of the second rejected NSSAI during roaming, the UE_A 10 deletes the S-NSSAI included in the new Allowed NSSAI from the stored first rejected NSSAI and/or the stored second rejected NSSAI except in a case that the UE_A 10 receives an Allowed NSSAI IE including the list of the mapped S-NSSAI of the new Allowed NSSAI, and a case that the UE_A 10 stores one or multiple pieces of mapped S-NSSAI not included in the list of pieces of mapped S-NSSAI of the new Allowed NSSAI, the one or multiple pieces of mapped S-NSSAI being included in the list of pieces of the mapped S-NSSAI of the first rejected NSSAI and/or the list of pieces of the mapped S-NSSAI of the second rejected NSSAI stored in the UE_A 10.

In other words, in a case that the UE_A 10 stores mapped S-NSSAI of the first rejected NSSAI and/or mapped S-NSSAI of the second rejected NSSAI during roaming, the UE_A 10 deletes the S-NSSAI included in the new Allowed NSSAI from the stored first rejected NSSAI and/or the stored second rejected NSSAI except in a case that the UE_A 10 receives an Allowed NSSAI IE including the list of the mapped S-NSSAI of the new Allowed NSSAI, and a case that there are one or multiple pieces of mapped S-NSSAI not included in the list of pieces of mapped S-NSSAI of the new Allowed NSSAI, the one or multiple pieces of mapped S-NSSAI being included in the list of pieces of the mapped S-NSSAI of the first rejected NSSAI and/or the list of pieces of the mapped S-NSSAI of the second rejected NSSAI stored in the UE_A 10.

In other words, in a case that the UE_A 10 stores the mapped S-NSSAI of the first rejected NSSAI and/or the mapped S-NSSAI of the second rejected NSSAI during roaming, and receives an Allowed NSSAI IE including the list of pieces of the mapped S-NSSAI of the new Allowed NSSAI, the S-NSSAI to be deleted from the mapped S-NSSAI of the first rejected NSSAI and/or the second rejected NSSAI stored in the UE_A 10 is included in the received Allowed NSSAI, and further the S-NSSAI included in the list of piece of the mapped S-NSSAI of the Allowed NSSAI mapped to the S-NSSAI includes all pieces of the S-NSSAI included in the list of pieces of the mapped S-NSSAI of the first rejected NSSAI and/or the S-NSSAI included in the list of pieces of the mapped S-NSSAI of the second rejected NSSAI mapped to the S-NSSAI.

In a case that the UE_A 10 is non-roaming or in a case that the UE_A 10 stores neither the mapped S-NSSAI of the first rejected NSSAI nor the mapped S-NSSAI of the second rejected NSSAI while the UE_A 10 is roaming, and a case that the UE_A 10 receives the Allowed NSSAI IE including new Allowed NSSAI, the UE_A 10 deletes the S-NSSAI included in the new Allowed NSSAI from the stored first rejected NSSAI and/or second rejected NSSAI.

The UE_A 10 may behave not to delete the S-NSSAI of the current PLMN or SNPN included in the new Allowed NSSAI from the first rejected NSSAI and/or the second rejected NSSAI in a case that the UE receives the Allowed NSSAI during roaming.

The UE_A 10 may behave to delete the S-NSSAI of the current PLMN or SNPN included in the new Allowed NSSAI from the first rejected NSSAI and/or the second rejected NSSAI in a case that the UE receives the Allowed NSSAI during roaming.

In a case that the UE_A 10 stores the first information including the S-NSSAI and the mapped S-NSSAI in each piece of NSSAI during roaming, the UE_A 10 may delete the combination of the S-NSSAI and the mapped S-NSSAI included in the received Allowed NSSAI IE from the first rejected NSSAI and/or the second rejected NSSAI and a set of mapped S-NSSAI of the first rejected NSSAI and/or a set of mapped S-NSSAI of the second rejected NSSAI.

To be specific, in a case that the UE_A 10 receives the allowed NSSAI, the UE_A 10 may delete the S-NSSAI included in the received allowed NSSAI and/or the mapped S-NSSAI of the received allowed NSSAI from at least one of the "first rejected NSSAI stored in the UE_A 10 and associated with the current PLMN or SNPN", the "second rejected NSSAI stored in the UE_A 10 and associated with the current PLMN or SNPN", the "second rejected NSSAI stored in the UE_A 10 and associated with the current PLMN or SNPN, and the current registration area", and the "third rejected NSSAI stored in the UE_A 10 and associated with the current PLMN or SNPN", and may delete the S-NSSAI included in the received allowed NSSAI and/or the mapped S-NSSAI of the received allowed NSSAI from all pieces of the NSSAI.

Furthermore, in a case that the UE_A 10 receives the allowed NSSAI, the UE_A 10 may delete the S-NSSAI included in the received allowed NSSAI from the "first pending NSSAI stored in the UE_A 10 and associated with the current PLMN or SNPN (during non-roaming)" or the "second pending NSSAI stored in the UE_A 10 and associated with the current PLMN or SNPN". Furthermore, in a case that the UE_A 10 receives the allowed NSSAI, the UE_A 10 may delete the mapped S-NSSAI included in the received allowed NSSAI IE from the "first pending NSSAI stored in the UE_A 10 (during roaming)". Furthermore, in a case that the UE_A 10 receives the allowed NSSAI, the UE_A 10 may delete the S-NSSAI included in the received allowed NSSAI from the "pending NSSAI stored in the UE_A 10 and associated with the EPLMN or ESNPN".

Furthermore, the UE may stop the back-off timer in a case that the back-off timer that restricts use of certain S-NSSAI is running, that the S-NSSAI is included in new allowed NSSAI, or that the S-NSSAI is mapped S-NSSAI of the allowed NSSAI.

Here, in a roaming scenario, in a case that the S-NSSAI included in the pending NSSAI is the S-NSSAI of the HPLMN or HSNPN, and that the UE_A 10 receives the allowed NSSAI, the UE_A 10 may delete the mapped S-NSSAI of the S-NSSAI included in the received new allowed NSSAI from the "pending NSSAI stored in the UE_A 10". At this time, in the roaming scenario, the allowed NSSAI may be associated with the PLMN ID or the SNPN ID indicating the current PLMN or the current SNPN, i.e., the RPLMN or the RSNPN.

Furthermore, in a case that the UE_A 10 receives the allowed NSSAI, the UE_A 10 may delete the S-NSSAI included in the received allowed NSSAI from the "fourth rejected NSSAI stored in the UE_A 10 and associated with the current PLMN or SNPN".

Furthermore, in a case that the UE_A 10 receives the allowed NSSAI, the UE_A 10 may delete the S-NSSAI included in the received allowed NSSAI from the "first NSSAI stored in the UE_A 10 and associated with the current PLMN or SNPN (during non-roaming)" or the "first NSSAI stored in the UE_A 10 and associated with the current PLMN or SNPN". Furthermore, in a case of receiving the allowed NSSAI, the UE_A 10 may delete the mapped S-NSSAI included in the received allowed NSSAI IE from the "first NSSAI stored in the UE_A 10 (during roaming)". Furthermore, in a case of receiving the allowed NSSAI, the UE_A 10 may delete the S-NSSAI included in the received allowed NSSAI from the "first NSSAI stored in the UE_A 10 and associated with the EPLMN or ESNPN".

Furthermore, in a case that the back-off timer that restricts the use of S-NSSAI included in the first NSSAI is running, the UE may stop the back-off timer in a case that the S-NSSAI is included in new allowed NSSAI, or that the S-NSSAI is mapped S-NSSAI of the allowed NSSAI.

Here, in a roaming scenario, in a case that the S-NSSAI included in the first NSSAI is the S-NSSAI of the HPLMN or HSNPN, and that the UE_A 10 receives the allowed NSSAI, the UE_A 10 may delete the mapped S-NSSAI of the S-NSSAI included in the received new allowed NSSAI from the "first NSSAI stored in the UE_A 10". At this time, in the roaming scenario, the allowed NSSAI may be associated with the PLMN ID or the SNPN ID indicating the current PLMN or the current SNPN, i.e., the RPLMN or the RSNPN.

Furthermore, in a case that the UE_A 10 receives rejected NSSAI, the UE_A 10 may store the S-NSSAI included in the received rejected NSSAI as appropriate rejected NSSAI based on a rejection cause value with which the S-NSSAI is associated. In other words, the UE_A 10 may add the "S-NSSAI included in the received rejected NSSAI" to the rejected NSSAI stored in the UE_A 10.

To be specific, in a case that the UE_A 10 receives the rejection cause value "S-NSSAI not available in the current PLMN or SNPN" and the rejected S-NSSAI associated with the rejection cause value, the UE_A 10 may add the S-NSSAI to first rejected NSSAI associated with the current PLMN or SNPN.

Furthermore, in a case that the UE_A 10 receives the rejection cause value "S-NSSAI not available in the current registration area" and the rejected S-NSSAI associated with the rejection cause value, the UE_A 10 may add the "received rejected S-NSSAI" to the "second rejected NSSAI associated with the current PLMN or SNPN and the current registration area".

Furthermore, in a case that the UE_A 10 receives the rejection cause value "S-NSSAI not available due to failed or revoked NSSAA" and the rejected S-NSSAI associated with the rejection cause value, the UE_A 10 may add the "received rejected S-NSSAI" to the "third rejected NSSAI". In that case, the third rejected NSSAI may be associated with the current PLMN or SNPN.

Note that, in a case that the UE_A 10 receives the TAI list together with the rejected NSSAI, the current registration area is indicated by the received TAI list. On the other hand, in a case that the UE_A 10 has not received the TAI list together with the rejected NSSAI, the current registration area is indicated by the TAI list previously received and stored in the UE_A 10.

Furthermore, in a case that the UE_A 10 receives the rejection cause value "S-NSSAI not available due to failed or revoked NSSAA" and the rejected NSSAI including the rejected S-NSSAI associated with the rejection cause value, the UE_A 10 may add and/or store the S-NSSAI to and/or in the "third rejected NSSAI". Note that, in a case that the UE stores the third rejected NSSAI associated with the current PLMN or SNPN, the received S-NSSAI may be added to and/or stored in the third rejected NSSAI associated with the current PLMN or SNPN.

Furthermore, in a case that the UE_A 10 receives the rejected NSSAI, the UE_A 10 may delete the S-NSSAI included in the received rejected NSSAI from the "allowed NSSAI stored in the UE_A 10 and associated with the current PLMN or SNPN".

Here, in a case that the UE_A 10 receives the rejected NSSAI including the S-NSSAI of the HPLMN or HSNPN, and further in a case that the mapped S-NSSAI of the S-NSSAI included in the "allowed NSSAI stored in the UE_A 10 and associated with the current PLMN or SNPN" is included in the rejected NSSAI received by the UE_A 10, the UE_A 10 may delete the S-NSSAI from the "allowed NSSAI stored in the UE_A 10 and associated with the current PLMN or SNPN".

Furthermore, in a case that the UE_A 10 receives the rejected NSSAI, the UE_A 10 may delete the S-NSSAI included in the received rejected NSSAI from the "first pending NSSAI stored in the UE_A 10 and associated with the current PLMN or SNPN (during non-roaming)" and/or the "second pending NSSAI stored in the UE_A 10 and associated with the current PLMN or SNPN". Furthermore, in a case that the UE_A 10 receives the rejected NSSAI, further the UE_A 10 may delete the mapped S-NSSAI or the S-NSSAI included in the received allowed NSSAI IE from the "first pending NSSAI stored in the UE_A 10". Furthermore, in a case that the UE_A 10 receives the rejected NSSAI, the UE_A 10 may delete the S-NSSAI included in the received allowed NSSAI from the "pending NSSAI stored in the UE_A 10 and associated with the EPLMN or ESNPN".

Furthermore, in a case that the UE_A 10 receives the allowed NSSAI, the UE_A 10 may delete the S-NSSAI included in the received allowed NSSAI from the "fourth rejected NSSAI stored in the UE_A 10 and associated with the current PLMN or SNPN".

In a case that the UE_A 10 receives one or multiple pieces of S-NSSAI included in the rejected NSSAI, the UE_A 10 may store the S-NSSAI based on the rejection cause value associated with each piece of the S-NSSAI. Specifically, the UE_A 10 may store the S-NSSAI included in the received rejected NSSAI included in each piece of the rejected NSSAI stored in the UE_A 10 and/or a set of the mapped S-NSSAI of each piece of the rejected NSSAI.

Furthermore, to be more specific, in a case that the UE_A 10 receives the rejected NSSAI IE or the Extended rejected NSSAI IE, and further in a case that rejected S-NSSAI #1 included in the rejected NSSAI IE or the Extended rejected NSSAI IE includes the S-NSSAI #1 and the rejection cause value indicating "S-NSSAI not available in the current PLMN or SNPN", the UE_A 10 may include and store the S-NSSAI #1 in the first rejected NSSAI stored in the UE.

Similarly, in a case that the UE_A 10 receives the rejected NSSAI IE or the Extended rejected NSSAI IE, and further in a case that the rejected S-NSSAI #1 included in the rejected NSSAI IE or the Extended rejected NSSAI IE includes the S-NSSAI #1 and the rejection cause value indicating "S-NSSAI not available in the current registration area", the UE_A 10 may include and store the S-NSSAI #1 in the second rejected NSSAI stored in the UE.

Similarly, in a case that the UE_A 10 receives the rejected NSSAI IE or the Extended rejected NSSAI IE, and further in a case that the rejected S-NSSAI #1 included in the rejected NSSAI IE or the Extended rejected NSSAI IE includes the S-NSSAI #1 and the rejection cause value indicating "S-NSSAI not available due to failed or revoked NSSAA", the UE_A 10 may include and store the S-NSSAI #1 in the third rejected NSSAI stored in the UE.

Alternatively, in a case that the UE_A 10 receives an Extended rejected NSSAI IE, and further in a case that the rejected S-NSSAI #1 included in the Extended rejected NSSAI IE includes the S-NSSAI #1, mapped S-NSSAI #1, and the rejection cause value indicating "S-NSSAI not available in the current PLMN or SNPN", the UE_A 10 may include and store the S-NSSAI #1 in the first rejected NSSAI stored in the UE, and include and store the mapped S-NSSAI1 #1 in a set of mapped S-NSSAI of the first rejected NSSAI. Alternatively, under the same condition, the UE_A 10 may include and store the combination of the S-NSSAI #1 and the mapped S-NSSAI1 #1 in the first rejected NSSAI stored in the UE.

Similarly, in a case that the UE_A 10 receives the rejected NSSAI IE or the Extended rejected NSSAI IE, and further in a case that the rejected S-NSSAI #1 included in the rejected NSSAI IE or the Extended rejected NSSAI IE includes the S-NSSAI #1 and the rejection cause value indicating "S-NSSAI not available in the current registration area", the UE_A 10 may include and store the S-NSSAI #1 in the second rejected NSSAI stored in the UE. Alternatively, under the same condition, the UE_A 10 may include and store the combination of the S-NSSAI #1 and the mapped S-NSSAI1 #1 in the first rejected NSSAI stored in the UE.

Similarly, in a case that the UE_A 10 receives the rejected NSSAI IE or the Extended rejected NSSAI IE, and further in a case that the rejected S-NSSAI #1 included in the rejected NSSAI IE or the Extended rejected NSSAI IE includes the S-NSSAI #1 and the rejection cause value indicating "S-NSSAI not available due to failed or revoked NSSAA", the UE_A 10 may include and store the S-NSSAI #1 in the third rejected NSSAI stored in the UE. Alternatively, under the same condition, the UE_A 10 may include and store the combination of the S-NSSAI #1 and the mapped S-NSSAI1 #1 in the first rejected NSSAI stored in the UE.

In a case the UE_A 10 receives the rejected NSSAI, the UE_A 10 may delete, from the Allowed NSSAI stored in the UE_A 10, the S-NSSAI included in the first rejected NSSAI and/or the second rejected NSSAI included in the received rejected NSSAI under the following condition. The condition for deleting the S-NSSAI from the Allowed NSSAI stored in the UE_A 10 may be: the case that the UE_A 10 is not roaming; a case that the mapped S-NSSAI of the S-NSSAI is included a set of pieces of mapped S-NSSAI of the Allowed NSSAI but is not stored in the UE_A 10; a case that the mapped S-NSSAI of the S-NSSAI is stored in at least one piece of UE_A 10 in the set of pieces of mapped S-NSSAI of the Allowed NSSAI stored in the UE_A 10 and further all pieces of the mapped S-NSSAI are included in the first rejected NSSAI and/or the second rejected NSSAI received by the UE; a case that the mapped S-NSSAI of the S-NSSAI is not included in the first rejected NSSAI and/or the second rejected NSSAI received by the UE_A 10; or a case that the S-NSSAI is not associated with multiple pieces of mapped S-NSSAI.

Note that the case that the mapped S-NSSAI of the S-NSSAI is not included in the first rejected NSSAI and/or the second rejected NSSAI received by the UE_A 10 may be a case that the UE_A 10 receives the first rejected NSSAI and/or the second rejected NSSAI included in the rejected NSSAI IE, or a case that the UE_A 10 receives the Extended rejected NSSAI IE not including the mapped S-NSSAI, including the rejected S-NSSAI IE, and including the first rejected NSSAI and/or the second rejected NSSAI.

In a case the UE_A 10 receives the rejected NSSAI, the UE_A 10 may delete, from the Allowed NSSAI stored in the UE_A 10, the S-NSSAI included in the first rejected NSSAI and/or the second rejected NSSAI included in the received rejected NSSAI. The condition for not deleting the S-NSSAI from the Allowed NSSAI stored in the UE_A 10 may be a case that the UE_A 10 is roaming, and/or a case that the UE_A 10 stores the mapped S-NSSAI for the S-NSSAI in the list (set) of pieces of mapped S-NSSAI of the Allowed NSSAI and/or the mapped S-NSSAI is associated with multiple pieces of mapped S-NSSAI, and/or a case that none of the pieces of mapped S-NSSAI is included in the first rejected NSSAI and/or the second rejected NSSAI included in the Extended rejected NSSAI IE received by the UE_A 10.

Note that the condition for deleting the S-NSSAI included in the first rejected NSSAI and/or the second rejected NSSAI included in the received rejected NSSAI from the fourth rejected NSSAI stored in the UE_A 10 may be the same as the condition for deleting the S-NSSAI included in the first rejected NSSAI and/or the second rejected NSSAI included in the received rejected NSSAI from the Allowed NSSAI stored in the UE_A 10.

In a case that the UE_A 10 receives the first rejected NSSAI or the second rejected NSSAI during roaming and a case that one or multiple pieces of mapped S-NSSAI of the S-NSSAI included in the Allowed NSSAI are not all included in the first rejected NSSAI and/or the second rejected NSSAI, and other mapped S-NSSAI or some mapped S-NSSAI is included in the first rejected NSSAI and/or the second rejected NSSAI in association with the S-NSSAI, the UE_A 10 may behave not to delete the S-NSSAI from the Allowed NSSAI.

In a case that the UE_A 10 receives the first rejected NSSAI and/or the second rejected NSSAI during roaming, the UE_A 10 may behave not to delete the S-NSSAI of the current PLMN or SNPN that is included in the first rejected NSSAI and/or the second rejected NSSAI from the Allowed NSSAI.

In a case that the UE_A 10 receives the first rejected NSSAI and/or the second rejected NSSAI during roaming, the UE_A 10 may delete the S-NSSAI of the current PLMN or SNPN that is included in the first rejected NSSAI and/or the second rejected NSSAI from the Allowed NSSAI.

In a case that the UE_A 10 includes and stores first information including the S-NSSAI and the mapped S-NSSAI in each piece of NSSAI during roaming, the UE_A 10 may delete the combination of the S-NSSAI included in the received Extended rejected NSSAIIE and the mapped S-NSSAI from the Allowed NSSAI and the set of the mapped S-NSSAI of the Allowed NSSAI.

In a case that the UE_A 10 receives the rejected NSSAI, the UE_A 10 may delete the S-NSSAI included in the received rejected NSSAI from the Allowed NSSAI of the current PLMN or SNPN and/or the set of mapped S-NSSAI of the Allowed NSSAI of the current PLMN or SNPN.

To be specific, in a case that the UE_A 10 receives the third rejected NSSAI, and further during roaming, the UE_A 10 may delete the S-NSSAI included in the third rejected NSSAI from the set of mapped S-NSSAI of the stored Allowed NSSAI.

In a case that the UE_A 10 receives the third rejected NSSAI, and further in the case that the UE is not roaming, the UE_A 10 may delete the S-NSSAI included in the stored Allowed NSSAI and the third rejected NSSAI.

In a case that the UE_A 10 receives the first rejected NSSAI and/or the second rejected NSSAI included in the Extended rejected NSSAI IE, and further during roaming, the UE_A 10 may delete the mapped S-NSSAI included in the first rejected NSSAI and/or the second rejected NSSAI included in the received Extended rejected NSSAI IE from the set of the mapped S-NSSAI of the stored Allowed NSSAI.

In a case that the UE_A 10 receives the rejected NSSAI, the UE_A 10 may delete the S-NSSAI included in the first rejected NSSAI and/or the second rejected NSSAI included in the received rejected NSSAI from the pending NSSAI stored in the UE_A 10 under the following condition. The condition for deleting the S-NSSAI from the pending NSSAI stored in the UE_A 10 may be: the case that the UE_A 10 is not roaming; a case that the mapped S-NSSAI of the S-NSSAI is included in the set of pieces of mapped S-NSSAI of the Allowed NSSAI but is not stored in the UE_A 10; a case that the mapped S-NSSAI of the S-NSSAI is stored in at least one piece of UE_A 10 in the mapped S-NSSAI of the pending NSSAI stored in the UE_A 10 and further all pieces of the mapped S-NSSAI are included in the first rejected NSSAI and/or the second rejected NSSAI received by the UE; a case that the mapped S-NSSAI of the S-NSSAI is not included in the second rejected NSSAI and/or received by the UE_A 10; or a case that the S-NSSAI is not associated with multiple pieces of mapped S-NSSAI.

Note that the case that the mapped S-NSSAI of the S-NSSAI is not included in the first rejected NSSAI and/or the second rejected NSSAI received by the UE_A 10 may be a case that the UE_A 10 receives the first rejected NSSAI and/or the second rejected NSSAI included in the rejected NSSAI IE, or a case that the UE_A 10 receives the Extended rejected NSSAI IE not including the mapped S-NSSAI, including the rejected S-NSSAI IE, and including the first rejected NSSAI and/or the second rejected NSSAI.

In a case of that the UE_A 10 receives the rejected NSSAI, the UE_A 10 may not delete, from the Pending NSSAI stored in the UE_A 10, the S-NSSAI included in the first rejected NSSAI and/or the second rejected NSSAI included in the received rejected NSSAI. The condition for not deleting the S-NSSAI from the Pending NSSAI stored in the UE_A 10 may be the case that the UE_A 10 is roaming, and/or a case that the UE_A 10 stores the mapped S-NSSAI of the S-NSSAI in the list (set) of pieces of mapped S-NSSAI of the Pending NSSAI and/or the mapped S-NSSAI is associated with multiple pieces of mapped S-NSSAI, and/or a case that none of the pieces of mapped S-NSSAI is included in the first rejected NSSAI and/or the second rejected NSSAI included in the Extended rejected NSSAI IE received by the UE_A 10.

In other words, in a case that the UE_A 10 receives the first rejected NSSAI or the second rejected NSSAI during roaming and one or multiple pieces of mapped S-NSSAI of the S-NSSAI included in the Pending NSSAI are not all included in the first rejected NSSAI and/or the second rejected NSSAI, and in a case that other mapped S-NSSAI or some mapped S-NSSAI is included in the first rejected NSSAI and/or the second rejected NSSAI in association with the S-NSSAI, the UE_A 10 may behave not to delete the above-described S-NSSAI from the Pending NSSAI.

In a case that the UE_A 10 receives the first rejected NSSAI and/or the second rejected NSSAI during roaming, the UE_A 10 may behave not to delete the S-NSSAI of the current PLMN or SNPN that is included in the first rejected NSSAI and/or the second rejected NSSAI from the pending NSSAI.

In a case that the UE_A 10 receives the first rejected NSSAI and/or the second rejected NSSAI during roaming, the UE_A 10 may delete the S-NSSAI of the current PLMN or SNPN that is included in the first rejected NSSAI and/or the second rejected NSSAI from the Pending NSSAI.

In a case that the UE_A 10 includes and stores first information including the S-NSSAI and the mapped S-NSSAI in each piece of NSSAI during roaming, the UE_A 10 may delete the combination of the S-NSSAI included in the received Extended rejected NSSAIIE and the mapped S-NSSAI from the Pending NSSAI and the set of the mapped S-NSSAI of the Allowed NSSAI.

In a case that the UE_A 10 receives the rejected NSSAI, the UE_A 10 may delete the S-NSSAI included in the received rejected NSSAI from the Allowed NSSAI of the current PLMN or SNPN and/or the set of mapped S-NSSAI of the Allowed NSSAI of the current PLMN or SNPN.

To be specific, in a case that the UE_A 10 receives the third rejected NSSAI, and further during roaming, the UE_A 10 may delete the S-NSSAI included in the third rejected NSSAI from the set of mapped S-NSSAI of the stored Allowed NSSAI.

In a case that the UE_A 10 receives the third rejected NSSAI, and further in the case that the UE is not roaming, the UE_A 10 may delete the S-NSSAI included in the stored pending NSSAI and the third rejected NSSAI.

In a case that the UE_A 10 receives the first rejected NSSAI and/or the second rejected NSSAI included in the Extended rejected NSSAI IE, and further during roaming, the UE_A 10 may delete the mapped S-NSSAI included in the first rejected NSSAI and/or the second rejected NSSAI included in the received Extended rejected NSSAI IE from the set of the mapped S-NSSAI of the stored pending NSSAI.

Furthermore, in a case that the UE_A 10 receives the rejected NSSAI, the UE_A 10 may delete the S-NSSAI included in the received rejected NSSAI from the "fourth rejected NSSAI stored in the UE_A 10 and associated with the current PLMN or SNPN". Furthermore, in a case that the UE_A 10 receives the rejected NSSAI, the UE_A 10 may delete the S-NSSAI included in the received allowed NSSAI from the "fourth rejected NSSAI stored in the UE_A 10 and associated with the EPLMN or ESNPN".

Furthermore, in a case that the back-off timer restricting use of certain S-NSSAI is running, the UE may stop the back-off timer in a case that the S-NSSAI or mapped S-NSSAI of the S-NSSAI is included in the first to third rejected NSSAI.

Furthermore, in a case that the UE_A 10 receives the pending NSSAI, the UE_A 10 may replace the pending NSSAI stored in the UE_A 10 with new pending NSSAI. To be specific, in a case that the UE_A 10 receives the pending NSSAI IE included in the registration accept message during the registration procedure for the current PLMN or SNPN, the UE_A 10 may replace the pending NSSAI stored in the UE_A 10 and associated with the current PLMN or SNPN with the new pending NSSAI.

To be more specific, in a case that the UE_A 10 manages the pending NSSAI as the second pending NSSAI, the UE_A 10 may operate as follows. The UE_A 10 may replace the stored pending NSSAI of the current PLMN or SNPN with the S-NSSAI(s) of one or multiple current PLMNs or SNPNs included in the received pending NSSAI IE and store the S-NSSAI(s). Further, during roaming, the UE_A 10 may replace one or multiple mapped S-NSSAI(s) of the stored pending NSSAI of the current PLMN or SNPN with one or multiple current mapped S-NSSAI(s) included in the received pending NSSAI IE and store the latter mapped S-NSSAI(s).

Alternatively, in a case that the S-NSSAI included in the pending NSSAI is the S-NSSAI of the HPLMN or HSNPN, in a case that the UE_A 10 receives pending NSSAI included in the registration accept message during the registration procedure for the current PLMN or SNPN, the UE_A 10 may replace the pending NSSAI stored in the UE_A 10 with the new pending NSSAI.

Furthermore, in a case that the UE_A 10 stores the mapped S-NSSAI of the pending NSSAI, the UE_A 10 may delete the mapped S-NSSAI of the pending NSSAI, store the mapped S-NSSAI of the new pending NSSAI, or perform both processes.

Note that the mapped S-NSSAI of the pending NSSAI may be stored based on the mapped S-NSSAI of the old allowed NSSAI.

Furthermore, the UE may stop the back-off timer in a case that the back-off timer that restricts use of certain S-NSSAI is running, a case that the S-NSSAI is included in new pending NSSAI, or a case that the S-NSSAI is mapped S-NSSAI of the pending NSSAI.

In a case that the UE deregisters with the current PLMN or SNPN using explicit signaling or enters the 5GMM-DEREGISTERED state for the current PLMN or SNPN, and further in a case that the UE is not registered with the current PLMN or SNPN over another access type, the UE deletes the pending NSSAI associated with the current PLMN or SNPN and/or one or multiple mapped S-NSSAI(s) of the pending NSSAI. In the case that the EPLM or ESNPN of the current PLMN or SNPN is present, the UE may further delete the pending NSSAI of the equivalent PLMN(s) of the current PLMN or the equivalent SNPN(s) of the current SNPN, and/or the mapped S-NSSAI(s) of the pending NSSAI.

In a case that the UE successfully registers with the new PLMN or SNPN, or fails to register with the new PLMN or SNPN and enters the 5GMM-DEREGISTERED state, and further in the case that the UE is not registered with the current PLMN or SNPN over another access type, the UE may delete the pending NSSAI associated with the current PLMN or SNPN and/or one or multiple mapped S-NSSAI(s) of the pending NSSAI. In the case that the EPLM or ESNPN of the current PLMN or SNPN is present, the UE may further delete the pending NSSAI of the equivalent PLMN(s) of the current PLMN or the equivalent SNPN(s) of the current SNPN, and/or the mapped S-NSSAI(s) of the pending NSSAI.

Alternatively, in a case that the UE fails to register with a new PLMN or SNPN other than the EPLMN or ESNPN and enters the 5GMM-DEREGISTERED state, and further in the case that the UE is not registered with the current PLMN or SNPN over another access type, the UE may delete the pending NSSAI associated with the current PLMN or SNPN and/or one or multiple mapped S-NSSAI(s) of the pending NSSAI. In the case that the EPLMN or ESNPN of the current PLMN or SNPN is present, the UE may further delete the pending NSSAI of the equivalent PLMN(s) of the current PLMN or the equivalent SNPN(s) of the current SNPN, and/or the mapped S-NSSAI(s) of the pending NSSAI. In other words, the following may be applied.

In a case that the UE fails to register with a new PLMN other than the equivalent PLMN(s) and enters the 5GMM-DEREGISTERED state, and further in a case that the UE is not registered with the current PLMN over another access type, the UE may delete the pending NSSAI associated with the current PLMN and/or one or multiple mapped S-NSSAI(s) of the pending NSSAI. In a case that the EPLMN of the current PLMN is present, the UE may further delete the pending NSSAI(s) of the equivalent PLMN(s) of the current PLMN and/or the mapped S-NSSAI(s) of the pending NSSAI(s).

In a case that the UE fails to register with a new SNPN other than the equivalent SNPN and enters the 5GMM-DEREGISTERED state, and further in a case that the UE is not registered with the current SNPN over another access type, the UE may delete the pending NSSAI associated with the current SNPN and/or one or multiple mapped S-NSSAI(s) of the pending NSSAI. In a case that the ESNPN of the current SNPN is present, the UE may further delete the pending NSSAI(s) of the equivalent SNPN(s) of the current SNPN and/or the mapped S-NSSAI(s) of the pending NSSAI(s).

Alternatively, in a case that the UE successfully registers with a new PLMN or SNPN other than the EPLMN or ESNPN, and further in the case that the UE is not registered with the current PLMN or SNPN over another access type, the UE may delete the pending NSSAI associated with the current PLMN or SNPN and/or one or multiple mapped S-NSSAI(s) of the pending NSSAI. In the case that the EPLM or ESNPN of the current PLMN or SNPN is present, the UE may further delete the pending NSSAI of the equivalent PLMN(s) of the current PLMN or the equivalent SNPN(s) of the current SNPN, and/or the mapped S-NSSAI(s) of the pending NSSAI. In other words, the following may be applied.

In a case that the UE successfully registers with a new PLMN other than the equivalent PLMN(s), and further in the case that the UE is not registered with the current PLMN over another access type, the UE may delete the pending NSSAI associated with the current PLMN and/or one or multiple mapped S-NSSAI(s) of the pending NSSAI. In the case that the EPLMN of the current PLMN is present, the UE may further delete the pending NSSAI of the equivalent PLMN(s) of the current PLMN and/or the mapped S-NSSAI(s) of the pending NSSAI.

In a case that the UE successfully registers with a new SNPN other than the equivalent SNPN, and further in the case that the UE is not registered with the current SNPN over another access type, the UE may delete the pending NSSAI associated with the current SNPN and/or one or multiple mapped S-NSSAI(s) of the pending NSSAI. In the case that the ESNPN of the current SNPN is present, the UE may further delete the pending NSSAI of the equivalent SNPN(s) of the current SNPN and/or the mapped S-NSSAI(s) of the pending NSSAI.

Alternatively, in a case that an attach procedure or tracking area update procedure in an S1 mode is successfully initiated, and the UE operates in a single registration mode, and further in the case that the UE is not registered with the current PLMN or SNPN over another access type, the UE may delete the pending NSSAI associated with the current PLMN or SNPN and/or one or multiple mapped S-NSSAI(s) of the pending NSSAI. In the case that the EPLM or ESNPN of the current PLMN or SNPN is present, the UE may further delete the pending NSSAI of the equivalent PLMN(s) of the current PLMN or the equivalent SNPN(s) of the current SNPN, and/or the mapped S-NSSAI(s) of the pending NSSAI.

Noted that in a case that the pending NSSAI stored in the UE and associated with a certain SNPN or PLMN is deleted, the UE may also delete together one or multiple mapped S-NSSAI(s) of the deleted pending NSSAI.

Furthermore, the UE_A 10 may perform the following operations for each rejected S-NSSAI IE or each Partial extended rejected NSSAI list IE or each Extended rejected NSSAI IE based on reception of one or more rejected S-NSSAI IEs and/or Partial extended rejected NSSAI list IEs and/or Extended rejected NSSAI IEs indicating fourth rejected NSSAI and/or reception of a control message.

The UE_A 10 may include the S-NSSAI of the current PLMN or SNPN indicated in the fourth rejected NSSAI in the appropriate fourth rejected NSSAI and store the fourth rejected NSSAI. Specifically, the UE may add the S-NSSAI indicated by the received fourth rejected NSSAI to the fourth rejected NSSAI based on a rejection cause value associated with the S-NSSAI.

Alternatively, the UE_A 10 may add the mapped S-NSSAI with respect to the received fourth rejected NSSAI to one or more pieces of mapped S-NSSAI with respect to the fourth rejected NSSAI.

Furthermore, in a case that the S-NSSAI included in the fourth rejected NSSAI stored in the UE is included in the allowed NSSAI stored in the UE and associated with the PLMN or SNPN and access type requested by the UE in the present procedure and with other access types, the S-NSSAI may be deleted from the allowed NSSAI.

The UE_A 10 may use the value of the back-off timer to start the counting of the back-off timer associated with the S-NSSAI or to start the back-off timer and manage the back-off timer based on the reception of the fourth rejected NSSAI and/or reception of the control message.

Here, in a case that the UE_A 10 receives the fourth rejected NSSAI together with the value of the back-off timer, and further in a case that the value is neither 0 nor information indicating deactivation, the value of the back-off timer used as the back-off timer may be the received value of the back-off timer. On the other hand, in other cases, that is, in a case that no value of the back-off timer has been received, the value of the back-off timer used for the back-off timer may be an implementation-specific value.

While the back-off timer is running, the UE_A 10 may be in a state in which the UE is prohibited from transmitting an MM message and transmission of an SM message using one or more pieces of S-NSSAI associated with the back-off timer, or one or more pieces of mapped S-NSSAI associated with the back-off timer (S-NSSAI of the HPLMN or HSNPN), or one or more pieces of S-NSSAI associated with one or more pieces of mapped S-NSSAI associated with the back-off timer, or one or more pieces of S-NSSAI included in NSSAI associated with the back-off timer, or mapped S-NSSAI of the one or more pieces of S-NSSAI included in the NSSAI associated with the back-off timer.

While the back-off timer is running, the UE_A 10 may be in a state of being prohibited from including one or more pieces of S-NSSAI associated with the back-off timer in the requested NSSAI along with the associated mapped S-NSSAI.

Here, in response to the stop or expiry of the back-off timer, the limitation may be released and the UE_A 10 may transition to a state in which the UE_A 10 can transmit the MM message and the SM message using the S-NSSAI with which the back-off timer is associated, and/or the S-NSSAI related to the mapped S-NSSAI with which the back-off timer is associated, and/or the mapped S-NSSAI with which the back-off timer is associated. In other words, in response to the stop or expiry of the back-off timer, the UE_A 10 may transition to the state in which the UE_A 10 can transmit the MM message using, for requested NSSAI, the S-NSSAI with which the back-off timer is associated, and/or the S-NSSAI related to the mapped S-NSSAI with which the back-off timer is associated, and/or the mapped S-NSSAI with which the back-off timer is associated.

Furthermore, in response to the stop or expiry of the back-off timer, the UE_A 10 may transition to a state in which the UE_A 10 can transmit the MM message using the NSSAI associated with the back-off timer. In other words, in response to the stop or expiry of the back-off timer, the UE_A 10 may transition to the state in which the UE_A 10 can transmit the MM message using, for the requested NSSAI, the NSSAI associated with the back-off timer.

Furthermore, in response to the stop or expiry of the back-off timer, the UE_A 10 may delete, from the fourth rejected NSSAI, the S-NSSAI with which the back-off timer is associated, the mapped S-NSSAI with which the back-off timer is associated, or the S-NSSAI associated with the mapped S-NSSAI with which the back-off timer is associated.

Specifically, in response to the stop or expiry of the back-off timer, the UE_A 10 may delete, from the fourth rejected NSSAI associated with the current PLMN or SNPN, the S-NSSAI with which the back-off timer is associated, the mapped S-NSSAI with which the back-off timer is associated, or the S-NSSAI associated with the mapped S-NSSAI with which the back-off timer is associated.

Furthermore, in response to the stop or expiry of the back-off timer, the UE_A 10 may delete, from the stored fourth rejected NSSAI, the S-NSSAI with which the back-off timer is associated, or the S-NSSAI associated with the mapped S-NSSAI with which the back-off timer is associated.

In a case that the UE_A 10 deletes the S-NSSAI from the fourth rejected NSSAI while the back-off timer for which the S-NSSAI is valid is running, the UE_A 10 may stop its back-off timer.

Similarly, in a case that, at the UE_A 10, the back-off timer is valid or the fourth rejected NSSAI is deleted while the back-off timer is running, the UE_A 10 may stop the back-off timer.

Alternatively, the UE_A 10 with the running back-off timer may stop and/or delete the back-off timer regardless of update or deletion of the fourth rejected NSSAI. Specific examples of the conditions for deleting the fourth rejected NSSAI and/or stopping the back-off timer are described below.

In a case that the UE_A 10 transitions to the deregistered state with the current PLMN or SNPN on one access type and is also in the deregistered state for the other access type, the UE_A 10 may delete the fourth rejected NSSAI and/or the S-NSSAI included in the fourth rejected NSSAI that is information regardless of the access type.

In a case that the UE_A 10 transitions to the deregistered state with the current PLMN or SNPN on one access type and is also in the deregistered state for the other access type, the UE_A 10 may stop and delete the back-off timer for which the fourth rejected NSSAI and/or the S-NSSAI included in the fourth rejected NSSAI regardless of the access type are valid.

In a case that the UE_A 10 receives the Allowed NSSAI including the S-NSSAI included in the fourth rejected NSSAI with which the current PLMN or SNPN is associated from the current PLMN or SNPN, the UE_A 10 may delete the S-NSSAI from the fourth rejected NSSAI regardless of the access type.

In a case that the UE_A 10 receives the Allowed NSSAI including the S-NSSAI included in the fourth rejected NSSAI with which the current PLMN or SNPN is associated from the current PLMN or SNPN, the UE_A 10 may stop or delete the back-off timer for which the S-NSSAI included in the fourth rejected NSSAI is valid regardless of the access type.

In a case that the UE_A 10 receives the Rejected NSSAI including the S-NSSAI included in the fourth rejected NSSAI with which the current PLMN or SNPN is associated from the current PLMN or SNPN, the UE_A 10 may delete the S-NSSAI from the fourth rejected NSSAI regardless of the access type.

In a case that the UE_A 10 receives the Rejected NSSAI including the S-NSSAI included in the fourth rejected NSSAI with which the current PLMN or SNPN is associated from the current PLMN or SNPN, the UE_A 10 may stop or delete the back-off timer for which the S-NSSAI included in the fourth rejected NSSAI is valid regardless of the access type.

In a case that the UE_A 10 receives the pending NSSAI for NSSAA or the mapped S-NSSAI(s) of the pending NSSAI including the S-NSSAI included in the fourth rejected NSSAI with which the current PLMN or SNPN is associated from the current PLMN or SNPN, the UE_A 10 may delete the S-NSSAI from the fourth rejected NSSAI regardless of the access type.

In a case that the UE_A 10 receives the pending NSSAI for NSSAA or the mapped S-NSSAI(s) of the pending NSSAI including the S-NSSAI included in the fourth rejected NSSAI with which the current PLMN or SNPN is associated from the current PLMN or SNPN, the UE_A 10 may stop or delete the back-off timer for which the S-NSSAI included in the fourth rejected NSSAI is valid.

In a case that the UE_A 10 transitions to the deregistered state with the current PLMN or SNPN on one access type, the UE_A 10 may delete the fourth rejected NSSAI associated with the access type and/or the S-NSSAI included in the fourth rejected NSSAI.

In a case that the UE_A 10 transitions to the deregistered state with the current PLMN or SNPN on one access type, the UE_A 10 may stop or delete the back-off timer for which the fourth rejected NSSAI associated with the access type and/or the S-NSSAI included in the fourth rejected NSSAI are valid.

In a case that the UE_A 10 receives the Allowed NSSAI including the S-NSSAI included in the fourth rejected NSSAI from the current PLMN or SNPN over the access indicated by an access type, the UE_A 10 may delete the S-NSSAI from the fourth rejected NSSAI. At this time, the fourth rejected NSSAI and/or the S-NSSAI included in the fourth rejected NSSAI may be associated with the current PLMN or SNPN and its access type.

In a case that the UE_A 10 receives the Allowed NSSAI including the S-NSSAI included in the fourth rejected NSSAI from the current PLMN or SNPN over the access indicated by an access type, the UE_A 10 may stop or delete the back-off timer for which the S-NSSAI included in the fourth rejected NSSAI is valid. At this time, the fourth rejected NSSAI and/or the S-NSSAI included in the fourth rejected NSSAI may be associated with the current PLMN or SNPN and its access type.

In a case that the UE_A 10 has detected a change in the AMF, the UE_A 10 may delete the fourth rejected NSSAI. Additionally or alternatively, the UE_A 10 may stop or delete the back-off timer for which the fourth rejected NSSAI is valid.

In a case that the UE_A 10 fails to register with the current PLMN or SNPN and enters the 5GMM-DEREGISTERED state due to a cause value other than the cause value indicating that no network slice is available, and further in a case that the UE is not registered with the current PLMN or SNPN on the other access type, the UE may delete the first or the third rejected NSSAI associated with the current PLMN or SNPN and/or one or multiple mapped S-NSSAI(s) of the first or the third rejected NSSAI.

Here, the cause value may be a 5GMM cause in the 5GS. Furthermore, in this case, "the cause value indicating that no network slice is available" may be a 5GMM cause value #62 "No network slices available", which is 62nd 5GMM cause in the 5GS.

In the case that the UE deregisters with the current PLMN or SNPN using explicit signaling or enters the 5GMM-DEREGISTERED state for the current PLMN or SNPN, and further in a case that the UE is not registered with the current PLMN or SNPN over another access type, the UE deletes the first or the third rejected NSSAI associated with the current PLMN or SNPN and/or one or multiple mapped S-NSSAI(s) of the first or the third rejected NSSAI. In the case that the EPLM or ESNPN of the current PLMN or SNPN is present, the UE may further delete the first or the third rejected NSSAI of the equivalent PLMN(s) of the current PLMN or the equivalent SNPN(s) of the current SNPN and/or the mapped S-NSSAI(s) of the first or the third rejected NSSAI.

In the case that the UE successfully registers with the new PLMN or SNPN, or fails to register with the new PLMN or SNPN and enters the 5GMM-DEREGISTERED state, and further in the case that the UE is not registered with the current PLMN or SNPN over another access type, the UE may delete the first or the third rejected NSSAI associated with the current PLMN or SNPN and/or one or multiple mapped S-NSSAI(s) of the first or the third rejected NSSAI. In the case that the EPLM or ESNPN of the current PLMN or SNPN is present, the UE may further delete the first or the third rejected NSSAI of the equivalent PLMN(s) of the current PLMN or the equivalent SNPN(s) of the current SNPN and/or the mapped S-NSSAI(s) of the first or the third rejected NSSAI.

In a case that the UE deregisters on a first access type, in a case that the UE successfully registers on the first access type in a new registration area, or in a case that the UE fails in the registration procedure on the first access type and enters the 5GMM-DEREGISTERED state, the UE may delete the second rejected NSSAI stored in the UE and associated with the first access type and/or the current PLMN or SNPN. Further, during roaming, the UE may also delete one or multiple mapped S-NSSAI(s) of the deleted second rejected NSSAI associated with the current PLMN or SNPN and the first access type.

In the case that the UE deregisters on the first access type, or in the case that the UE fails in the registration procedure on the first access type and enters the 5GMM-DEREGISTERED state, the UE may delete the fourth rejected NSSAI stored in the UE and associated with the first access type and/or the current PLMN or SNPN. Further, during roaming, the UE may also delete one or multiple mapped S-NSSAI(s) of the deleted fourth rejected NSSAI associated with the current PLMN or SNPN and the first access type.

Note that in a case that the first to fourth rejected NSSAI are deleted, the UE may also delete together one or multiple mapped S-NSSAI(s) of the deleted first to fourth rejected NSSAI.

As described above, the UE stores and manages information on each piece of NSSAI. Furthermore, the UE may start and stop the back-off timer valid for the PLMN or SNPN based on the storage and update of each piece of NSSAI.

In a case of receiving the first NSSAI, the UE_A 10 may store the received first NSSAI as "first NSSAI associated with the current PLMN or SNPN". Note that the "first NSSAI associated with the current PLMN or SNPN" may further be associated with the current access type, or may be managed as information independent of the access type.

In a case of receiving the first NSSAI, the UE_A 10 may replace the "first NSSAI stored in the UE_A 10" with the "first NSSAI received by the UE_A 10". Alternatively, in a case of receiving the first NSSAI, the UE_A 10 may include the "S-NSSAI included in the first NSSAI received by the UE_A 10" in the "first NSSAI stored in the UE_A 10" and store the S-NSSAI.

In a case of receiving the first NSSAI IE including the first NSSAI, the UE_A 10 may store the received first NSSAI in association with the condition information received together with the first NSSAI.

In other words, in a case that the UE_A 10 receives the first NSSAI and the condition information, the UE may store the first NSSAI in association with the condition information and/or the current PLMN or SNPN and/or the access type.

Furthermore, in a case of receiving the first NSSAI IE including the first NSSAI, the UE_A 10 may delete the mapped S-NSSAI of the S-NSSAI included in the "first NSSAI stored in the UE_A 10 and associated with the current PLMN or SNPN". Furthermore, in a case that the "first NSSAI IE received by the UE_A 10" includes one or multiple pieces of mapped S-NSSAI, the UE_A 10 may store the one or multiple pieces of mapped S-NSSAI.

In a case that the condition for the UE no longer matches the condition indicated in the condition information, the UE_A 10 may delete the S-NSSAI and/or the mapped S-NSSAI associated with the condition information from the first NSSAI and/or the set of pieces of mapped S-NSSAI for the first NSSAI.

Specifically, in a case that the condition information includes time-related information, the UE may delete the associated S-NSSAI and/or mapped S-NSSAI in a case that the period indicated by the time-related information elapses.

Note that, in a case that the time-related information is a timer value, the period indicated by the time-related information means a period from the start of a timer using the timer value until the timer expires. In other words, the case where the period indicated by the time-related information elapses may mean the case where the timer expires.

In a case that the condition information includes location-related information, the UE may delete the associated S-NSSAI and/or mapped S-NSSAI in a case that the UE moves from a location indicated by the location-related information.

Specifically, in a case that the condition information includes a TAI list, the UE may delete the associated S-NSSAI and/or mapped S-NSSAI in a case that the UE exits the TA indicated by the TAI list. Alternatively, in a case that the condition information includes area information, the UE may delete the associated S-NSSAI and/or mapped S-NSSAI in a case that the UE exits the range indicated by the area information.

Based on removing the S-NSSAI from the first NSSAI and/or removing the mapped S-NSSAI from the set of mapped S-NSSAI for the first NSSAI, the UE may initiate the registration procedure.

In a case that the condition for the UE no longer matches the condition indicated in the condition information, the UE_A 10 may keep the S-NSSAI associated with the UE and/or mapped S-NSSAI in storage. In this case, after expiration of the timer using the particular timer value, the UE may delete the associated S-NSSAI and/or mapped S-NSSAI. Unlike the condition information, the timer using the particular timer value may be a timer indicating the period during which the S-NSSAI is controlled in association with the condition information. The timer value may be transmitted from the NW to the UE, or may be a value pre-configured for the UE.

### 4. Embodiments of Present Invention

Embodiments in the present invention may be a combination of one or more procedures described in Section 3. For example, in the present embodiment, the UE may transition to the registered state based on the completion of the initial registration procedure described in section 3.1, and further perform the registration procedure for the mobility and periodic registration update described in section 3.1 one or more times.

In the case of transitioning to or maintaining the registered state based on completion of the registration procedure described in section 3.1, each procedure described in sections 3.2 to 3.3 may be performed. Note that, during each procedure, the UE_A 10 may perform the NSSAI update procedure described in section 3.3 based on the information received from the NW and/or the state of the UE, and may update and/or delete the stored information about NSSAI.

Alternatively, in the embodiment of the present invention, the SM procedure in which the transmission and/or reception of the SM message is configured may be performed based on the completion of the registration procedure described in section 3.1.

Specific examples of the embodiments of the present invention will be described below.

### 4.1. First Embodiment

A first embodiment (hereinafter, the present embodiment) will be described below.

Hereinafter, in the first embodiment, an example of behavior of each apparatus in a case that the UE receives, from the NW, the S-NSSAI and/or the condition information indicating the first condition associated with one or multiple pieces of S-NSSAI will be described.

The UE initiates a registration procedure by transmitting the Registration request message. Note that the registration procedure may be the registration procedure described in section 3.1.

In response to the registration request message, the UE receives a registration accept message including the tenth identification information including one or multiple pieces of eleventh identification information and/or one or multiple pieces of twelfth identification information.

Specifically, the eleventh identification information may be an S-NSSAI IE, and may be configured with the S-NSSAI and/or mapped S-NSSAI of the current PLMN or SNPN. Furthermore, the twelfth identification information may be transmitted and/or received in association with one or multiple pieces of eleventh identification information, and is information indicating the condition under which the UE can use the S-NSSAI indicated in the associated eleventh identification information.

The twelfth identification information may include a TAI list and a timer value for which the eleventh identification information can be used. In addition, the twelfth identification information may include location-related information and/or time-related information that can be included in the twelfth identification information.

The UE may store the eleventh identification information in association with the twelfth identification information and/or the current PLMN or SNPN, the current access type.

Furthermore, in a case that the timer value is included in the twelfth identification information and is not 0, a timer using the timer value may be run. In a case that the timer value is 0, the eleventh identification information need not be stored. In a case that the timer value is 0 and/or is empty, the UE may recognize that no time-related information from the network is configured.

The UE may include or replace, for storage, the eleventh identification information in or with the first NSSAI stored in the UE.

Furthermore, the condition information indicated in the twelfth identification information may also be stored in the storage unit of the UE. In a case of receiving the eleventh identification information and replacing the first NSSAI with new first NSSAI for storage, the UE may delete the already stored condition information, and store the condition information included in the received twelfth identification information. In other words, in a case of receiving new condition information, the UE may replace old condition information with the new condition information for storage.

In a case of receiving new condition information while the timer is running using the timer value included in the old condition information, the UE may stop and delete the running timer. Furthermore, the UE may start counting the timer using the newly received timer value.

While the timer is running, and further in a case that the UE is in the TA indicated by the TAI list included in the twelfth identification information, the UE may transmit the registration request message including the S-NSSAI and/or mapped S-NSSAI indicated in the eleventh identification information, and/or the PDU session establishment request message together with the S-NSSAI and/or the mapped S-NSSAI.

As described above, the UE may be controlled in such a manner that the UE can use the associated S-NSSAI in a specific state (condition) designated by the network.

### 4.2. Second Embodiment

A second embodiment (hereinafter, the present embodiment) will be described below.

In the second embodiment, an example of behavior of each apparatus will be described, the behavior being taken in a case that the UE receives, from the NW, one or multiple pieces of condition information indicating S-NSSAI and/or a second condition associated with one or multiple pieces of S-NSSAI.

The UE initiates a registration procedure by transmitting the Registration request message. Note that the registration procedure may be the registration procedure described in section 3.1.

The UE receives, as a response to the registration request message, a registration accept message including tenth identification information including one or multiple pieces of eleventh identification information and/or one or multiple pieces of thirteenth identification information. The tenth identification information may further include the fourteenth identification information, and the fourteenth identification information may be transmitted and/or received in an IE different from that of the tenth identification information.

Specifically, the eleventh identification information may be an S-NSSAI IE, and may be configured with the S-NSSAI and/or mapped S-NSSAI of the current PLMN or SNPN. Furthermore, the thirteenth identification information may be transmitted and/or received in association with one or multiple pieces of eleventh identification information, and is information indicating a condition of the UE under which the UE is not allowed to use the S-NSSAI indicated in the associated eleventh identification information.

The thirteenth identification information may include a TAI list and a timer value for which the eleventh identification information is not allowed to be used. In addition, the thirteenth identification information may include location-related information and/or time-related information included in the thirteenth identification information.

The UE may store the eleventh identification information in association with the thirteenth identification information and/or the current PLMN or SNPN, the current access type.

Furthermore, in a case that the timer value is included in the thirteenth identification information and is not 0, the timer may be run using the received timer value. In a case that the timer value is 0, the eleventh identification information need not be stored.

Alternatively, in a case that the timer value is 0 and/or the IE indicating the timer value is empty, the UE may recognize that the limitation of the time-related condition is not configured by the network for the eleventh identification information. In other words, in this case, the UE may determine that no time-related information has been received.

The UE may include or replace, for storage, the eleventh identification information in or with the first NSSAI stored in the UE.

Furthermore, the storage unit of the UE may also store the condition information indicated in the thirteenth identification information. In a case of receiving the eleventh identification information, and replacing the first NSSAI with new first NSSAI for storage, the UE may delete the already stored condition information, and store the condition information included in the received thirteenth identification information. In other words, in a case of receiving new condition information, the UE may replace old condition information with the new condition information for storage.

In a case of receiving new condition information while the timer is running using the timer value included in the old condition information, the UE may stop and delete the running timer. Furthermore, the UE may start counting the timer using the newly received timer value.

While the timer is running, and further in a case that the UE is in the TA indicated by the TAI list included in the thirteenth identification information, the UE may be prohibited and/or prohibited from transmitting the registration request message including the S-NSSAI and/or mapped S-NSSAI indicated in the eleventh identification information and/or transmitting the PDU session establishment request message together with the S-NSSAI and/or the mapped S-NSSAI, and/or the above-described transmission of the registration request message and/or the PDU session establishment request message by the UE is rejected.

In other words, in a state where the UE is in the second condition indicated by the thirteenth identification information, the UE may control not to transmit the registration request message including the S-NSSAI and/or mapped S-NSSAI associated with the thirteenth identification information included in the first NSSAI, and/or to transmit the PDU session establishment request message together with the S-NSSAI and/or the mapped S-NSSAI.

As described above, the UE may be controlled in such a manner that the UE can use the associated S-NSSAI in a specific state (condition) designated by the network.

### 5. Modifications

A program running on an apparatus according to the present invention may serve as a program that controls a Central Processing Unit (CPU) and the like to cause a computer to function to realize the functions of the aforementioned embodiments according to the present invention. Programs or information handled by the programs are temporarily stored in a volatile memory such as a Random Access Memory (RAM), a non-volatile memory such as a flash memory, a Hard Disk Drive (HDD), or another storage apparatus system.

Note that a program for realizing the functions of the embodiments according to the present invention may be recorded on a computer-readable recording medium. The functions may be realized by causing a computer system to read the program recorded on the recording medium for execution. It is assumed that the "computer system" refers to a computer system built into the apparatuses, and the computer system includes an operating system and hardware components such as a peripheral device. In addition, the "computer-readable recording medium" may be a semiconductor recording medium, an optical recording medium, a magnetic recording medium, a medium dynamically retaining the program for a short time, or any other computer-readable recording medium.

In addition, each functional block or various features of the apparatuses used in the aforementioned embodiments may be implemented or performed on an electric circuit, for example, an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a processor of a known type, a controller, a micro-controller, or a state machine instead. The aforementioned electric circuit may include a digital circuit or may include an analog circuit. In addition, in a case that a circuit integration technology that replaces the present integrated circuits appears with advances in semiconductor technologies, one or multiple aspects of the present invention can also use a new integrated circuit based on the technology.

Note that the invention of the present application is not limited to the above-described embodiments. Although apparatuses have been described as an example in the embodiments, the invention of the present application is not limited to these apparatuses, and is applicable to a terminal apparatus or a communication apparatus of a fixed-type or a non-stationary electronic apparatus installed indoors or outdoors, for example, an AV apparatus, a kitchen apparatus, a cleaning or washing machine, an air-conditioning apparatus, office equipment, a vending machine, and other household apparatuses.

Although, the embodiments of the present invention have been described in detail above referring to the drawings, the specific configuration is not limited to the embodiments and includes, for example, design changes within the scope that do not depart from the gist of the present invention. Furthermore, in the present invention, various modifications are possible within the scope of claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Cross-Reference of Related Application

The present application claims priority of JP 2022-072382, filed on April 26, 2022, and all the contents thereof are included herein by the reference.

### Reference Signs List

1 Mobile communication system
10 UE_A
30 PGW-U
32 PGW-C
35 SGW
40 MME
45 eNB
50 HSS
60 PCRF
80 Access network A (E-UTRAN)
90 Core network_A
120 Access network_B (5G AN)
122 gNB
130 UPF
132 SMF
140 AMF
150 UDM
160 PCF
190 Core network_B

## Claims

1. A User Equipment (UE) comprising:
a transmission and/or reception unit, a storage unit, and a controller, wherein
the transmission and/or reception unit
transmits capability information of the UE indicating that the UE supports a condition information associated with Single Network Slice Selection Assistance Information (S-NSSAI), and
receives a Network Slice Selection Assistance Information (NSSAI) IE including first S-NSSAI and first condition information, and
the controller
stores the first S-NSSAI in association with the first condition information, a current Public land mobile network (PLMN) or Stand-alone non-public network (SNPN), and an access type and in addition to or instead of first NSSAI in the storage unit.

2. The UE according to claim 1, wherein
the first condition information
is information indicating a condition for the UE under which the UE is capable of using the first S-NSSAI, and
includes location-related condition information and time-related condition information that allow the UE to request registration using the first S-NSSAI to be associated with the first condition information,
the location-related condition information is TAI list information, and
a time-related condition information is information indicating a period or information indicating a time or a timer value.

3. The UE according to claim 1, wherein
the first condition information
is information indicating a condition for the UE under which a request for the first S-NSSAI by the UE is rejected, and
includes location-related condition information and time-related condition information for conditions under which the UE is not allowed to request registration using the first S-NSSAI to be associated with the first condition information, and
the location-related condition information is TAI list information, and
a time-related condition information is information indicating a period and information indicating a time or a timer value.
